(19) **Europäisches Patentamt European Patent Office Office européen des brevets**

(11) **EP 4 648 344 A1**

(12) **EUROPEAN PATENT APPLICATION**

(43) Date of publication:
**12.11.2025 Bulletin 2025/46**

(21) Application number: **25175463.6**

(22) Date of filing: **09.05.2025**

(51) International Patent Classification (IPC):
**H04L 5/00** *(2006.01)* **H04W 72/00** *(2023.01)*

(52) Cooperative Patent Classification (CPC):
**H04L 5/0057; H04L 5/0053**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **09.05.2024 US 202463644808 P**

(71) Applicant: **Comcast Cable Communications, LLC Philadelphia, PA 19103 (US)**

(72) Inventors:
• **CIRIK, Ali Cagatay Philadelphia, 19103 (US)**
• **DINAN, Esmael Hejazi Philadelphia, 19103 (US)**

(74) Representative: **V.O. P.O. Box 87930 2508 DH Den Haag (NL)**

(54) **DYNAMIC BEAM REPORT INDICATION**

(57) A wireless device may communicate with a base station. CSI reporting may be initiated by a wireless device. Uplink resource allocation for the CSI reporting may be provided by a base station via downlink control information (DCI). Information in the DCI may indicate whether the wireless device is to transmit a CSI report.

**FIG. 20**

**Description**

CROSS-REFERENCE TO RELATED APPLICATIONS

This application claims the benefit of U.S. Provisional Application No. 63/644,808 filed on May 9, 2024. The above-referenced application is hereby incorporated by reference in its entirety.

BACKGROUND

A wireless device communicates with a base station. The wireless device receives configuration parameters for communicating with the base station via a cell.

SUMMARY

The following summary presents a simplified summary of certain features. The summary is not an extensive overview and is not intended to identify key or critical elements.
A wireless device may communicate with a base station. The wireless device may send a report, such as a beam report and/or a channel state information (CSI) report, to the base station. Such a report may be triggered by the base station periodically or aperiodically, and/or the wireless device may initiate reporting on its own, for example, based on channel quality measurements. To transmit a report, a control message, such as a physical uplink control channel (PUCCH) message may be transmitted by the wireless device. Downlink control information (DCI) may be transmitted by the base station, for example, to indicate an uplink resource for the control message. Additional information (e.g., a field, one or more bits, etc.) may be included in the DCI. Based on the additional information being included in the DCI and/or based on a value of the additional information, the wireless device may determine whether or not to transmit a report, which may provide advantages such as increased likelihood of successful report transmission/reception, increased efficiency of resource usage, and/or improved coordination between the wireless device and the base station.
These and other features and advantages are described in greater detail below.

BRIEF DESCRIPTION OF THE DRAWINGS

Examples of several of the various embodiments of the present disclosure are described herein with reference to the drawings.

FIG. 1A and FIG. 1B show example communication networks.

FIG. 2A shows an example user plane.

FIG. 2B shows an example control plane configuration.

FIG. 3 shows example of protocol layers.

FIG. 4A shows an example downlink data flow for a user plane configuration.

FIG. 4B shows an example format of a Medium Access Control (MAC) subheader in a MAC Protocol Data Unit (PDU).

FIG. 5A shows an example mapping for downlink channels.

FIG. 5B shows an example mapping for uplink channels.

FIG. 6 shows example radio resource control (RRC) states and RRC state transitions.

FIG. 7 shows an example configuration of a frame.

FIG. 8 shows an example resource configuration of one or more carriers.

FIG. 9 shows an example configuration of bandwidth parts (BWPs).

FIG. 10A shows example carrier aggregation configurations based on component carriers.

FIG. 10B shows example group of cells.

FIG. 11A shows an example mapping of one or more synchronization signal/physical broadcast channel (SS/PBCH) blocks.

FIG. 11B shows an example mapping of one or more channel state information reference signals (CSI-RSs).

FIG. 12A shows examples of downlink beam management procedures.

FIG. 12B shows examples of uplink beam management procedures.

FIG. 13A shows an example four-step random access procedure.

FIG. 13B shows an example two-step random access procedure.

FIG. 13C shows an example two-step random access procedure.

FIG. 14A shows an example of control resource set (CORESET) configurations.

FIG. 14B shows an example of a control channel element to resource element group (CCE-to-REG) mapping.

FIG. 15A shows an example of communications between a wireless device and a base station.

FIG. 15B shows example elements of a computing device that may be used to implement any of the various devices described herein

FIG. 16A, FIG. 16B, FIG. 16C, and FIG. 16D show examples of uplink and downlink signal transmission.

FIG 17A shows an example method for transmission configuration indicator (TCI) state indication.

FIG 17B shows an example method for transmission configuration indicator (TCI) state indication.

FIG. 18A shows an example method for channel state information (CSI) reporting triggered by a network.

FIG. 18B shows an example method for CSI reporting triggered by a network.

FIG. 18C shows an example method for CSI reporting triggered by a network.

FIG. 19A shows an example method for CSI reporting triggered by a wireless device.

FIG. 19B shows an example method for CSI reporting triggered by a wireless device.

FIG. 19C shows an example method for CSI reporting triggered by a wireless device.

FIG. 20 shows an example of wireless communications.

FIG. 21A shows an example method for wireless communication configuration.

FIG. 21B shows an example method for wireless communication configuration.

FIG. 22 shows an example method for wireless communication configuration.

DETAILED DESCRIPTION

The accompanying drawings and descriptions provide examples. It is to be understood that the examples shown in the drawings and/or described are non-exclusive, and that features shown and described may be practiced in other examples. Examples are provided for operation of wireless communication systems.

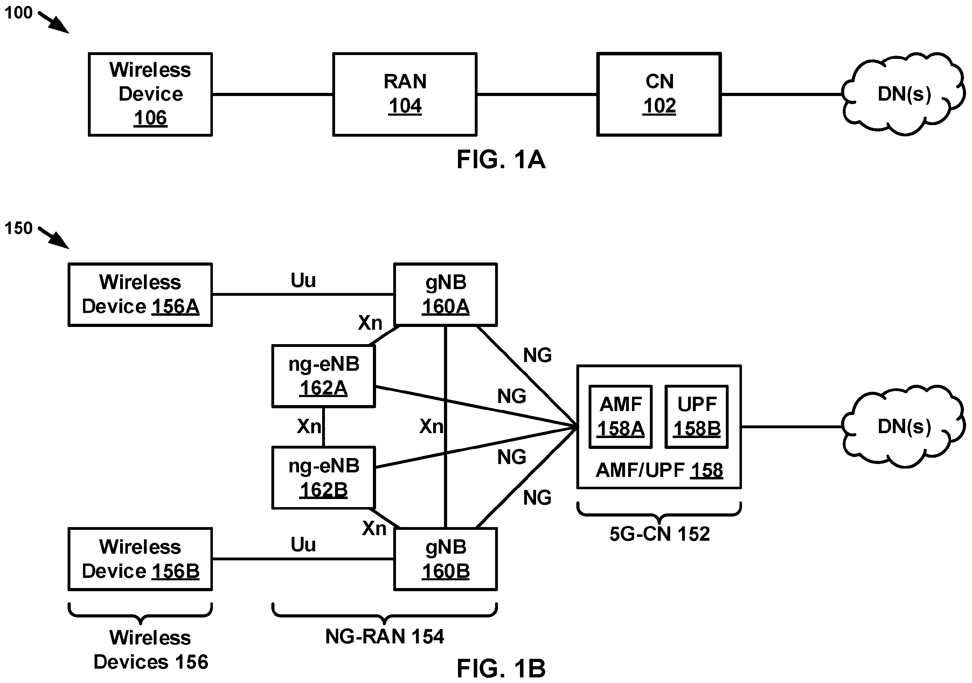

FIG. 1A shows an example communication network 100. The communication network 100 may comprise a mobile communication network). The communication network 100 may comprise, for example, a public land mobile network (PLMN) operated/managed/run by a network operator. The communication network 100 may comprise one or more of a core network (CN) 102, a radio access network (RAN) 104, and/or a wireless device 106. The communication network 100 may comprise, and/or a device within the communication network 100 may communicate with (e.g., via CN 102), one or more data networks (DN(s)) 108. The wireless device 106 may communicate with one or more DNs 108, such as public DNs (e.g., the Internet), private DNs, and/or intra-operator DNs. The wireless device 106 may communicate with the one or more DNs 108 via the RAN 104 and/or via the CN 102. The CN 102 may provide/configure the wireless device 106 with one or more interfaces to the one or more DNs 108. As part of the interface functionality, the CN 102 may set up end-to-end connections between the wireless device 106 and the one or more DNs 108, authenticate the wireless device 106, provide/configure charging functionality, etc.

The wireless device 106 may communicate with the RAN 104 via radio communications over an air interface. The RAN 104 may communicate with the CN 102 via various communications (e.g., wired communications and/or wireless communications). The wireless device 106 may establish a connection with the CN 102 via the RAN 104. The RAN 104 may provide/configure scheduling, radio resource management, and/or retransmission protocols, for example, as part of the radio communications. The communication direction from the RAN 104 to the wireless device 106 over/via the air interface may be referred to as the downlink and/or downlink communication direction. The communication direction from the wireless device 106 to the RAN 104 over/via the air interface may be referred to as the uplink and/or uplink communication direction. Downlink transmissions may be separated and/or distinguished from uplink transmissions, for example, based on at least one of: frequency division duplexing (FDD), time-division duplexing (TDD), any other duplexing schemes, and/or one or more combinations thereof.

As used throughout, the term "wireless device" may comprise one or more of: a mobile device, a fixed (e.g., non-mobile) device for which wireless communication is configured or usable, a computing device, a node, a device capable of wirelessly communicating, or any other device capable of sending and/or receiving signals. As non-limiting examples, a wireless device may comprise, for example: a telephone, a cellular phone, a Wi-Fi phone, a smartphone, a tablet, a computer, a laptop, a sensor, a meter, a wearable device, an Internet of Things (IoT) device, a hotspot, a cellular repeater, a vehicle roadside unit (RSU), a relay node, an automobile, a wireless user device (e.g., user equipment (UE), a user terminal (UT), etc.), an access terminal (AT), a mobile station, a handset, a wireless transmit and receive unit (WTRU), a wireless communication device, and/or any combination thereof.

The RAN 104 may comprise one or more base stations (not shown). As used throughout, the term "base station" may comprise one or more of: a base station, a node, a Node B (NB), an evolved NodeB (eNB), a gNB, an ng-eNB, a relay node (e.g., an integrated access and backhaul (IAB) node), a donor node (e.g., a donor eNB, a donor gNB, etc.), an access point (e.g., a Wi-Fi access point), a transmission and reception point (TRP), a computing device, a device capable of wirelessly communicating, or any other device capable of sending and/or receiving signals. A base station may comprise one or more of each element listed above. For example, a base station may comprise one or more TRPs. As other non-limiting examples, a base station may comprise for example, one or more of: a Node B (e.g., associated with Universal Mobile Telecommunications System (UMTS) and/or third-generation (3G) standards), an Evolved Node B (eNB) (e.g., associated with Evolved-Universal Terrestrial Radio Access (E-UTRA) and/or fourth-generation (4G) standards), a remote radio head (RRH), a baseband processing unit coupled to one or more remote radio heads (RRHs), a repeater node or relay node used to extend the coverage area of a donor node, a Next Generation Evolved Node B (ng-eNB), a Generation Node B (gNB) (e.g., associated with NR and/or fifth-generation (5G) standards), an access point (AP) (e.g., associated with, for example, Wi-Fi or any other suitable wireless communication standard), any other generation base station, and/or any combination thereof. A base station may comprise one or more devices, such as at least one base station central device (e.g., a gNB Central Unit (gNB-CU)) and at least one base station distributed device (e.g., a gNB Distributed Unit (gNB-DU)).

A base station (e.g., in the RAN 104) may comprise one or more sets of antennas for communicating with the wireless device 106 wirelessly (e.g., via an over the air interface). One or more base stations may comprise sets (e.g., three sets or any other quantity of sets) of antennas to respectively control multiple cells or sectors (e.g., three cells, three sectors, any other quantity of cells, or any other quantity of sectors). The size of a cell may be determined by a range at which a receiver (e.g., a base station receiver) may successfully receive transmissions from a transmitter (e.g., a wireless device transmitter) operating in the cell. One or more cells of base stations (e.g., by alone or in combination with other cells) may provide/configure a radio coverage to the wireless device 106 over a wide geographic area to support wireless device mobility. A base station comprising three sectors (e.g., or n-sector, where n refers to any quantity n) may be referred to as a three-sector site (e.g., or an n-sector site) or a three-sector base station (e.g., an n-sector base station).

One or more base stations (e.g., in the RAN 104) may be implemented as a sectored site with more or less than three sectors. One or more base stations of the RAN 104 may be implemented as an access point, as a baseband processing device/unit coupled to several RRHs, and/or as a repeater or relay node used to extend the coverage area of a node (e.g., a donor node). A baseband processing device/unit coupled to RRHs may be part of a centralized or cloud RAN architecture, for example, where the baseband processing device/unit may be centralized in a pool of baseband processing devices/units or virtualized. A repeater node may amplify and send (e.g., transmit, retransmit, rebroadcast, etc.) a radio signal received from a donor node. A relay node may perform the substantially the same/similar functions as a repeater node. The relay node may decode the radio signal received from the donor node, for example, to remove noise before amplifying and sending the radio signal.

The RAN 104 may be deployed as a homogenous network of base stations (e.g., macrocell base stations) that have similar antenna patterns and/or similar high-level transmit powers. The RAN 104 may be deployed as a heterogeneous network of base stations (e.g., different base stations that have different antenna patterns). In heterogeneous networks, small cell base stations may be used to provide/configure small coverage areas, for example, coverage areas that overlap with comparatively larger coverage areas provided/configured by other base stations (e.g., macrocell base stations). The small coverage areas may be provided/configured in areas with high data traffic (or so-called "hotspots") or in areas with a weak macrocell coverage. Examples of small cell base stations may comprise, in order of decreasing coverage area, microcell base stations, picocell base stations, and femtocell base stations or home base stations.

Examples described herein may be used in a variety of types of communications. For example, communications may be in accordance with the Third-Generation Partnership Project (3GPP) (e.g., one or more network elements similar to those of the communication network 100), communications in accordance with Institute of Electrical and Electronics Engineers (IEEE), communications in accordance with International Telecommunication Union (ITU), communications in accordance with International Organization for Standardization (ISO), etc. The 3GPP has produced specifications for multiple generations of mobile networks: a 3G network known as UMTS, a 4G network known as Long-Term Evolution (LTE) and LTE Advanced (LTE-A), and a 5G network known as 5G System (5GS) and NR system. 3GPP may produce specifications for additional generations of communication networks (e.g., 6G and/or any other generation of communication network). Examples may be described with reference to one or more elements (e.g., the RAN) of a 3GPP 5G network, referred to as a next-generation RAN (NG-RAN), or any other communication network, such as a 3GPP network and/or a non-3GPP network. Examples described herein may be applicable to other communication networks, such as 3G and/or 4G networks, and communication networks that may not yet be finalized/specified (e.g., a 3GPP 6G network), satellite communication networks, and/or any other communication network. NG-RAN implements and updates 5G radio access technology referred to as NR and may be provisioned to implement 4G radio access technology and/or other radio access technologies, such as other 3GPP and/or non-3GPP radio access technologies.

FIG. 1B shows an example communication network 150. The communication network may comprise a mobile communication network. The communication network 150 may comprise, for example, a PLMN operated/managed/run by a network operator. The communication network 150 may comprise one or more of: a CN 152 (e.g., a 5G core network (5G-CN)), a RAN 154 (e.g., an NG-RAN), and/or wireless devices 156A and 156B (collectively wireless device(s) 156). The communication network 150 may comprise, and/or a device within the communication network 150 may communicate with (e.g., via CN 152), one or more data networks (DN(s)) 170. These components may be implemented and operate in substantially the same or similar manner as corresponding components described with respect to FIG. 1A.

The CN 152 (e.g., 5G-CN) may provide/configure the wireless device(s) 156 with one or more interfaces to one or more DNs 170, such as public DNs (e.g., the Internet), private DNs, and/or intra-operator DNs. As part of the interface functionality, the CN 152 (e.g., 5G-CN) may set up end-to-end connections between the wireless device(s) 156 and the one or more DNs, authenticate the wireless device(s) 156, and/or provide/configure charging functionality. The CN 152 (e.g., the 5G-CN) may be a service-based architecture, which may differ from other CNs (e.g., such as a 3GPP 4G CN). The architecture of nodes of the CN 152 (e.g., 5G-CN) may be defined as network functions that offer services via interfaces to other network functions. The network functions of the CN 152 (e.g., 5G CN) may be implemented in several ways, for example, as network elements on dedicated or shared hardware, as software instances running on dedicated or shared hardware, and/or as virtualized functions instantiated on a platform (e.g., a cloud-based platform).

The CN 152 (e.g., 5G-CN) may comprise an Access and Mobility Management Function (AMF) device 158A and/or a User Plane Function (UPF) device 158B, which may be separate components or one component AMF/UPF device 158. The UPF device 158B may serve as a gateway between a RAN 154 (e.g., NG-RAN) and the one or more DNs 170. The UPF device 158B may perform functions, such as: packet routing and forwarding, packet inspection and user plane policy rule enforcement, traffic usage reporting, uplink classification to support routing of traffic flows to the one or more DNs 170, quality of service (QoS) handling for the user plane (e.g., packet filtering, gating, uplink/downlink rate enforcement, and uplink traffic verification), downlink packet buffering, and/or downlink data notification triggering. The UPF device 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The wireless device(s) 156 may be configured to receive services via a PDU session, which may be a logical connection between a wireless device and a DN.

The AMF device 158A may perform functions, such as: Non-Access Stratum (NAS) signaling termination, NAS signaling security, Access Stratum (AS) security control, inter-CN node signaling for mobility between access networks (e.g., 3GPP access networks and/or non-3GPP networks), idle mode wireless device reachability (e.g., idle mode user equipment (UE) reachability for control and execution of paging retransmission), registration area management, intra-system and inter-system mobility support, access authentication, access authorization including checking of roaming rights, mobility management control (e.g., subscription and policies), network slicing support, and/or session management function (SMF) selection. NAS may refer to the functionality operating between a CN and a wireless device, and AS may refer to the functionality operating between a wireless device and a RAN.

The CN 152 (e.g., 5G-CN) may comprise one or more additional network functions that may not be shown in FIG. 1B. The CN 152 (e.g., 5G-CN) may comprise one or more devices implementing at least one of: a Session Management Function (SMF), an NR Repository Function (NRF), a Policy Control Function (PCF), a Network Exposure Function (NEF), a Unified Data Management (UDM), an Application Function (AF), an Authentication Server Function (AUSF), and/or any other function.

The RAN 154 (e.g., NG-RAN) may communicate with the wireless device(s) 156 via radio communications (e.g., an over the air interface). The wireless device(s) 156 may communicate with the CN 152 via the RAN 154. The RAN 154 (e.g., NG-RAN) may comprise one or more first-type base stations (e.g., gNBs comprising a gNB 160A and a gNB 160B (collectively gNBs 160)) and/or one or more second-type base stations (e.g., ng eNBs comprising an ng-eNB 162A and an ng-eNB 162B (collectively ng eNBs 162)). The RAN 154 may comprise one or more of any quantity of types of base station. The gNBs 160 and ng eNBs 162 may be referred to as base stations. The base stations (e.g., the gNBs 160 and ng eNBs 162) may comprise one or more sets of antennas for communicating with the wireless device(s) 156 wirelessly (e.g., an over an air interface). One or more base stations (e.g., the gNBs 160 and/or the ng eNBs 162) may comprise multiple sets of antennas to respectively control multiple cells (or sectors). The cells of the base stations (e.g., the gNBs 160 and the ng-eNBs 162) may provide a radio coverage to the wireless device(s) 156 over a wide geographic area to support wireless device mobility.

The base stations (e.g., the gNBs 160 and/or the ng-eNBs 162) may be connected to the CN 152 (e.g., 5G CN) via a first interface (e.g., an NG interface) and to other base stations via a second interface (e.g., an Xn interface). The NG and Xn interfaces may be established using direct physical connections and/or indirect connections over an underlying transport network, such as an internet protocol (IP) transport network. The base stations (e.g., the gNBs 160 and/or the ng-eNBs 162) may communicate with the wireless device(s) 156 via a third interface (e.g., a Uu interface). A base station (e.g., the gNB 160A) may communicate with the wireless device 156A via a Uu interface. The NG, Xn, and Uu interfaces may be associated with a protocol stack. The protocol stacks associated with the interfaces may be used by the network elements shown in FIG. 1B to exchange data and signaling messages. The protocol stacks may comprise two planes: a user plane and a control plane. Any other quantity of planes may be used (e.g., in a protocol stack). The user plane may handle data of interest to a user. The control plane may handle signaling messages of interest to the network elements.

One or more base stations (e.g., the gNBs 160 and/or the ng-eNBs 162) may communicate with one or more AMF/UPF devices, such as the AMF/UPF 158, via one or more interfaces (e.g., NG interfaces). A base station (e.g., the gNB 160A) may be in communication with, and/or connected to, the UPF 158B of the AMF/UPF 158 via an NG-User plane (NG-U) interface. The NG-U interface may provide/perform delivery (e.g., non-guaranteed delivery) of user plane PDUs between a base station (e.g., the gNB 160A) and a UPF device (e.g., the UPF 158B). The base station (e.g., the gNB 160A) may be in communication with, and/or connected to, an AMF device (e.g., the AMF 158A) via an NG-Control plane (NG-C) interface. The NG-C interface may provide/perform, for example, NG interface management, wireless device context management (e.g., UE context management), wireless device mobility management (e.g., UE mobility management), transport of NAS messages, paging, PDU session management, configuration transfer, and/or warning message transmission.

A wireless device may access the base station, via an interface (e.g., Uu interface), for the user plane configuration and the control plane configuration. The base stations (e.g., gNBs 160) may provide user plane and control plane protocol terminations towards the wireless device(s) 156 via the Uu interface. A base station (e.g., the gNB 160A) may provide user plane and control plane protocol terminations toward the wireless device 156A over a Uu interface associated with a first protocol stack. A base station (e.g., the ng-eNBs 162) may provide Evolved UMTS Terrestrial Radio Access (E UTRA) user plane and control plane protocol terminations towards the wireless device(s) 156 via a Uu interface (e.g., where E UTRA may refer to the 3GPP 4G radio-access technology). A base station (e.g., the ng-eNB 162B) may provide E UTRA user plane and control plane protocol terminations towards the wireless device 156B via a Uu interface associated with a second protocol stack. The user plane and control plane protocol terminations may comprise, for example, NR user plane and control plane protocol terminations, 4G user plane and control plane protocol terminations, etc.

The CN 152 (e.g., 5G-CN) may be configured to handle one or more radio accesses (e.g., NR, 4G, and/or any other radio accesses). It may also be possible for an NR network/device (or any first network/device) to connect to a 4G core network/device (or any second network/device) in a non-standalone mode (e.g., non-standalone operation). In a non-standalone mode/operation, a 4G core network may be used to provide (or at least support) control-plane functionality (e.g., initial access, mobility, and/or paging). Although only one AMF/UPF 158 is shown in FIG. 1B, one or more base stations (e.g., one or more gNBs and/or one or more ng-eNBs) may be connected to multiple AMF/UPF nodes, for example, to provide redundancy and/or to load share across the multiple AMF/UPF nodes.

An interface (e.g., Uu, Xn, and/or NG interfaces) between network elements (e.g., the network elements shown in FIG. 1B) may be associated with a protocol stack that the network elements may use to exchange data and signaling messages. A protocol stack may comprise two planes: a user plane and a control plane. Any other quantity of planes may be used (e.g., in a protocol stack). The user plane may handle data associated with a user (e.g., data of interest to a user). The control plane may handle data associated with one or more network elements (e.g., signaling messages of interest to the network elements).

The communication network 100 in FIG. 1A and/or the communication network 150 in FIG. 1B may comprise any quantity/number and/or type of devices, such as, for example, computing devices, wireless devices, mobile devices, handsets, tablets, laptops, internet of things (IoT) devices, hotspots, cellular repeaters, computing devices, and/or, more generally, user equipment (e.g., UE). Although one or more of the above types of devices may be referenced herein (e.g., UE, wireless device, computing device, etc.), it should be understood that any device herein may comprise any one or more of the above types of devices or similar devices. The communication network, and any other network referenced herein, may comprise an LTE network, a 5G network, a satellite network, and/or any other network for wireless communications (e.g., any 3GPP network and/or any non-3GPP network). Apparatuses, systems, and/or methods described herein may generally be described as implemented on one or more devices (e.g., wireless device, base station, eNB, gNB, computing device, etc.), in one or more networks, but it will be understood that one or more features and steps may be implemented on any device and/or in any network.

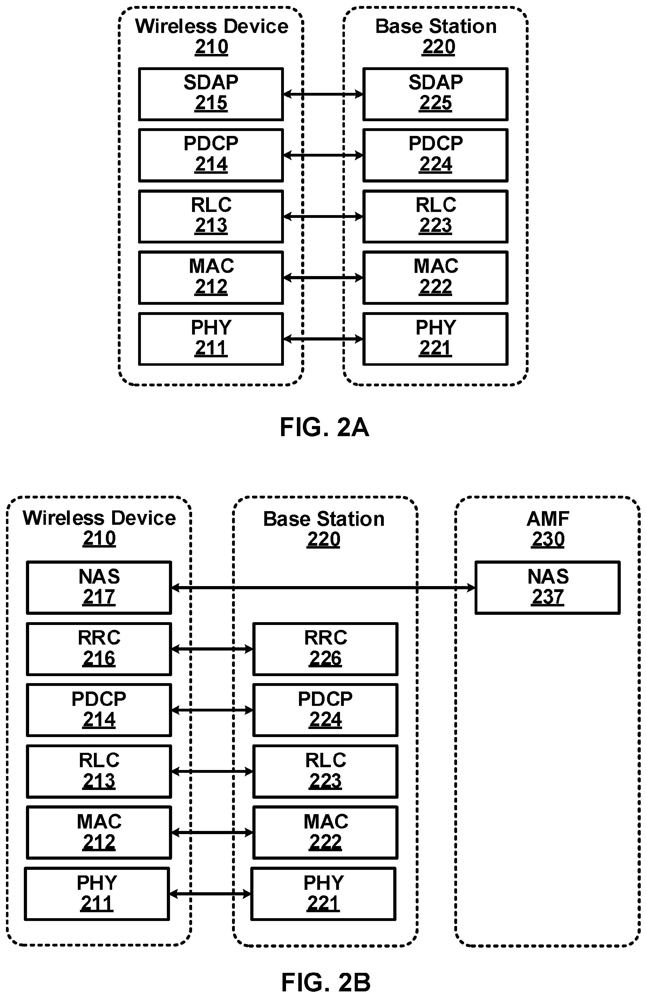

FIG. 2A shows an example user plane configuration. The user plane configuration may comprise, for example, an NR user plane protocol stack. FIG. 2B shows an example control plane configuration. The control plane configuration may comprise, for example, an NR control plane protocol stack. One or more of the user plane configuration and/or the control plane configuration may use a Uu interface that may be between a wireless device 210 and a base station 220. The protocol stacks shown in FIG. 2A and FIG. 2B may be substantially the same or similar to those used for the Uu interface between, for example, the wireless device 156A and the base station 160A shown in FIG. 1B.

A user plane configuration (e.g., an NR user plane protocol stack) may comprise multiple layers (e.g., five layers or any other quantity of layers) implemented in the wireless device 210 and the base station 220 (e.g., as shown in FIG. 2A). At the bottom of the protocol stack, physical layers (PHYs) 211 and 221 may provide transport services to the higher layers of the protocol stack and may correspond to layer 1 of the Open Systems Interconnection (OSI) model. The protocol layers above PHY 211 may comprise a medium access control layer (MAC) 212, a radio link control layer (RLC) 213, a packet data convergence protocol layer (PDCP) 214, and/or a service data application protocol layer (SDAP) 215. The protocol layers above PHY 221 may comprise a medium access control layer (MAC) 222, a radio link control layer (RLC) 223, a packet data convergence protocol layer (PDCP) 224, and/or a service data application protocol layer (SDAP) 225. One or more of the four protocol layers above PHY 211 may correspond to layer 2, or the data link layer, of the OSI model. One or more of the four protocol layers above PHY 221 may correspond to layer 2, or the data link layer, of the OSI model.

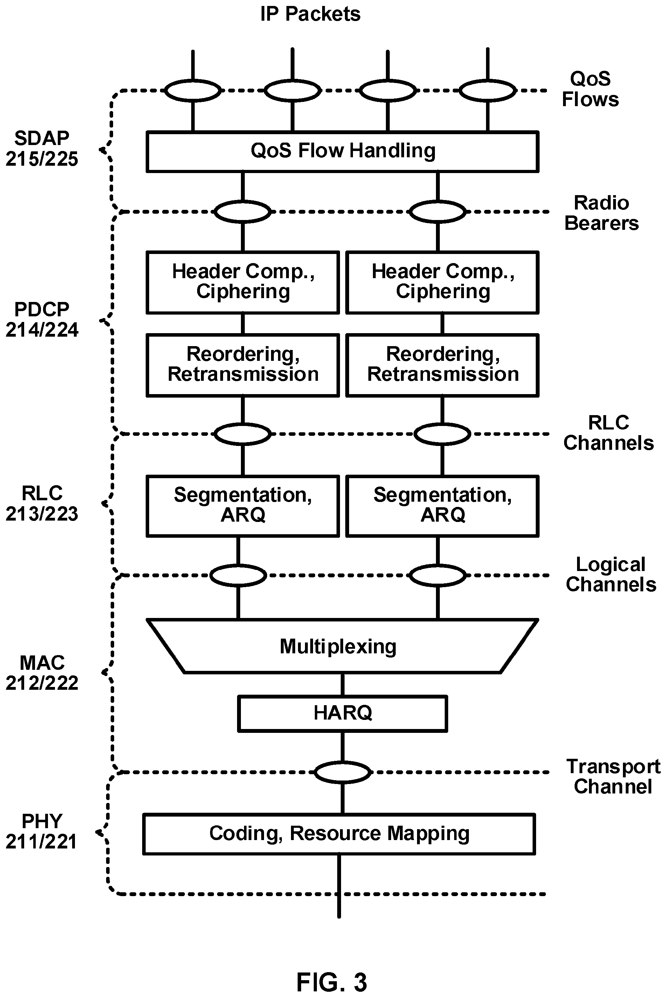

FIG. 3 shows an example of protocol layers. The protocol layers may comprise, for example, protocol layers of the NR user plane protocol stack. One or more services may be provided between protocol layers. SDAPs (e.g., SDAPS 215 and 225 shown in FIG. 2A and FIG. 3) may perform Quality of Service (QoS) flow handling. A wireless device (e.g., the wireless devices 106, 156A, 156B, and 210) may receive services through/via a PDU session, which may be a logical connection between the wireless device and a DN. The PDU session may have one or more QoS flows 310. A UPF (e.g., the UPF 158B) of a CN may map IP packets to the one or more QoS flows of the PDU session, for example, based on one or more QoS requirements (e.g., in terms of delay, data rate, error rate, and/or any other quality/service requirement). The SDAPs 215 and 225 may perform mapping/de-mapping between the one or more QoS flows 310 and one or more radio bearers 320 (e.g., data radio bearers). The mapping/demapping between the one or more QoS flows 310 and the radio bearers 320 may be determined by the SDAP 225 of the base station 220. The SDAP 215 of the wireless device 210 may be informed of the mapping between the QoS flows 310 and the radio bearers 320 via reflective mapping and/or control signaling received from the base station 220. For reflective mapping, the SDAP 225 of the base station 220 may mark the downlink packets with a QoS flow indicator (QFI), which may be monitored/detected/identified/indicated/observed by the SDAP 215 of the wireless device 210 to determine the mapping/de-mapping between the one or more QoS flows 310 and the radio bearers 320.

PDCPs (e.g., the PDCPs 214 and 224 shown in FIG. 2A and FIG. 3) may perform header compression/decompression, for example, to reduce the amount of data that may need to be transmitted (e.g., sent) over the air interface, ciphering/deciphering to prevent unauthorized decoding of data transmitted (e.g., sent) over the air interface, and/or integrity protection (e.g., to ensure control messages originate from intended sources). The PDCPs 214 and 224 may perform retransmissions of undelivered packets, in-sequence delivery and reordering of packets, and/or removal of packets received in duplicate due to, for example, a handover (e.g., an intra-gNB handover). The PDCPs 214 and 224 may perform packet duplication, for example, to improve the likelihood of the packet being received. A receiver may receive the packet in duplicate and may remove any duplicate packets. Packet duplication may be useful for certain services, such as services that require high reliability.

The PDCP layers (e.g., PDCPs 214 and 224) may perform mapping/de-mapping between a split radio bearer and RLC channels (e.g., RLC channels 330) (e.g., in a dual connectivity scenario/configuration). Dual connectivity may refer to a technique that allows a wireless device to communicate with multiple cells (e.g., two cells) or, more generally, multiple cell groups comprising: a master cell group (MCG) and a secondary cell group (SCG). A split bearer may be configured and/or used, for example, if a single radio bearer (e.g., such as one of the radio bearers provided/configured by the PDCPs 214 and 224 as a service to the SDAPs 215 and 225) is handled by cell groups in dual connectivity. The PDCPs 214 and 224 may map/de-map between the split radio bearer and RLC channels 330 belonging to the cell groups.

RLC layers (e.g., RLCs 213 and 223) may perform segmentation, retransmission via Automatic Repeat Request (ARQ), and/or removal of duplicate data units received from MAC layers (e.g., MACs 212 and 222, respectively). The RLC layers (e.g., RLCs 213 and 223) may support multiple transmission modes (e.g., three transmission modes: transparent mode (TM); unacknowledged mode (UM), and acknowledged mode (AM)). The RLC layers may perform one or more of the noted functions, for example, based on the transmission mode an RLC layer is operating. The RLC configuration may be per logical channel. The RLC configuration may not depend on numerologies and/or Transmission Time Interval (TTI) durations (or other durations). The RLC layers (e.g., RLCs 213 and 223) may provide/configure RLC channels as a service to the PDCP layers (e.g., PDCPs 214 and 224, respectively), such as shown in FIG. 3.

The MAC layers (e.g., MACs 212 and 222) may perform multiplexing/demultiplexing of logical channels and/or mapping between logical channels and transport channels. The multiplexing/demultiplexing may comprise multiplexing/demultiplexing of data units/data portions, belonging to the one or more logical channels, into/from Transport Blocks (TBs) delivered to/from the PHY layers (e.g., PHYs 211 and 221, respectively). The MAC layer of a base station (e.g., MAC 222) may be configured to perform scheduling, scheduling information reporting, and/or priority handling between wireless devices via dynamic scheduling. Scheduling may be performed by a base station (e.g., the base station 220 at the MAC 222) for downlink/or and uplink. The MAC layers (e.g., MACs 212 and 222) may be configured to perform error correction(s) via Hybrid Automatic Repeat Request (HARQ) (e.g., one HARQ entity per carrier in case of Carrier Aggregation (CA)), priority handling between logical channels of the wireless device 210 via logical channel prioritization and/or padding. The MAC layers (e.g., MACs 212 and 222) may support one or more numerologies and/or transmission timings. Mapping restrictions in a logical channel prioritization may control which numerology and/or transmission timing a logical channel may use. The MAC layers (e.g., the MACs 212 and 222) may provide/configure logical channels 340 as a service to the RLC layers (e.g., the RLCs 213 and 223).

The PHY layers (e.g., PHYs 211 and 221) may perform mapping of transport channels to physical channels and/or digital and analog signal processing functions, for example, for sending and/or receiving information (e.g., via an over the air interface). The digital and/or analog signal processing functions may comprise, for example, coding/decoding and/or modulation/demodulation. The PHY layers (e.g., PHYs 211 and 221) may perform multi-antenna mapping. The PHY layers (e.g., the PHYs 211 and 221) may provide/configure one or more transport channels (e.g., transport channels 350) as a service to the MAC layers (e.g., the MACs 212 and 222, respectively).

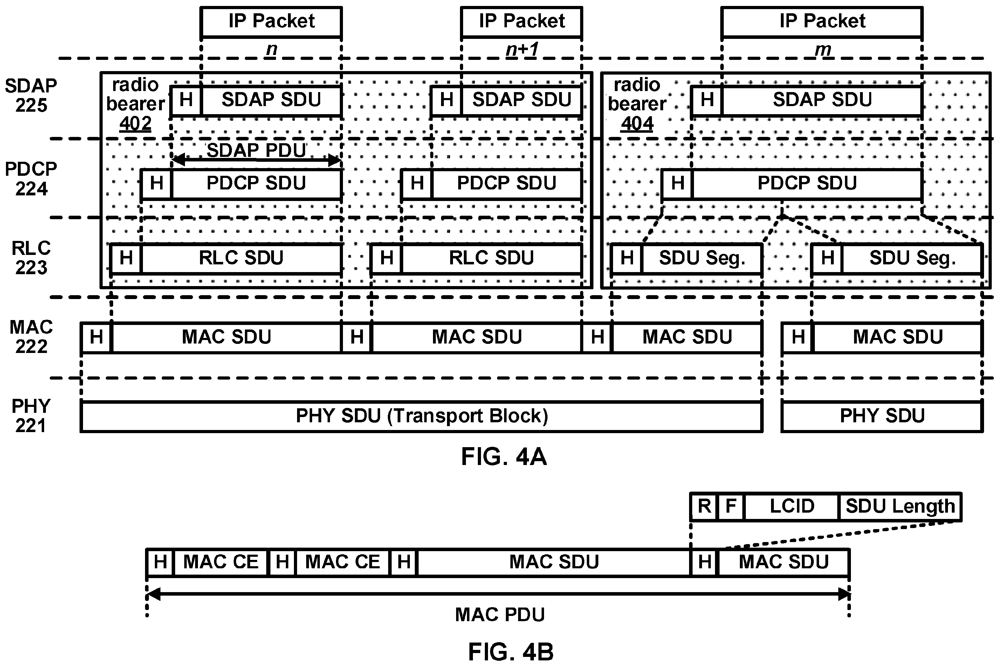

FIG. 4A shows an example downlink data flow for a user plane configuration. The user plane configuration may comprise, for example, the NR user plane protocol stack shown in FIG. 2A. One or more TBs may be generated, for example, based on a data flow via a user plane protocol stack. As shown in FIG. 4A, a downlink data flow of three IP packets (n, n+1, and m) via the NR user plane protocol stack may generate two TBs (e.g., at the base station 220). An uplink data flow via the NR user plane protocol stack may be similar to the downlink data flow shown in FIG. 4A. The three IP packets (n, n+1, and m) may be determined from the two TBs, for example, based on the uplink data flow via an NR user plane protocol stack. A first quantity of packets (e.g., three or any other quantity) may be determined from a second quantity of TBs (e.g., two or another quantity).

The downlink data flow may begin, for example, if the SDAP 225 receives the three IP packets (or other quantity of IP packets) from one or more QoS flows and maps the three packets (or other quantity of packets) to radio bearers (e.g., radio bearers 402 and 404). The SDAP 225 may map the IP packets n and n+1 to a first radio bearer 402 and map the IP packet m to a second radio bearer 404. An SDAP header (labeled with "H" preceding each SDAP SDU shown in FIG. 4A) may be added to an IP packet to generate an SDAP PDU, which may be referred to as a PDCP SDU. The data unit transferred from/to a higher protocol layer may be referred to as a service data unit (SDU) of the lower protocol layer, and the data unit transferred to/from a lower protocol layer may be referred to as a protocol data unit (PDU) of the higher protocol layer. As shown in FIG. 4A, the data unit from the SDAP 225 may be an SDU of lower protocol layer PDCP 224 (e.g., PDCP SDU) and may be a PDU of the SDAP 225 (e.g., SDAP PDU).

Each protocol layer (e.g., protocol layers shown in FIG. 4A) or at least some protocol layers may: perform its own function(s) (e.g., one or more functions of each protocol layer described with respect to FIG. 3), add a corresponding header, and/or forward a respective output to the next lower layer (e.g., its respective lower layer). The PDCP 224 may perform an IP-header compression and/or ciphering. The PDCP 224 may forward its output (e.g., a PDCP PDU, which is an RLC SDU) to the RLC 223. The RLC 223 may optionally perform segmentation (e.g., as shown for IP packet m in FIG. 4A). The RLC 223 may forward its outputs (e.g., two RLC PDUs, which are two MAC SDUs, generated by adding respective subheaders to two SDU segments (SDU Segs)) to the MAC 222. The MAC 222 may multiplex a quantity/number of RLC PDUs (MAC SDUs). The MAC 222 may attach a MAC subheader to an RLC PDU (MAC SDU) to form a TB.

The MAC subheaders may be distributed across the MAC PDU (e.g., in an NR configuration as shown in FIG. 4A). The MAC subheaders may be entirely located at the beginning of a MAC PDU (e.g., in an LTE configuration). The NR MAC PDU structure may reduce a processing time and/or associated latency, for example, if the MAC PDU subheaders are computed before assembling the full MAC PDU.

FIG. 4B shows an example format of a MAC subheader in a MAC PDU. A MAC PDU may comprise a MAC subheader (H) and a MAC SDU. Each of one or more MAC subheaders may comprise an SDU length field for indicating the length (e.g., in bytes) of the MAC SDU to which the MAC subheader corresponds; a logical channel identifier (LCID) field for identifying/indicating the logical channel from which the MAC SDU originated to aid in the demultiplexing process; a flag (F) for indicating the size of the SDU length field; and a reserved bit (R) field for future use.

One or more MAC control elements (CEs) may be added to, or inserted into, the MAC PDU by a MAC layer, such as MAC 223 or MAC 222. As shown in FIG. 4B, two MAC CEs may be inserted/added before two MAC PDUs. The MAC CEs may be inserted/added at the beginning of a MAC PDU for downlink transmissions (as shown in FIG. 4B). One or more MAC CEs may be inserted/added at the end of a MAC PDU for uplink transmissions. MAC CEs may be used for in band control signaling. Example MAC CEs may comprise scheduling-related MAC CEs, such as buffer status reports and power headroom reports; activation/deactivation MAC CEs (e.g., MAC CEs for activation/deactivation of PDCP duplication detection, channel state information (CSI) reporting, sounding reference signal (SRS) transmission, and prior configured components); discontinuous reception (DRX)-related MAC CEs; timing advance MAC CEs; and random access-related MAC CEs. A MAC CE may be preceded by a MAC subheader with a similar format as described for the MAC subheader for MAC SDUs and may be identified with a reserved value in the LCID field that indicates the type of control information included in the corresponding MAC CE.

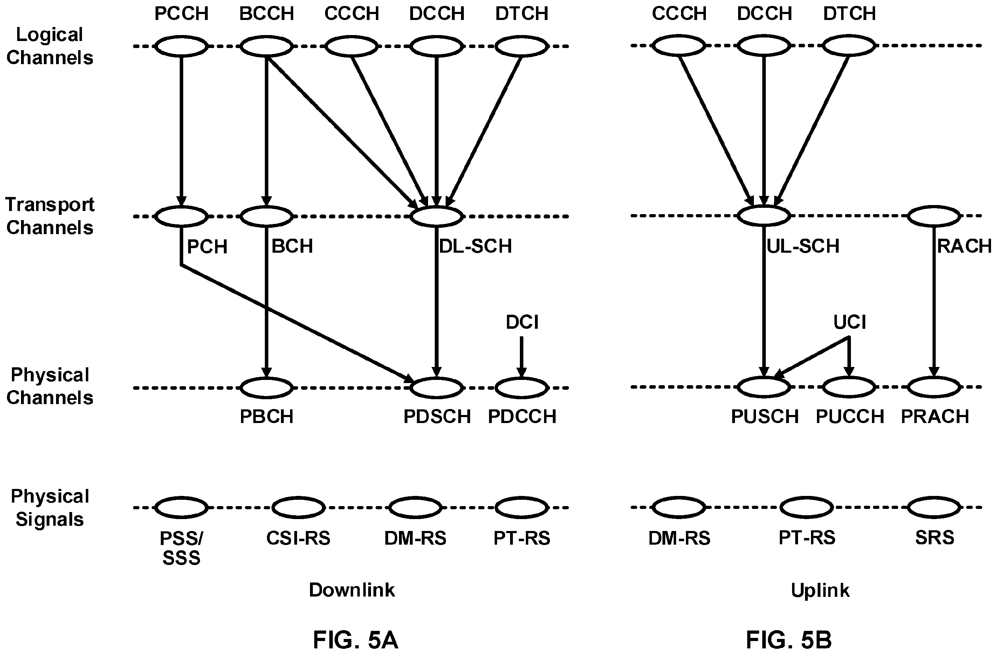

FIG. 5A shows an example mapping for downlink channels. The mapping for uplink channels may comprise mapping between channels (e.g., logical channels, transport channels, and physical channels) for downlink. FIG. 5B shows an example mapping for uplink channels. The mapping for uplink channels may comprise mapping between channels (e.g., logical channels, transport channels, and physical channels) for uplink. Information may be passed through/via channels between the RLC, the MAC, and the PHY layers of a protocol stack (e.g., the NR protocol stack). A logical channel may be used between the RLC and the MAC layers. The logical channel may be classified/indicated as a control channel that may carry control and/or configuration information (e.g., in the NR control plane), or as a traffic channel that may carry data (e.g., in the NR user plane). A logical channel may be classified/indicated as a dedicated logical channel that may be dedicated to a specific wireless device, and/or as a common logical channel that may be used by more than one wireless device (e.g., a group of wireless device).

A logical channel may be defined by the type of information it carries. The set of logical channels (e.g., in an NR configuration) may comprise one or more channels described below. A paging control channel (PCCH) may comprise/-carry one or more paging messages used to page a wireless device whose location is not known to the network on a cell level. A broadcast control channel (BCCH) may comprise/carry system information messages in the form of a master information block (MIB) and several system information blocks (SIBs). The system information messages may be used by wireless devices to obtain information about how a cell is configured and how to operate within the cell. A common control channel (CCCH) may comprise/carry control messages together with random access. A dedicated control channel (DCCH) may comprise/carry control messages to/from a specific wireless device to configure the wireless device with configuration information. A dedicated traffic channel (DTCH) may comprise/carry user data to/from a specific wireless device.

Transport channels may be used between the MAC and PHY layers. Transport channels may be defined by how the information they carry is sent/transmitted (e.g., via an over the air interface). The set of transport channels (e.g., that may be defined by an NR configuration or any other configuration) may comprise one or more of the following channels. A paging channel (PCH) may comprise/carry paging messages that originated from the PCCH. A broadcast channel (BCH) may comprise/carry the MIB from the BCCH. A downlink shared channel (DL-SCH) may comprise/carry downlink data and signaling messages, including the SIBs from the BCCH. An uplink shared channel (UL-SCH) may comprise/carry uplink data and signaling messages. A random access channel (RACH) may provide a wireless device with an access to the network without any prior scheduling.

The PHY layer may use physical channels to pass/transfer information between processing levels of the PHY layer. A physical channel may have an associated set of time-frequency resources for carrying the information of one or more transport channels. The PHY layer may generate control information to support the low-level operation of the PHY layer. The PHY layer may provide/transfer the control information to the lower levels of the PHY layer via physical control channels (e.g., referred to as L1/L2 control channels). The set of physical channels and physical control channels (e.g., that may be defined by an NR configuration or any other configuration) may comprise one or more of the following channels. A physical broadcast channel (PBCH) may comprise/carry the MIB from the BCH. A physical downlink shared channel (PDSCH) may comprise/carry downlink data and signaling messages from the DL-SCH, as well as paging messages from the PCH. A physical downlink control channel (PDCCH) may comprise/carry downlink control information (DCI), which may comprise downlink scheduling commands, uplink scheduling grants, and uplink power control commands. A physical uplink shared channel (PUSCH) may comprise/carry uplink data and signaling messages from the UL-SCH and in some instances uplink control information (UCI) as described below. A physical uplink control channel (PUCCH) may comprise/carry UCI, which may comprise HARQ acknowledgments, channel quality indicators (CQI), precoding matrix indicators (PMI), rank indicators (RI), and scheduling requests (SR). A physical random access channel (PRACH) may be used for random access.

The physical layer may generate physical signals to support the low-level operation of the physical layer, which may be similar to the physical control channels. As shown in FIG. 5A and FIG. 5B, the physical layer signals (e.g., that may be defined by an NR configuration or any other configuration) may comprise primary synchronization signals (PSS), secondary synchronization signals (SSS), channel state information reference signals (CSI-RS), demodulation reference signals (DM-RS), sounding reference signals (SRS), phase-tracking reference signals (PT-RS), and/or any other signals.

One or more of the channels (e.g., logical channels, transport channels, physical channels, etc.) may be used to carry out functions associated with the control plan protocol stack (e.g., NR control plane protocol stack). FIG. 2B shows an example control plane configuration (e.g., an NR control plane protocol stack). As shown in FIG. 2B, the control plane configuration (e.g., the NR control plane protocol stack) may use substantially the same/similar one or more protocol layers (e.g., PHY 211 and 221, MAC 212 and 222, RLC 213 and 223, and PDCP 214 and 224) as the example user plane configuration (e.g., the NR user plane protocol stack). Similar four protocol layers may comprise the PHYs 211 and 221, the MACs 212 and 222, the RLCs 213 and 223, and the PDCPs 214 and 224. The control plane configuration (e.g., the NR control plane stack) may have radio resource controls (RRCs) 216 and 226 and NAS protocols 217 and 237 at the top of the control plane configuration (e.g., the NR control plane protocol stack), for example, instead of having the SDAPs 215 and 225. The control plane configuration may comprise an AMF 230 comprising the NAS protocol 237.

The NAS protocols 217 and 237 may provide control plane functionality between the wireless device 210 and the AMF 230 (e.g., the AMF 158A or any other AMF) and/or, more generally, between the wireless device 210 and a CN (e.g., the CN 152 or any other CN). The NAS protocols 217 and 237 may provide control plane functionality between the wireless device 210 and the AMF 230 via signaling messages, referred to as NAS messages. There may be no direct path between the wireless device 210 and the AMF 230 via which the NAS messages may be transported. The NAS messages may be transported using the AS of the Uu and NG interfaces. The NAS protocols 217 and 237 may provide control plane functionality, such as authentication, security, a connection setup, mobility management, session management, and/or any other functionality.

The RRCs 216 and 226 may provide/configure control plane functionality between the wireless device 210 and the base station 220 and/or, more generally, between the wireless device 210 and the RAN (e.g., the base station 220). The RRC layers 216 and 226 may provide/configure control plane functionality between the wireless device 210 and the base station 220 via signaling messages, which may be referred to as RRC messages. The RRC messages may be sent/transmitted between the wireless device 210 and the RAN (e.g., the base station 220) using signaling radio bearers and the same/similar PDCP, RLC, MAC, and PHY protocol layers. The MAC layer may multiplex control-plane and user-plane data into the same TB. The RRC layers 216 and 226 may provide/configure control plane functionality, such as one or more of the following functionalities: broadcast of system information related to AS and NAS; paging initiated by the CN or the RAN; establishment, maintenance and release of an RRC connection between the wireless device 210 and the RAN (e.g., the base station 220); security functions including key management; establishment, configuration, maintenance and release of signaling radio bearers and data radio bearers; mobility functions; QoS management functions; wireless device measurement reporting (e.g., the wireless device measurement reporting) and control of the reporting; detection of and recovery from radio link failure (RLF); and/or NAS message transfer. As part of establishing an RRC connection, RRC layers 216 and 226 may establish an RRC context, which may involve configuring parameters for communication between the wireless device 210 and the RAN (e.g., the base station 220).

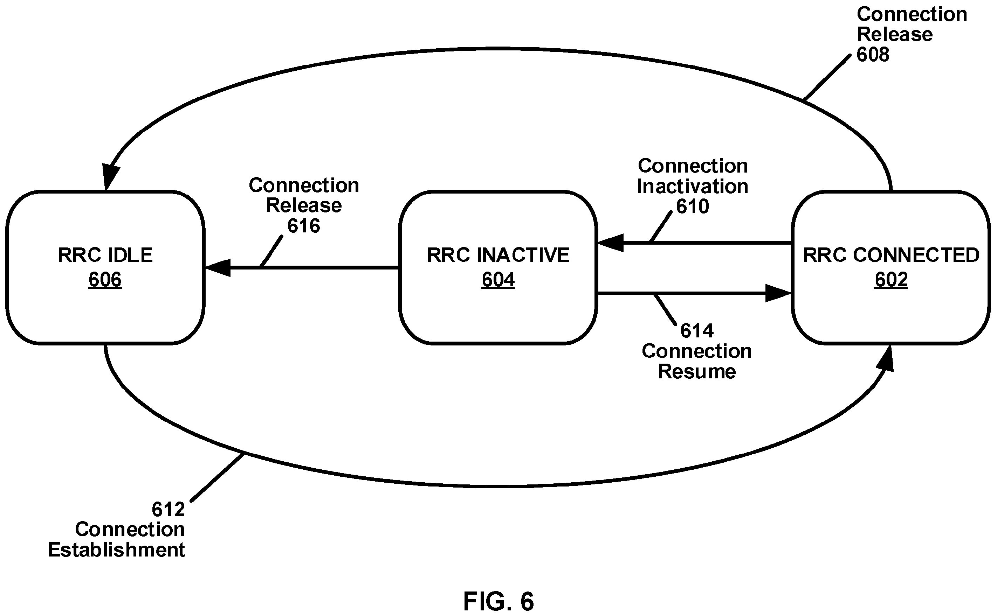

FIG. 6 shows example RRC states and RRC state transitions. An RRC state of a wireless device may be changed to another RRC state (e.g., RRC state transitions of a wireless device). The wireless device may be substantially the same or similar to the wireless device 106, 210, or any other wireless device. A wireless device may be in at least one of a plurality of states, such as three RRC states comprising RRC connected 602 (e.g., RRC_CONNECTED), RRC idle 606 (e.g., RRC_IDLE), and RRC inactive 604 (e.g., RRC_INACTIVE). The RRC inactive 604 may be RRC connected but inactive.

An RRC connection may be established for the wireless device. For example, this may be during an RRC connected state. During the RRC connected state (e.g., during the RRC connected 602), the wireless device may have an established RRC context and may have at least one RRC connection with a base station. The base station may be similar to one of the one or more base stations (e.g., one or more base stations of the RAN 104 shown in FIG. 1A, one of the gNBs 160 or ng-eNBs 162 shown in FIG. 1B, the base station 220 shown in FIG. 2A and FIG. 2B, or any other base stations). The base station with which the wireless device is connected (e.g., has established an RRC connection) may have the RRC context for the wireless device. The RRC context, which may be referred to as a wireless device context (e.g., the UE context), may comprise parameters for communication between the wireless device and the base station. These parameters may comprise, for example, one or more of: AS contexts; radio link configuration parameters; bearer configuration information (e.g., relating to a data radio bearer, a signaling radio bearer, a logical channel, a QoS flow, and/or a PDU session); security information; and/or layer configuration information (e.g., PHY, MAC, RLC, PDCP, and/or SDAP layer configuration information). During the RRC connected state (e.g., the RRC connected 602), mobility of the wireless device may be managed/controlled by an RAN (e.g., the RAN 104 or the NG RAN 154). The wireless device may measure received signal levels (e.g., reference signal levels, reference signal received power, reference signal received quality, received signal strength indicator, etc.) based on one or more signals sent from a serving cell and neighboring cells. The wireless device may report these measurements to a serving base station (e.g., the base station currently serving the wireless device). The serving base station of the wireless device may request a handover to a cell of one of the neighboring base stations, for example, based on the reported measurements. The RRC state may transition from the RRC connected state (e.g., RRC connected 602) to an RRC idle state (e.g., the RRC idle 606) via a connection release procedure 608. The RRC state may transition from the RRC connected state (e.g., RRC connected 602) to the RRC inactive state (e.g., RRC inactive 604) via a connection inactivation procedure 610.

An RRC context may not be established for the wireless device. For example, this may be during the RRC idle state. During the RRC idle state (e.g., the RRC idle 606), an RRC context may not be established for the wireless device. During the RRC idle state (e.g., the RRC idle 606), the wireless device may not have an RRC connection with the base station. During the RRC idle state (e.g., the RRC idle 606), the wireless device may be in a sleep state for the majority of the time (e.g., to conserve battery power). The wireless device may wake up periodically (e.g., once in every discontinuous reception (DRX) cycle) to monitor for paging messages (e.g., paging messages set from the RAN). Mobility of the wireless device may be managed by the wireless device via a procedure of a cell reselection. The RRC state may transition from the RRC idle state (e.g., the RRC idle 606) to the RRC connected state (e.g., the RRC connected 602) via a connection establishment procedure 612, which may involve a random access procedure.

A previously established RRC context may be maintained for the wireless device. For example, this may be during the RRC inactive state. During the RRC inactive state (e.g., the RRC inactive 604), the RRC context previously established may be maintained in the wireless device and the base station. The maintenance of the RRC context may enable/allow a fast transition to the RRC connected state (e.g., the RRC connected 602) with reduced signaling overhead as compared to the transition from the RRC idle state (e.g., the RRC idle 606) to the RRC connected state (e.g., the RRC connected 602). During the RRC inactive state (e.g., the RRC inactive 604), the wireless device may be in a sleep state and mobility of the wireless device may be managed/controlled by the wireless device via a cell reselection. The RRC state may transition from the RRC inactive state (e.g., the RRC inactive 604) to the RRC connected state (e.g., the RRC connected 602) via a connection resume procedure 614. The RRC state may transition from the RRC inactive state (e.g., the RRC inactive 604) to the RRC idle state (e.g., the RRC idle 606) via a connection release procedure 616 that may be the same as or similar to connection release procedure 608.

An RRC state may be associated with a mobility management mechanism. During the RRC idle state (e.g., RRC idle 606) and the RRC inactive state (e.g., the RRC inactive 604), mobility may be managed/controlled by the wireless device via a cell reselection. The purpose of mobility management during the RRC idle state (e.g., the RRC idle 606) or during the RRC inactive state (e.g., the RRC inactive 604) may be to enable/allow the network to be able to notify the wireless device of an event via a paging message without having to broadcast the paging message over the entire mobile communications network. The mobility management mechanism used during the RRC idle state (e.g., the RRC idle 606) or during the RRC idle state (e.g., the RRC inactive 604) may enable/allow the network to track the wireless device on a cell-group level, for example, so that the paging message may be broadcast over the cells of the cell group that the wireless device currently resides within (e.g. instead of sending the paging message over the entire mobile communication network). The mobility management mechanisms for the RRC idle state (e.g., the RRC idle 606) and the RRC inactive state (e.g., the RRC inactive 604) may track the wireless device on a cell-group level. The mobility management mechanisms may do the tracking, for example, using different granularities of grouping. There may be a plurality of levels of cell-grouping granularity (e.g., three levels of cell-grouping granularity: individual cells; cells within a RAN area identified by a RAN area identifier (RAI); and cells within a group of RAN areas, referred to as a tracking area and identified by a tracking area identifier (TAI)).

Tracking areas may be used to track the wireless device (e.g., tracking the location of the wireless device at the CN level). The CN (e.g., the CN 102, the 5G CN 152, or any other CN) may send to the wireless device a list of TAIs associated with a wireless device registration area (e.g., a UE registration area). A wireless device may perform a registration update with the CN to allow the CN to update the location of the wireless device and provide the wireless device with a new the UE registration area, for example, if the wireless device moves (e.g., via a cell reselection) to a cell associated with a TAI that may not be included in the list of TAIs associated with the UE registration area.

RAN areas may be used to track the wireless device (e.g., the location of the wireless device at the RAN level). For a wireless device in an RRC inactive state (e.g., the RRC inactive 604), the wireless device may be assigned/provided/configured with a RAN notification area. A RAN notification area may comprise one or more cell identities (e.g., a list of RAIs and/or a list of TAIs). A base station may belong to one or more RAN notification areas. A cell may belong to one or more RAN notification areas. A wireless device may perform a notification area update with the RAN to update the RAN notification area of the wireless device, for example, if the wireless device moves (e.g., via a cell reselection) to a cell not included in the RAN notification area assigned/provided/configured to the wireless device.

A base station storing an RRC context for a wireless device or a last serving base station of the wireless device may be referred to as an anchor base station. An anchor base station may maintain an RRC context for the wireless device at least during a period of time that the wireless device stays in a RAN notification area of the anchor base station and/or during a period of time that the wireless device stays in an RRC inactive state (e.g., RRC inactive 604).

A base station (e.g., gNBs 160 in FIG. 1B or any other base station) may be split into two parts: a central unit (e.g., a base station central unit, such as a gNB CU) and one or more distributed units (e.g., a base station distributed unit, such as a gNB DU). A base station central unit (CU) may be coupled to one or more base station distributed units (DUs) using an F1 interface (e.g., an F1 interface defined in an NR configuration). The base station CU may comprise the RRC, the PDCP, and the SDAP layers. A base station distributed unit (DU) may comprise the RLC, the MAC, and the PHY layers.

The physical signals and physical channels (e.g., described with respect to FIG. 5A and FIG. 5B) may be mapped onto one or more symbols (e.g., orthogonal frequency divisional multiplexing (OFDM) symbols in an NR configuration or any other symbols). OFDM is a multicarrier communication scheme that sends/transmits data over F orthogonal subcarriers (or tones). The data may be mapped to a series of complex symbols (e.g., M-quadrature amplitude modulation (M-QAM) symbols or M-phase shift keying (M PSK) symbols or any other modulated symbols), referred to as source symbols, and divided into F parallel symbol streams, for example, before transmission of the data. The F parallel symbol streams may be treated as if they are in the frequency domain. The F parallel symbols may be used as inputs to an Inverse Fast Fourier Transform (IFFT) block that transforms them into the time domain. The IFFT block may take in F source symbols at a time, one from each of the F parallel symbol streams. The IFFT block may use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. An OFDM symbol provided/output by the IFFT block may be sent/transmitted over the air interface on a carrier frequency, for example, after one or more processes (e.g., addition of a cyclic prefix) and up-conversion. The F parallel symbol streams may be mixed, for example, using a Fast Fourier Transform (FFT) block before being processed by the IFFT block. This operation may produce Discrete Fourier Transform (DFT)-precoded OFDM symbols and may be used by one or more wireless devices in the uplink to reduce the peak to average power ratio (PAPR). Inverse processing may be performed on the OFDM symbol at a receiver using an FFT block to recover the data mapped to the source symbols.

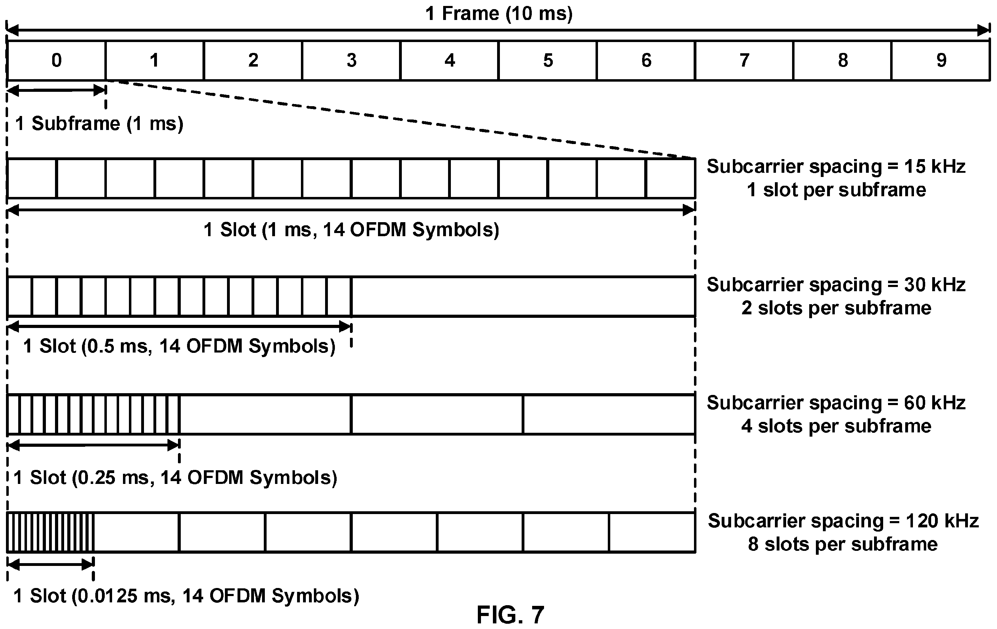

FIG. 7 shows an example configuration of a frame. The frame may comprise, for example, an NR radio frame into which OFDM symbols may be grouped. A frame (e.g., an NR radio frame) may be identified/indicated by a system frame quantity/number (SFN) or any other value. The SFN may repeat with a period of 1024 frames. One NR frame may be 10 milliseconds (ms) in duration and may comprise 10 subframes that are 1 ms in duration. A subframe may be divided into one or more slots (e.g., depending on numerologies and/or different subcarrier spacings). Each of the one or more slots may comprise, for example, 14 OFDM symbols per slot. Any quantity of symbols, slots, or duration may be used for any time interval.

The duration of a slot may depend on the numerology used for the OFDM symbols of the slot. A flexible numerology may be supported, for example, to accommodate different deployments (e.g., cells with carrier frequencies below 1 GHz up to cells with carrier frequencies in the mm-wave range). A flexible numerology may be supported, for example, in an NR configuration or any other radio configurations. A numerology may be defined in terms of subcarrier spacing and/or cyclic prefix duration. Subcarrier spacings may be scaled up by powers of two from a baseline subcarrier spacing of 15 kHz. Cyclic prefix durations may be scaled down by powers of two from a baseline cyclic prefix duration of 4.7 $\mu$s, for example, for a numerology in an NR configuration or any other radio configurations. Numerologies may be defined with the following subcarrier spacing/cyclic prefix duration combinations: 15 kHz/4.7 $\mu$s; 30 kHz/2.3 $\mu$s; 60 kHz/1.2 $\mu$s; 120 kHz/0.59 $\mu$s; 240 kHz/0.29 $\mu$s, and/or any other subcarrier spacing/cyclic prefix duration combinations.

A slot may have a fixed quantity/number of OFDM symbols (e.g., 14 OFDM symbols). A numerology with a higher subcarrier spacing may have a shorter slot duration and more slots per subframe. Examples of numerology-dependent slot duration and slots-per-subframe transmission structure are shown in FIG. 7 (the numerology with a subcarrier spacing of 240 kHz is not shown in FIG. 7). A subframe (e.g., in an NR configuration) may be used as a numerology-independent time reference. A slot may be used as the unit upon which uplink and downlink transmissions are scheduled. Scheduling (e.g., in an NR configuration) may be decoupled from the slot duration. Scheduling may start at any OFDM symbol. Scheduling may last for as many symbols as needed for a transmission, for example, to support low latency. These partial slot transmissions may be referred to as mini-slot or sub-slot transmissions.

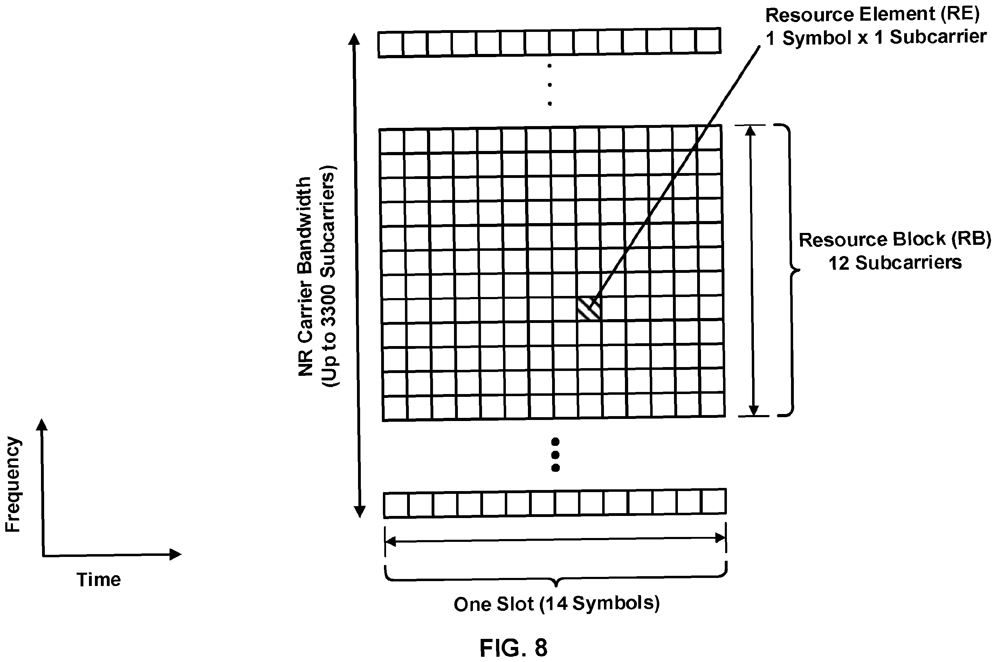

FIG. 8 shows an example resource configuration of one or more carriers. The resource configuration of may comprise a slot in the time and frequency domain for an NR carrier or any other carrier. The slot may comprise resource elements (REs) and resource blocks (RBs). A resource element (RE) may be the smallest physical resource (e.g., in an NR configuration). An RE may span one OFDM symbol in the time domain by one subcarrier in the frequency domain, such as shown in FIG. 8. An RB may span twelve consecutive REs in the frequency domain, such as shown in FIG. 8. A carrier (e.g., an NR carrier) may be limited to a width of a certain quantity of RBs and/or subcarriers (e.g., 275 RBs or 275×12 = 3300 subcarriers). Such limitation(s), if used, may limit the carrier (e.g., NR carrier) frequency based on subcarrier spacing (e.g., carrier frequency of 50, 100, 200, and 400 MHz for subcarrier spacings of 15, 30, 60, and 120 kHz, respectively). A 400 MHz bandwidth may be set based on a 400 MHz per carrier bandwidth limit. Any other bandwidth may be set based on a per carrier bandwidth limit.

A single numerology may be used across the entire bandwidth of a carrier (e.g., an NR such as shown in FIG. 8). In other example configurations, multiple numerologies may be supported on the same carrier. NR and/or other access technologies may support wide carrier bandwidths (e.g., up to 400 MHz for a subcarrier spacing of 120 kHz). Not all wireless devices may be able to receive the full carrier bandwidth (e.g., due to hardware limitations and/or different wireless device capabilities). Receiving and/or utilizing the full carrier bandwidth may be prohibitive, for example, in terms of wireless device power consumption. A wireless device may adapt the size of the receive bandwidth of the wireless device, for example, based on the amount of traffic the wireless device is scheduled to receive (e.g., to reduce power consumption and/or for other purposes). Such an adaptation may be referred to as bandwidth adaptation.

Configuration of one or more bandwidth parts (BWPs) may support one or more wireless devices not capable of receiving the full carrier bandwidth. BWPs may support bandwidth adaptation, for example, for such wireless devices not capable of receiving the full carrier bandwidth. A BWP (e.g., a BWP of an NR configuration) may be defined by a subset of contiguous RBs on a carrier. A wireless device may be configured (e.g., via an RRC layer) with one or more downlink BWPs per serving cell and one or more uplink BWPs per serving cell (e.g., up to four downlink BWPs per serving cell and up to four uplink BWPs per serving cell). One or more of the configured BWPs for a serving cell may be active, for example, at a given time. The one or more BWPs may be referred to as active BWPs of the serving cell. A serving cell may have one or more first active BWPs in the uplink carrier and one or more second active BWPs in the secondary uplink carrier, for example, if the serving cell is configured with a secondary uplink carrier.

A downlink BWP from a set of configured downlink BWPs may be linked with an uplink BWP from a set of configured uplink BWPs (e.g., for unpaired spectra). A downlink BWP and an uplink BWP may be linked, for example, if a downlink BWP index of the downlink BWP and an uplink BWP index of the uplink BWP are the same. A wireless device may expect that the center frequency for a downlink BWP is the same as the center frequency for an uplink BWP (e.g., for unpaired spectra).

A base station may configure a wireless device with one or more control resource sets (CORESETs) for at least one search space. The base station may configure the wireless device with one or more CORESETS, for example, for a downlink BWP in a set of configured downlink BWPs on a primary cell (PCell) or on a secondary cell (SCell). A search space may comprise a set of locations in the time and frequency domains where the wireless device may monitor/find/-detect/identify control information. The search space may be a wireless device-specific search space (e.g., a UE-specific search space) or a common search space (e.g., potentially usable by a plurality of wireless devices or a group of wireless user devices). A base station may configure a group of wireless devices with a common search space, on a PCell or on a primary secondary cell (PSCell), in an active downlink BWP.

A base station may configure a wireless device with one or more resource sets for one or more PUCCH transmissions, for example, for an uplink BWP in a set of configured uplink BWPs. A wireless device may receive downlink receptions (e.g., PDCCH or PDSCH) in a downlink BWP, for example, according to a configured numerology (e.g., a configured subcarrier spacing and/or a configured cyclic prefix duration) for the downlink BWP. The wireless device may send/transmit uplink transmissions (e.g., PUCCH or PUSCH) in an uplink BWP, for example, according to a configured numerology (e.g., a configured subcarrier spacing and/or a configured cyclic prefix length for the uplink BWP).

One or more BWP indicator fields may be provided/comprised in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a wireless device with a default downlink BWP within a set of configured downlink BWPs associated with a PCell. A default downlink BWP may be an initial active downlink BWP, for example, if the base station does not provide/configure a default downlink BWP to/for the wireless device. The wireless device may determine which BWP is the initial active downlink BWP, for example, based on a CORESET configuration obtained using the PBCH.

A base station may configure a wireless device with a BWP inactivity timer value for a PCell. The wireless device may start or restart a BWP inactivity timer at any appropriate time. The wireless device may start or restart the BWP inactivity timer, for example, if one or more conditions are satisfied. The one or more conditions may comprise at least one of: the wireless device detects DCI indicating an active downlink BWP other than a default downlink BWP for a paired spectra operation; the wireless device detects DCI indicating an active downlink BWP other than a default downlink BWP for an unpaired spectra operation; and/or the wireless device detects DCI indicating an active uplink BWP other than a default uplink BWP for an unpaired spectra operation. The wireless device may start/run the BWP inactivity timer toward expiration (e.g., increment from zero to the BWP inactivity timer value, or decrement from the BWP inactivity timer value to zero), for example, if the wireless device does not detect DCI during a time interval (e.g., 1 ms or 0.5 ms). The wireless device may switch from the active downlink BWP to the default downlink BWP, for example, if the BWP inactivity timer expires.

A base station may semi-statically configure a wireless device with one or more BWPs. A wireless device may switch an active BWP from a first BWP to a second BWP, for example, based on (e.g., after or in response to) receiving DCI indicating the second BWP as an active BWP. A wireless device may switch an active BWP from a first BWP to a second BWP, for example, based on (e.g., after or in response to) an expiry of the BWP inactivity timer (e.g., if the second BWP is the default BWP).

A downlink BWP switching may refer to switching an active downlink BWP from a first downlink BWP to a second downlink BWP (e.g., the second downlink BWP is activated and the first downlink BWP is deactivated). An uplink BWP switching may refer to switching an active uplink BWP from a first uplink BWP to a second uplink BWP (e.g., the second uplink BWP is activated and the first uplink BWP is deactivated). Downlink and uplink BWP switching may be performed independently (e.g., in paired spectrum/spectra). Downlink and uplink BWP switching may be performed simultaneously (e.g., in unpaired spectrum/spectra). Switching between configured BWPs may occur, for example, based on RRC signaling, DCI signaling, expiration of a BWP inactivity timer, and/or an initiation of random access.

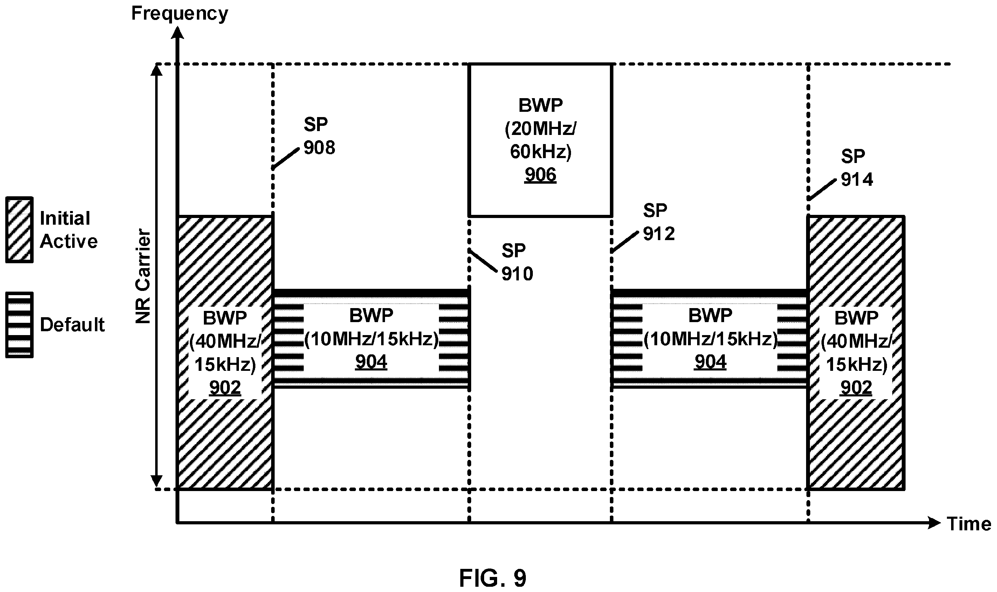

FIG. 9 shows an example of configured BWPs. Bandwidth adaptation using multiple BWPs (e.g., three configured BWPs for an NR carrier) may be available. A wireless device configured with multiple BWPs (e.g., the three BWPs) may switch from one BWP to another BWP at a switching point. The BWPs may comprise: a BWP 902 having a bandwidth of 40 MHz and a subcarrier spacing of 15 kHz; a BWP 904 having a bandwidth of 10 MHz and a subcarrier spacing of 15 kHz; and a BWP 906 having a bandwidth of 20 MHz and a subcarrier spacing of 60 kHz. The BWP 902 may be an initial active BWP, and the BWP 904 may be a default BWP. The wireless device may switch between BWPs at switching points. The wireless device may switch from the BWP 902 to the BWP 904 at a switching point 908. The switching at the switching point 908 may occur for any suitable reasons. The switching at a switching point 908 may occur, for example, based on (e.g., after or in response to) an expiry of a BWP inactivity timer (e.g., indicating switching to the default BWP). The switching at the switching point 908 may occur, for example, based on (e.g., after or in response to) receiving DCI indicating BWP 904 as the active BWP. The wireless device may switch at a switching point 910 from an active BWP 904 to the BWP 906, for example, after or in response to receiving DCI indicating BWP 906 as a new active BWP. The wireless device may switch at a switching point 912 from an active BWP 906 to the BWP 904, for example, a based on (e.g., after or in response to) an expiry of a BWP inactivity timer. The wireless device may switch at the switching point 912 from an active BWP 906 to the BWP 904, for example, after or in response to receiving DCI indicating BWP 904 as a new active BWP. The wireless device may switch at a switching point 914 from an active BWP 904 to the BWP 902, for example, after or in response to receiving DCI indicating the BWP 902 as a new active BWP.

Wireless device procedures for switching BWPs on a secondary cell may be the same/similar as those on a primary cell, for example, if the wireless device is configured for a secondary cell with a default downlink BWP in a set of configured downlink BWPs and a timer value. The wireless device may use the timer value and the default downlink BWP for the secondary cell in the same/similar manner as the wireless device uses the timer value and/or default BWPs for a primary cell. The timer value (e.g., the BWP inactivity timer) may be configured per cell (e.g., for one or more BWPs), for example, via RRC signaling or any other signaling. One or more active BWPs may switch to another BWP, for example, based on an expiration of the BWP inactivity timer.

Two or more carriers may be aggregated and data may be simultaneously sent/transmitted to/from the same wireless device using carrier aggregation (CA) (e.g., to increase data rates). The aggregated carriers in CA may be referred to as component carriers (CCs). There may be a quantity/number of serving cells for the wireless device (e.g., one serving cell for a CC), for example, if CA is configured/used. The CCs may have multiple configurations in the frequency domain.

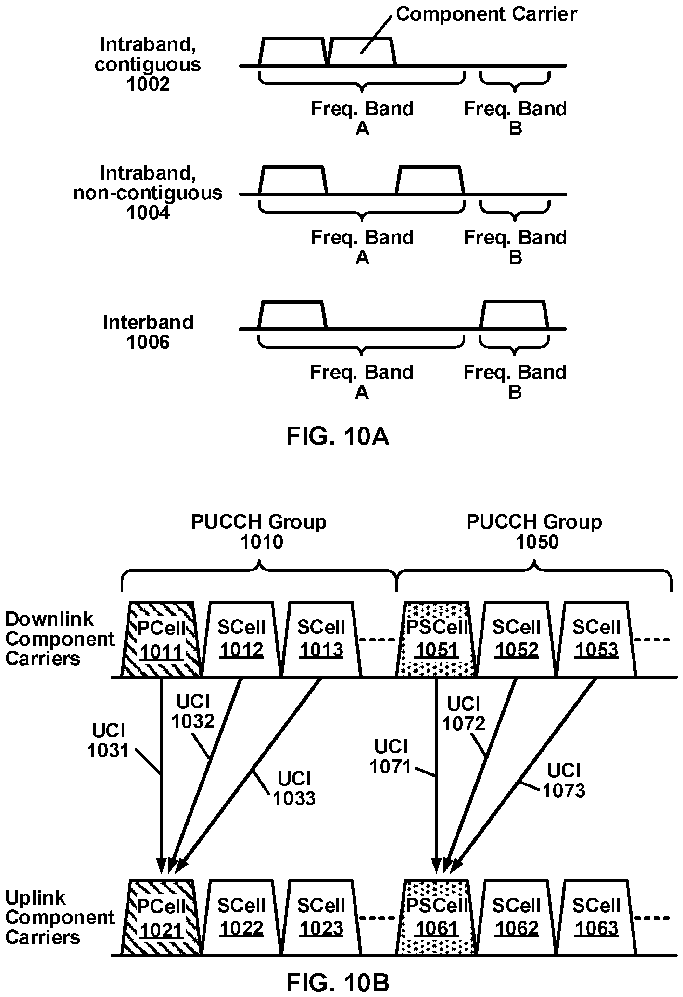

FIG. 10A shows example CA configurations based on CCs. As shown in FIG. 10A, three types of CA configurations may comprise an intraband (contiguous) configuration 1002, an intraband (non-contiguous) configuration 1004, and/or an interband configuration 1006. In the intraband (contiguous) configuration 1002, two CCs may be aggregated in the same frequency band (frequency band A) and may be located directly adjacent to each other within the frequency band. In the intraband (non-contiguous) configuration 1004, two CCs may be aggregated in the same frequency band (frequency band A) but may be separated from each other in the frequency band by a gap. In the interband configuration 1006, two CCs may be located in different frequency bands (e.g., frequency band A and frequency band B, respectively).

A network may set the maximum quantity of CCs that can be aggregated (e.g., up to 32 CCs may be aggregated in NR, or any other quantity may be aggregated in other systems). The aggregated CCs may have the same or different bandwidths, subcarrier spacing, and/or duplexing schemes (TDD, FDD, or any other duplexing schemes). A serving cell for a wireless device using CA may have a downlink CC. One or more uplink CCs may be optionally configured for a serving cell (e.g., for FDD). The ability to aggregate more downlink carriers than uplink carriers may be useful, for example, if the wireless device has more data traffic in the downlink than in the uplink.

One of the aggregated cells for a wireless device may be referred to as a primary cell (PCell), for example, if a CA is configured. The PCell may be the serving cell that the wireless initially connects to or access to, for example, during or at an RRC connection establishment, an RRC connection reestablishment, and/or a handover. The PCell may provide/-configure the wireless device with NAS mobility information and the security input. Wireless device may have different PCells. For the downlink, the carrier corresponding to the PCell may be referred to as the downlink primary CC (DL PCC). For the uplink, the carrier corresponding to the PCell may be referred to as the uplink primary CC (UL PCC). The other aggregated cells (e.g., associated with CCs other than the DL PCC and UL PCC) for the wireless device may be referred to as secondary cells (SCells). The SCells may be configured, for example, after the PCell is configured for the wireless device. An SCell may be configured via an RRC connection reconfiguration procedure. For the downlink, the carrier corresponding to an SCell may be referred to as a downlink secondary CC (DL SCC). For the uplink, the carrier corresponding to the SCell may be referred to as the uplink secondary CC (UL SCC).

Configured SCells for a wireless device may be activated or deactivated, for example, based on traffic and channel conditions. Deactivation of an SCell may cause the wireless device to stop PDCCH and PDSCH reception on the SCell and PUSCH, SRS, and CQI transmissions on the SCell. Configured SCells may be activated or deactivated, for example, using a MAC CE (e.g., the MAC CE described with respect to FIG. 4B). A MAC CE may use a bitmap (e.g., one bit per SCell) to indicate which SCells (e.g., in a subset of configured SCells) for the wireless device are activated or deactivated. Configured SCells may be deactivated, for example, based on (e.g., after or in response to) an expiration of an SCell deactivation timer (e.g., one SCell deactivation timer per SCell may be configured).

DCI may comprise control information, such as scheduling assignments and scheduling grants, for a cell. DCI may be sent/transmitted via the cell corresponding to the scheduling assignments and/or scheduling grants, which may be referred to as a self-scheduling. DCI comprising control information for a cell may be sent/transmitted via another cell, which may be referred to as a cross-carrier scheduling. Uplink control information (UCI) may comprise control information, such as HARQ acknowledgments and channel state feedback (e.g., CQI, PMI, and/or RI) for aggregated cells. UCI may be sent/transmitted via an uplink control channel (e.g., a PUCCH) of the PCell or a certain SCell (e.g., an SCell configured with PUCCH). For a larger quantity/number of aggregated downlink CCs, the PUCCH of the PCell may become overloaded. Cells may be divided into multiple PUCCH groups.

FIG. 10B shows example group of cells. Aggregated cells may be configured into one or more PUCCH groups (e.g., as shown in FIG. 10B). One or more cell groups or one or more uplink control channel groups (e.g., a PUCCH group 1010 and a PUCCH group 1050) may comprise one or more downlink CCs, respectively. The PUCCH group 1010 may comprise one or more downlink CCs, for example, three downlink CCs: a PCell 1011 (e.g., a DL PCC), an SCell 1012 (e.g., a DL SCC), and an SCell 1013 (e.g., a DL SCC). The PUCCH group 1050 may comprise one or more downlink CCs, for example, three downlink CCs: a PUCCH SCell (or PSCell) 1051 (e.g., a DL SCC), an SCell 1052 (e.g., a DL SCC), and an SCell 1053 (e.g., a DL SCC). One or more uplink CCs of the PUCCH group 1010 may be configured as a PCell 1021 (e.g., a UL PCC), an SCell 1022 (e.g., a UL SCC), and an SCell 1023 (e.g., a UL SCC). One or more uplink CCs of the PUCCH group 1050 may be configured as a PUCCH SCell (or PSCell) 1061 (e.g., a UL SCC), an SCell 1062 (e.g., a UL SCC), and an SCell 1063 (e.g., a UL SCC). UCI related to the downlink CCs of the PUCCH group 1010, shown as UCI 1031, UCI 1032, and UCI 1033, may be sent/transmitted via the uplink of the PCell 1021 (e.g., via the PUCCH of the PCell 1021). UCI related to the downlink CCs of the PUCCH group 1050, shown as UCI 1071, UCI 1072, and UCI 1073, may be sent/transmitted via the uplink of the PUCCH SCell (or PSCell) 1061 (e.g., via the PUCCH of the PUCCH SCell 1061). A single uplink PCell may be configured to send/transmit UCI relating to the six downlink CCs, for example, if the aggregated cells shown in FIG. 10B are not divided into the PUCCH group 1010 and the PUCCH group 1050. The PCell 1021 may become overloaded, for example, if the UCIs 1031, 1032, 1033, 1071, 1072, and 1073 are sent/transmitted via the PCell 1021. By dividing transmissions of UCI between the PCell 1021 and the PUCCH SCell (or PSCell) 1061, overloading may be prevented and/or reduced.

A PCell may comprise a downlink carrier (e.g., the PCell 1011) and an uplink carrier (e.g., the PCell 1021). An SCell may comprise only a downlink carrier. A cell, comprising a downlink carrier and optionally an uplink carrier, may be assigned with a physical cell ID and a cell index. The physical cell ID or the cell index may indicate/identify a downlink carrier and/or an uplink carrier of the cell, for example, depending on the context in which the physical cell ID is used. A physical cell ID may be determined, for example, using a synchronization signal (e.g., PSS and/or SSS) sent/transmitted via a downlink component carrier. A cell index may be determined, for example, using one or more RRC messages. A physical cell ID may be referred to as a carrier ID, and a cell index may be referred to as a carrier index. A first physical cell ID for a first downlink carrier may refer to the first physical cell ID for a cell comprising the first downlink carrier. Substantially the same/similar concept may apply to, for example, a carrier activation. Activation of a first carrier may refer to activation of a cell comprising the first carrier.

A multi-carrier nature of a PHY layer may be exposed/indicated to a MAC layer (e.g., in a CA configuration). A HARQ entity may operate on a serving cell. A transport block may be generated per assignment/grant per serving cell. A transport block and potential HARQ retransmissions of the transport block may be mapped to a serving cell.

For the downlink, a base station may send/transmit (e.g., unicast, multicast, and/or broadcast), to one or more wireless devices, one or more reference signals (RSs) (e.g., PSS, SSS, CSI-RS, DM-RS, and/or PT-RS). For the uplink, the one or more wireless devices may send/transmit one or more RSs to the base station (e.g., DM-RS, PT-RS, and/or SRS). The PSS and the SSS may be sent/transmitted by the base station and used by the one or more wireless devices to synchronize the one or more wireless devices with the base station. A synchronization signal (SS) / physical broadcast channel (PBCH) block may comprise the PSS, the SSS, and the PBCH. The base station may periodically send/transmit a burst of SS/PBCH blocks, which may be referred to as SSBs.

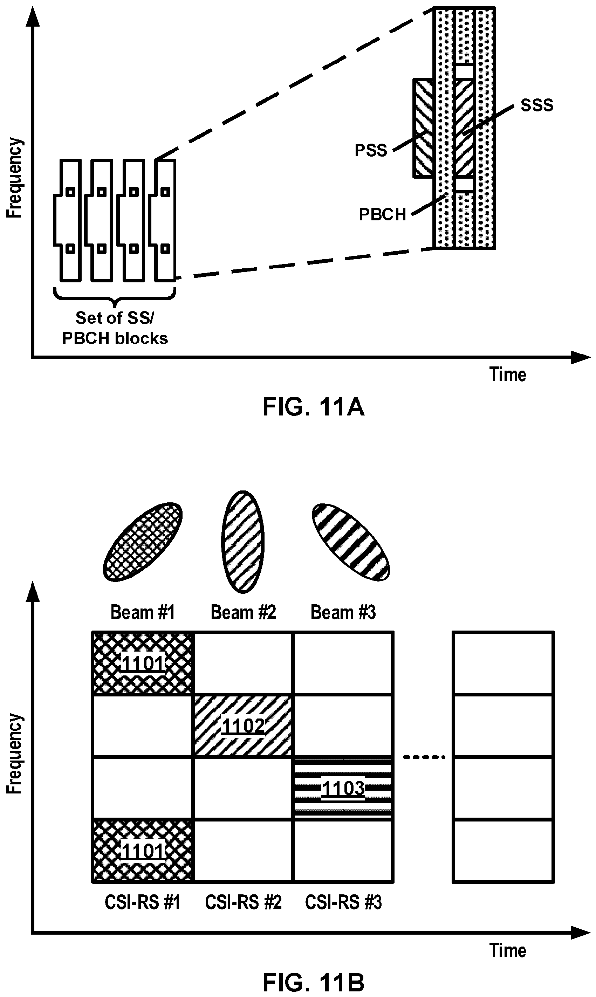

FIG. 11A shows an example mapping of one or more SS/PBCH blocks. A burst of SS/PBCH blocks may comprise one or more SS/PBCH blocks (e.g., 4 SS/PBCH blocks, as shown in FIG. 11A). Bursts may be sent/transmitted periodically (e.g., every 2 frames, 20 ms, or any other durations). A burst may be restricted to a half-frame (e.g., a first half-frame having a duration of 5 ms). Such parameters (e.g., the quantity/number of SS/PBCH blocks per burst, periodicity of bursts, position of the burst within the frame) may be configured, for example, based on at least one of: a carrier frequency of a cell in which the SS/PBCH block is sent/transmitted; a numerology or subcarrier spacing of the cell; a configuration by the network (e.g., using RRC signaling); and/or any other suitable factor(s). A wireless device may assume a subcarrier spacing for the SS/PBCH block based on the carrier frequency being monitored, for example, unless the radio network configured the wireless device to assume a different subcarrier spacing.

The SS/PBCH block may span one or more OFDM symbols in the time domain (e.g., 4 OFDM symbols, as shown in FIG. 11A or any other quantity/number of symbols) and may span one or more subcarriers in the frequency domain (e.g., 240 contiguous subcarriers or any other quantity/number of subcarriers). The PSS, the SSS, and the PBCH may have a common center frequency. The PSS may be sent/transmitted first and may span, for example, 1 OFDM symbol and 127 subcarriers. The SSS may be sent/transmitted after the PSS (e.g., two symbols later) and may span 1 OFDM symbol and 127 subcarriers. The PBCH may be sent/transmitted after the PSS (e.g., across the next 3 OFDM symbols) and may span 240 subcarriers (e.g., in the second and fourth OFDM symbols as shown in FIG. 11A) and/or may span fewer than 240 subcarriers (e.g., in the third OFDM symbols as shown in FIG. 11A).

The location of the SS/PBCH block in the time and frequency domains may not be known to the wireless device (e.g., if the wireless device is searching for the cell). The wireless device may monitor a carrier for the PSS, for example, to find and select the cell. The wireless device may monitor a frequency location within the carrier. The wireless device may search for the PSS at a different frequency location within the carrier, for example, if the PSS is not found after a certain duration (e.g., 20 ms). The wireless device may search for the PSS at a different frequency location within the carrier, for example, as indicated by a synchronization raster. The wireless device may determine the locations of the SSS and the PBCH, respectively, for example, based on a known structure of the SS/PBCH block if the PSS is found at a location in the time and frequency domains. The SS/PBCH block may be a cell-defining SS block (CD-SSB). A primary cell may be associated with a CD-SSB. The CD-SSB may be located on a synchronization raster. A cell selection/search and/or reselection may be based on the CD-SSB.

The SS/PBCH block may be used by the wireless device to determine one or more parameters of the cell. The wireless device may determine a physical cell identifier (PCI) of the cell, for example, based on the sequences of the PSS and the SSS, respectively. The wireless device may determine a location of a frame boundary of the cell, for example, based on the location of the SS/PBCH block. The SS/PBCH block may indicate that it has been sent/transmitted in accordance with a transmission pattern. An SS/PBCH block in the transmission pattern may be a known distance from the frame boundary (e.g., a predefined distance for a RAN configuration among one or more networks, one or more base stations, and one or more wireless devices).

The PBCH may use a QPSK modulation and/or forward error correction (FEC). The FEC may use polar coding. One or more symbols spanned by the PBCH may comprise/carry one or more DM-RSs for demodulation of the PBCH. The PBCH may comprise an indication of a current system frame quantity/number (SFN) of the cell and/or a SS/PBCH block timing index. These parameters may facilitate time synchronization of the wireless device to the base station. The PBCH may comprise a MIB used to send/transmit to the wireless device one or more parameters. The MIB may be used by the wireless device to locate remaining minimum system information (RMSI) associated with the cell. The RMSI may comprise a System Information Block Type 1 (SIB1). The SIB1 may comprise information for the wireless device to access the cell. The wireless device may use one or more parameters of the MIB to monitor a PDCCH, which may be used to schedule a PDSCH. The PDSCH may comprise the SIB1. The SIB1 may be decoded using parameters provided/comprised in the MIB. The PBCH may indicate an absence of SIB1. The wireless device may be pointed to a frequency, for example, based on the PBCH indicating the absence of SIB1. The wireless device may search for an SS/PBCH block at the frequency to which the wireless device is pointed.

The wireless device may assume that one or more SS/PBCH blocks sent/transmitted with a same SS/PBCH block index are quasi co-located (QCLed) (e.g., having substantially the same/similar Doppler spread, Doppler shift, average gain, average delay, and/or spatial Rx parameters). The wireless device may not assume QCL for SS/PBCH block transmissions having different SS/PBCH block indices. SS/PBCH blocks (e.g., those within a half-frame) may be sent/transmitted in spatial directions (e.g., using different beams that span a coverage area of the cell). A first SS/PBCH block may be sent/transmitted in a first spatial direction using a first beam, a second SS/PBCH block may be sent/transmitted in a second spatial direction using a second beam, a third SS/PBCH block may be sent/transmitted in a third spatial direction using a third beam, a fourth SS/PBCH block may be sent/transmitted in a fourth spatial direction using a fourth beam, etc.

A base station may send/transmit a plurality of SS/PBCH blocks, for example, within a frequency span of a carrier. A first PCI of a first SS/PBCH block of the plurality of SS/PBCH blocks may be different from a second PCI of a second SS/PBCH block of the plurality of SS/PBCH blocks. The PCIs of SS/PBCH blocks sent/transmitted in different frequency locations may be different or substantially the same.

The CSI-RS may be sent/transmitted by the base station and used by the wireless device to acquire/obtain/determine channel state information (CSI). The base station may configure the wireless device with one or more CSI-RSs for channel estimation or any other suitable purpose. The base station may configure a wireless device with one or more of the same/similar CSI-RSs. The wireless device may measure the one or more CSI-RSs. The wireless device may estimate a downlink channel state and/or generate a CSI report, for example, based on the measuring of the one or more downlink CSI-RSs. The wireless device may send/transmit the CSI report to the base station (e.g., based on periodic CSI reporting, semi-persistent CSI reporting, and/or aperiodic CSI reporting). The base station may use feedback provided by the wireless device (e.g., the estimated downlink channel state) to perform a link adaptation.

The base station may semi-statically configure the wireless device with one or more CSI-RS resource sets. A CSI-RS resource may be associated with a location in the time and frequency domains and a periodicity. The base station may selectively activate and/or deactivate a CSI-RS resource. The base station may indicate to the wireless device that a CSI-RS resource in the CSI-RS resource set is activated and/or deactivated.

The base station may configure the wireless device to report CSI measurements. The base station may configure the wireless device to provide CSI reports periodically, aperiodically, or semi-persistently. For periodic CSI reporting, the wireless device may be configured with a timing and/or periodicity of a plurality of CSI reports. For aperiodic CSI reporting, the base station may request a CSI report. The base station may command the wireless device to measure a configured CSI-RS resource and provide a CSI report relating to the measurement(s). For semi-persistent CSI reporting, the base station may configure the wireless device to send/transmit periodically, and selectively activate or deactivate the periodic reporting (e.g., via one or more activation/deactivation MAC CEs and/or one or more DCIs). The base station may configure the wireless device with a CSI-RS resource set and CSI reports, for example, using RRC signaling.

The CSI-RS configuration may comprise one or more parameters indicating, for example, up to 32 antenna ports (or any other quantity of antenna ports). The wireless device may be configured to use/employ the same OFDM symbols for a downlink CSI-RS and a CORESET, for example, if the downlink CSI-RS and CORESET are spatially QCLed and resource elements associated with the downlink CSI-RS are outside of the physical resource blocks (PRBs) configured for the CORESET. The wireless device may be configured to use/employ the same OFDM symbols for a downlink CSI-RS and SS/PBCH blocks, for example, if the downlink CSI-RS and SS/PBCH blocks are spatially QCLed and resource elements associated with the downlink CSI-RS are outside of PRBs configured for the SS/PBCH blocks.

Downlink DM-RSs may be sent/transmitted by a base station and received/used by a wireless device for a channel estimation. The downlink DM-RSs may be used for coherent demodulation of one or more downlink physical channels (e.g., PDSCH). A network (e.g., an NR network) may support one or more variable and/or configurable DM-RS patterns for data demodulation. At least one downlink DM-RS configuration may support a front-loaded DM-RS pattern. A front-loaded DM-RS may be mapped over one or more OFDM symbols (e.g., one or two adjacent OFDM symbols). A base station may semi-statically configure the wireless device with a quantity/number (e.g. a maximum quantity/number) of front-loaded DM-RS symbols for a PDSCH. A DM-RS configuration may support one or more DM-RS ports. A DM-RS configuration may support up to eight orthogonal downlink DM-RS ports per wireless device (e.g., for single user-MIMO). A DM-RS configuration may support up to 4 orthogonal downlink DM-RS ports per wireless device (e.g., for multiuser-MIMO). A radio network may support (e.g., at least for CP-OFDM) a common DM-RS structure for downlink and uplink. A DM-RS location, a DM-RS pattern, and/or a scrambling sequence may be the same or different. The base station may send/transmit a downlink DM-RS and a corresponding PDSCH, for example, using the same precoding matrix. The wireless device may use the one or more downlink DM-RSs for coherent demodulation/channel estimation of the PDSCH.

A transmitter (e.g., a transmitter of a base station) may use a precoder matrices for a part of a transmission bandwidth. The transmitter may use a first precoder matrix for a first bandwidth and a second precoder matrix for a second bandwidth. The first precoder matrix and the second precoder matrix may be different, for example, based on the first bandwidth being different from the second bandwidth. The wireless device may assume that a same precoding matrix is used across a set of PRBs. The set of PRBs may be determined/indicated/identified/denoted as a precoding resource block group (PRG).

A PDSCH may comprise one or more layers. The wireless device may assume that at least one symbol with DM-RS is present on a layer of the one or more layers of the PDSCH. A higher layer may configure one or more DM-RSs for a PDSCH (e.g., up to 3 DM-RSs for the PDSCH). Downlink PT-RS may be sent/transmitted by a base station and used by a wireless device, for example, for a phase-noise compensation. Whether a downlink PT-RS is present or not may depend on an RRC configuration. The presence and/or the pattern of the downlink PT-RS may be configured on a wireless device-specific basis, for example, using a combination of RRC signaling and/or an association with one or more parameters used/employed for other purposes (e.g., modulation and coding scheme (MCS)), which may be indicated by DCI. A dynamic presence of a downlink PT-RS, if configured, may be associated with one or more DCI parameters comprising at least MCS. A network (e.g., an NR network) may support a plurality of PT-RS densities defined in the time and/or frequency domains. A frequency domain density (if configured/present) may be associated with at least one configuration of a scheduled bandwidth. The wireless device may assume a same precoding for a DM-RS port and a PT-RS port. The quantity/number of PT-RS ports may be fewer than the quantity/number of DM-RS ports in a scheduled resource. Downlink PT-RS may be configured/allocated/confined in the scheduled time/frequency duration for the wireless device. Downlink PT-RS may be sent/transmitted via symbols, for example, to facilitate a phase tracking at the receiver.

The wireless device may send/transmit an uplink DM-RS to a base station, for example, for a channel estimation. The base station may use the uplink DM-RS for coherent demodulation of one or more uplink physical channels. The wireless device may send/transmit an uplink DM-RS with a PUSCH and/or a PUCCH. The uplink DM-RS may span a range of frequencies that is similar to a range of frequencies associated with the corresponding physical channel. The base station may configure the wireless device with one or more uplink DM-RS configurations. At least one DM-RS configuration may support a front-loaded DM-RS pattern. The front-loaded DM-RS may be mapped over one or more OFDM symbols (e.g., one or two adjacent OFDM symbols). One or more uplink DM-RSs may be configured to send/transmit at one or more symbols of a PUSCH and/or a PUCCH. The base station may semi-statically configure the wireless device with a quantity/number (e.g., the maximum quantity/number) of front-loaded DM-RS symbols for the PUSCH and/or the PUCCH, which the wireless device may use to schedule a single-symbol DM-RS and/or a double-symbol DM-RS. A network (e.g., an NR network) may support (e.g., for cyclic prefix orthogonal frequency division multiplexing (CP-OFDM)) a common DM-RS structure for downlink and uplink. A DM-RS location, a DM-RS pattern, and/or a scrambling sequence for the DM-RS may be substantially the same or different.

A PUSCH may comprise one or more layers. A wireless device may send/transmit at least one symbol with DM-RS present on a layer of the one or more layers of the PUSCH. A higher layer may configure one or more DM-RSs (e.g., up to three DM-RSs) for the PUSCH. Uplink PT-RS (which may be used by a base station for a phase tracking and/or a phase-noise compensation) may or may not be present, for example, depending on an RRC configuration of the wireless device. The presence and/or the pattern of an uplink PT-RS may be configured on a wireless device-specific basis (e.g., a UE-specific basis), for example, by a combination of RRC signaling and/or one or more parameters configured/employed for other purposes (e.g., MCS), which may be indicated by DCI. A dynamic presence of an uplink PT-RS, if configured, may be associated with one or more DCI parameters comprising at least MCS. A radio network may support a plurality of uplink PT-RS densities defined in time/frequency domain. A frequency domain density (if configured/present) may be associated with at least one configuration of a scheduled bandwidth. The wireless device may assume a same precoding for a DM-RS port and a PT-RS port. A quantity/number of PT-RS ports may be less than a quantity/number of DM-RS ports in a scheduled resource. An uplink PT-RS may be configured/allocated/confined in the scheduled time/frequency duration for the wireless device.

One or more SRSs may be sent/transmitted by a wireless device to a base station, for example, for a channel state estimation to support uplink channel dependent scheduling and/or a link adaptation. SRS sent/transmitted by the wireless device may enable/allow a base station to estimate an uplink channel state at one or more frequencies. A scheduler at the base station may use/employ the estimated uplink channel state to assign one or more resource blocks for an uplink PUSCH transmission for the wireless device. The base station may semi-statically configure the wireless device with one or more SRS resource sets. For an SRS resource set, the base station may configure the wireless device with one or more SRS resources. An SRS resource set applicability may be configured, for example, by a higher layer (e.g., RRC) parameter. An SRS resource in an SRS resource set of the one or more SRS resource sets (e.g., with the same/similar time domain behavior, periodic, aperiodic, and/or the like) may be sent/transmitted at a time instant (e.g., simultaneously), for example, if a higher layer parameter indicates beam management. The wireless device may send/transmit one or more SRS resources in SRS resource sets. A network (e.g., an NR network) may support aperiodic, periodic, and/or semi-persistent SRS transmissions. The wireless device may send/transmit SRS resources, for example, based on one or more trigger types. The one or more trigger types may comprise higher layer signaling (e.g., RRC) and/or one or more DCI formats. At least one DCI format may be used/employed for the wireless device to select at least one of one or more configured SRS resource sets. An SRS trigger type 0 may refer to an SRS triggered based on higher layer signaling. An SRS trigger type 1 may refer to an SRS triggered based on one or more DCI formats. The wireless device may be configured to send/transmit an SRS, for example, after a transmission of a PUSCH and a corresponding uplink DM-RS if a PUSCH and an SRS are sent/transmitted in a same slot. A base station may semi-statically configure a wireless device with one or more SRS configuration parameters indicating at least one of following: an SRS resource configuration identifier; a quantity/number of SRS ports; time domain behavior of an SRS resource configuration (e.g., an indication of periodic, semi-persistent, or aperiodic SRS); slot, mini-slot, and/or subframe level periodicity; an offset for a periodic and/or an aperiodic SRS resource; a quantity/number of OFDM symbols in an SRS resource; a starting OFDM symbol of an SRS resource; an SRS bandwidth; a frequency hopping bandwidth; a cyclic shift; and/or an SRS sequence ID.

An antenna port may be determined/defined such that the channel over which a symbol on the antenna port is conveyed can be inferred from the channel over which another symbol on the same antenna port is conveyed. The receiver may infer/determine the channel (e.g., fading gain, multipath delay, and/or the like) for conveying a second symbol on an antenna port, from the channel for conveying a first symbol on the antenna port, for example, if the first symbol and the second symbol are sent/transmitted on the same antenna port. A first antenna port and a second antenna port may be referred to as quasi co-located (QCLed), for example, if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming may require beam management. Beam management may comprise a beam measurement, a beam selection, and/or a beam indication. A beam may be associated with one or more reference signals. A beam may be identified by one or more beamformed reference signals. The wireless device may perform a downlink beam measurement, for example, based on one or more downlink reference signals (e.g., a CSI-RS) and generate a beam measurement report. The wireless device may perform the downlink beam measurement procedure, for example, after an RRC connection is set up with a base station.

FIG. 11B shows an example mapping of one or more CSI-RSs. The CSI-RSs may be mapped in the time and frequency domains. Each rectangular block shown in FIG. 11B may correspond to a resource block (RB) within a bandwidth of a cell. A base station may send/transmit one or more RRC messages comprising CSI-RS resource configuration parameters indicating one or more CSI-RSs. One or more of parameters may be configured by higher layer signaling (e.g., RRC and/or MAC signaling) for a CSI-RS resource configuration. The one or more of the parameters may comprise at least one of : a CSI-RS resource configuration identity, a quantity/number of CSI-RS ports, a CSI-RS configuration (e.g., symbol and resource element (RE) locations in a subframe), a CSI-RS subframe configuration (e.g., a subframe location, an offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*), and/or other radio resource parameters.

One or more beams may be configured for a wireless device in a wireless device-specific configuration. Three beams are shown in FIG. 11B (beam #1, beam #2, and beam #3), but more or fewer beams may be configured. Beam #1 may be allocated with CSI-RS 1101 that may be sent/transmitted in one or more subcarriers in an RB of a first symbol. Beam #2 may be allocated with CSI-RS 1102 that may be sent/transmitted in one or more subcarriers in an RB of a second symbol. Beam #3 may be allocated with CSI-RS 1103 that may be sent/transmitted in one or more subcarriers in an RB of a third symbol. A base station may use other subcarriers in the same RB (e.g., those that are not used to send/transmit CSI-RS 1101) to transmit another CSI-RS associated with a beam for another wireless device, for example, by using frequency division multiplexing (FDM). Beams used for a wireless device may be configured such that beams for the wireless device use symbols different from symbols used by beams of other wireless devices, for example, by using time domain multiplexing (TDM). A wireless device may be served with beams in orthogonal symbols (e.g., no overlapping symbols), for example, by using the TDM.

CSI-RSs (e.g., CSI-RSs 1101, 1102, 1103) may be sent/transmitted by the base station and used by the wireless device for one or more measurements. The wireless device may measure an RSRP of configured CSI-RS resources. The base station may configure the wireless device with a reporting configuration, and the wireless device may report the RSRP measurements to a network (e.g., via one or more base stations) based on the reporting configuration. The base station may determine, based on the reported measurement results, one or more transmission configuration indication/indicator (TCI) states comprising a quantity/number of reference signals. The base station may indicate one or more TCI states to the wireless device (e.g., via RRC signaling, a MAC CE, and/or DCI). The wireless device may receive a downlink transmission with an Rx beam determined based on the one or more TCI states. The wireless device may or may not have a capability of beam correspondence. The wireless device may determine a spatial domain filter of a transmit (Tx) beam, for example, based on a spatial domain filter of the corresponding Rx beam, if the wireless device has the capability of beam correspondence. The wireless device may perform an uplink beam selection procedure to determine the spatial domain filter of the Tx beam, for example, if the wireless device does not have the capability of beam correspondence. The wireless device may perform the uplink beam selection procedure, for example, based on one or more sounding reference signal (SRS) resources configured to the wireless device by the base station. The base station may select and indicate uplink beams for the wireless device, for example, based on measurements of the one or more SRS resources sent/transmitted by the wireless device.

A wireless device may determine/assess (e.g., measure) a channel quality of one or more beam pair links, for example, in a beam management procedure. A beam pair link may comprise a Tx beam of a base station and an Rx beam of the wireless device. The Tx beam of the base station may send/transmit a downlink signal, and the Rx beam of the wireless device may receive the downlink signal. The wireless device may send/transmit a beam measurement report, for example, based on the assessment/determination. The beam measurement report may indicate one or more beam pair quality parameters comprising at least one of: one or more beam identifications (e.g., a beam index, a reference signal index, or the like), an RSRP, a precoding matrix indicator (PMI), a channel quality indicator (CQI), and/or a rank indicator (RI).

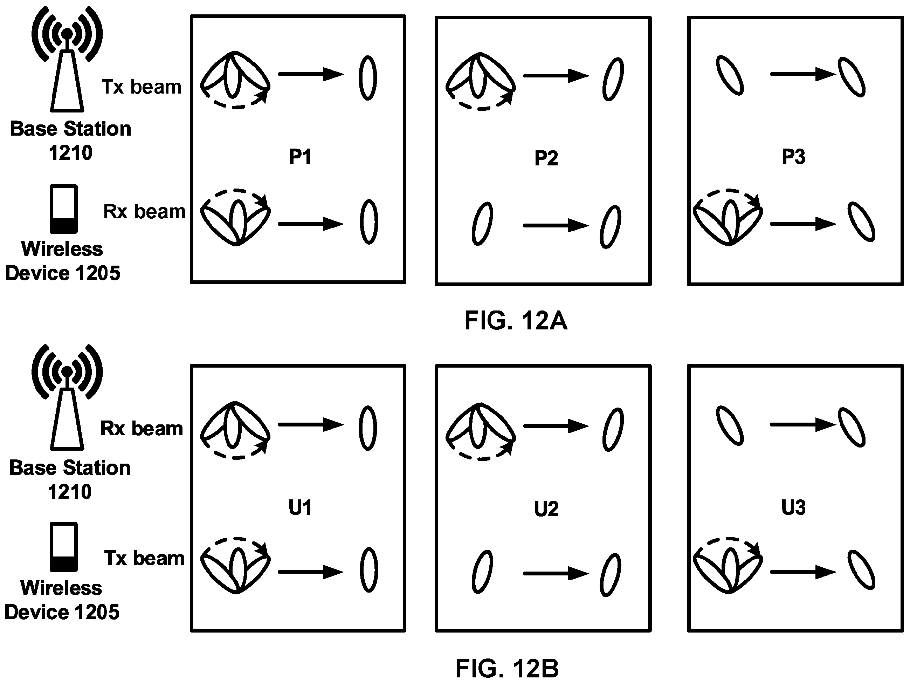

FIG. 12A shows examples of downlink beam management procedures. One or more downlink beam management procedures (e.g., downlink beam management procedures P1, P2, and P3) may be performed. Procedure P1 may enable a measurement (e.g., a wireless device measurement) on Tx beams of a TRP (or multiple TRPs) (e.g., to support a selection of one or more base station Tx beams and/or wireless device Rx beams). The Tx beams of a base station (e.g., base station 1210) and the Rx beams of a wireless device (e.g., wireless device 1205) are shown as ovals in the top row of P1 and bottom row of P1, respectively. Beamforming (e.g., at a TRP) may comprise a Tx beam sweep for a set of beams (e.g., the beam sweeps shown, in the top rows of P1 and P2, as ovals rotated in a counter-clockwise direction indicated by the dashed arrows). Beamforming (e.g., at a wireless device) may comprise an Rx beam sweep for a set of beams (e.g., the beam sweeps shown, in the bottom rows of P1 and P3, as ovals rotated in a clockwise direction indicated by the dashed arrows). Procedure P2 may be used to enable a measurement (e.g., a wireless device measurement) on Tx beams of a TRP (shown, in the top row of P2, as ovals rotated in a counter-clockwise direction indicated by the dashed arrow). The wireless device and/or the base station may perform procedure P2, for example, using a smaller set of beams than the set of beams used in procedure P1, or using narrower beams than the beams used in procedure P1. Procedure P2 may be referred to as a beam refinement. The wireless device may perform procedure P3 for an Rx beam determination, for example, by using the same Tx beam(s) of the base station and sweeping Rx beam(s) of the wireless device.

FIG. 12B shows examples of uplink beam management procedures. One or more uplink beam management procedures (e.g., uplink beam management procedures U1, U2, and U3) may be performed. Procedure U1 may be used to enable a base station (e.g., base station 1210) to perform a measurement on Tx beams of a wireless device (e.g., wireless device 1205) (e.g., to support a selection of one or more Tx beams of the wireless device and/or Rx beams of the base station). The Tx beams of the wireless device and the Rx beams of the base station are shown as ovals in the top row of U1 and bottom row of U1, respectively). Beamforming (e.g., at the wireless device) may comprise one or more beam sweeps, for example, a Tx beam sweep from a set of beams (shown, in the bottom rows of U1 and U3, as ovals rotated in a clockwise direction indicated by the dashed arrows). Beamforming (e.g., at the base station) may comprise one or more beam sweeps, for example, an Rx beam sweep from a set of beams (shown, in the top rows of U1 and U2, as ovals rotated in a counter-clockwise direction indicated by the dashed arrows). Procedure U2 may be used to enable the base station to adjust its Rx beam, for example, if the wireless device (e.g., UE) uses a fixed Tx beam. The wireless device and/or the base station may perform procedure U2, for example, using a smaller set of beams than the set of beams used in procedure P1, or using narrower beams than the beams used in procedure P1. Procedure U2 may be referred to as a beam refinement. The wireless device may perform procedure U3 to adjust its Tx beam, for example, if the base station uses a fixed Rx beam.

A wireless device may initiate/start/perform a beam failure recovery (BFR) procedure, for example, based on detecting a beam failure. The wireless device may send/transmit a BFR request (e.g., a preamble, UCI, an SR, a MAC CE, and/or the like), for example, based on the initiating the BFR procedure. The wireless device may detect the beam failure, for example, based on a determination that a quality of beam pair link(s) of an associated control channel is unsatisfactory (e.g., having an error rate higher than an error rate threshold, a received signal power lower than a received signal power threshold, an expiration of a timer, and/or the like).

The wireless device may measure a quality of a beam pair link, for example, using one or more reference signals (RSs) comprising one or more SS/PBCH blocks, one or more CSI-RS resources, and/or one or more DM-RSs. A quality of the beam pair link may be based on one or more of a block error rate (BLER), an RSRP value, a signal to interference plus noise ratio (SINR) value, an RSRQ value, and/or a CSI value measured on RS resources. The base station may indicate that an RS resource is QCLed with one or more DM-RSs of a channel (e.g., a control channel, a shared data channel, and/or the like). The RS resource and the one or more DM-RSs of the channel may be QCLed, for example, if the channel characteristics (e.g., Doppler shift, Doppler spread, an average delay, delay spread, a spatial Rx parameter, fading, and/or the like) from a transmission via the RS resource to the wireless device are similar or the same as the channel characteristics from a transmission via the channel to the wireless device.

A network (e.g., an NR network comprising a gNB and/or an ng-eNB) and/or the wireless device may initiate/start/perform a random access procedure. A wireless device in an RRC idle (e.g., an RRC_IDLE) state and/or an RRC inactive (e.g., an RRC_INACTIVE) state may initiate/perform the random access procedure to request a connection setup to a network. The wireless device may initiate/start/perform the random access procedure from an RRC connected (e.g., an RRC_CONNECTED) state. The wireless device may initiate/start/perform the random access procedure to request uplink resources (e.g., for uplink transmission of an SR if there is no PUCCH resource available) and/or acquire/obtain/determine an uplink timing (e.g., if an uplink synchronization status is non-synchronized). The wireless device may initiate/start/perform the random access procedure to request one or more system information blocks (SIBs) (e.g., other system information blocks, such as SIB2, SIB3, and/or the like). The wireless device may initiate/start/perform the random access procedure for a beam failure recovery request. A network may initiate/start/perform a random access procedure, for example, for a handover and/or for establishing time alignment for an SCell addition.

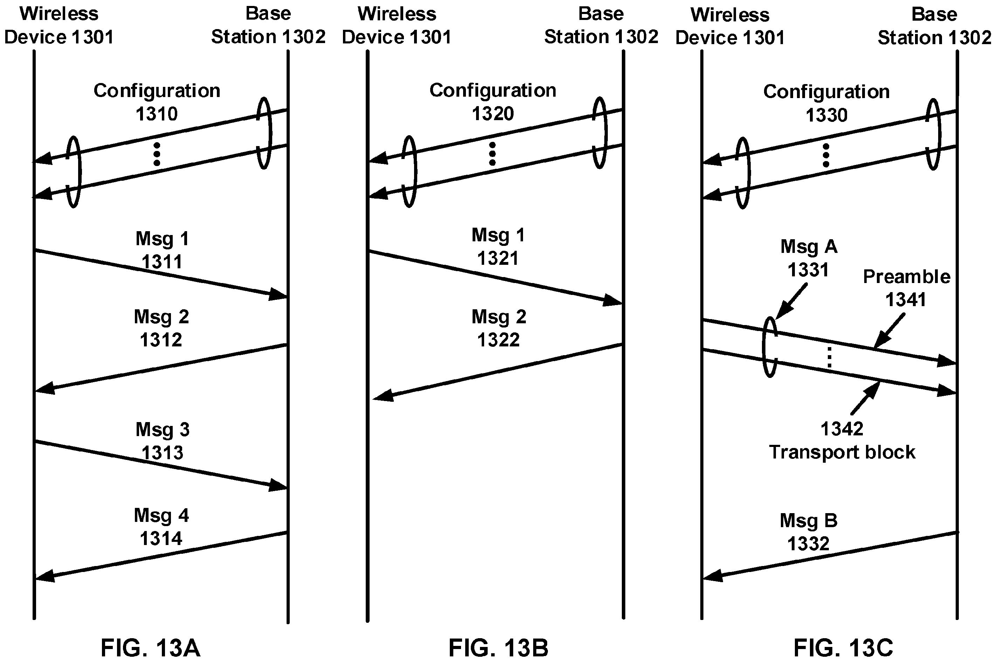

FIG. 13A shows an example four-step random access procedure. The four-step random access procedure may comprise a four-step contention-based random access procedure. A base station (e.g., base station 1302) may send/transmit a configuration message 1310 to a wireless device (e.g., wireless device 1301), for example, before initiating the random access procedure. The four-step random access procedure may comprise transmissions of four messages comprising: a first message (e.g., Msg 1 1311), a second message (e.g., Msg 2 1312), a third message (e.g., Msg 3 1313), and a fourth message (e.g., Msg 4 1314). The first message (e.g., Msg 1 1311) may comprise a preamble (or a random access preamble). The first message (e.g., Msg 1 1311) may be referred to as a preamble. The second message (e.g., Msg 2 1312) may comprise as a random access response (RAR). The second message (e.g., Msg 2 1312) may be referred to as an RAR.

The configuration message 1310 may be sent/transmitted, for example, using one or more RRC messages. The one or more RRC messages may indicate one or more random access channel (RACH) parameters to the wireless device. The one or more RACH parameters may comprise at least one of: general parameters for one or more random access procedures (e.g., *RACH-configGeneral*); cell-specific parameters (e.g., *RACH-ConfigCommon*); and/or dedicated parameters (e.g., *RACH-configDedicated*). The base station may send/transmit (e.g., broadcast or multicast) the one or more RRC messages to one or more wireless devices. The one or more RRC messages may be wireless device-specific. The one or more RRC messages that are wireless device-specific may be, for example, dedicated RRC messages sent/transmitted to a wireless device in an RRC connected (e.g., an RRC _CONNECTED) state and/or in an RRC inactive (e.g., an RRC_INACTIVE) state. The wireless devices may determine, based on the one or more RACH parameters, a time-frequency resource and/or an uplink transmit power for transmission of the first message (e.g., Msg 1 1311) and/or the third message (e.g., Msg 3 1313). The wireless device may determine a reception timing and a downlink channel for receiving the second message (e.g., Msg 2 1312) and the fourth message (e.g., Msg 4 1314), for example, based on the one or more RACH parameters.

The one or more RACH parameters provided/configured/comprised in the configuration message 1310 may indicate one or more Physical RACH (PRACH) occasions available for transmission of the first message (e.g., Msg 1 1311). The one or more PRACH occasions may be predefined (e.g., by a network comprising one or more base stations). The one or more RACH parameters may indicate one or more available sets of one or more PRACH occasions (e.g., *prach-ConfigIndex*). The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. The one or more RACH parameters may indicate a quantity/number of SS/PBCH blocks mapped to a PRACH occasion and/or a quantity/number of preambles mapped to a SS/PBCH blocks.

The one or more RACH parameters provided/configured/comprised in the configuration message 1310 may be used to determine an uplink transmit power of first message (e.g., Msg 1 1311) and/or third message (e.g., Msg 3 1313). The one or more RACH parameters may indicate a reference power for a preamble transmission (e.g., a received target power and/or an initial power of the preamble transmission). There may be one or more power offsets indicated by the one or more RACH parameters. The one or more RACH parameters may indicate: a power ramping step; a power offset between SSB and CSI-RS; a power offset between transmissions of the first message (e.g., Msg 1 1311) and the third message (e.g., Msg 3 1313); and/or a power offset value between preamble groups. The one or more RACH parameters may indicate one or more thresholds, for example, based on which the wireless device may determine at least one reference signal (e.g., an SSB and/or CSI-RS) and/or an uplink carrier (e.g., a normal uplink (NUL) carrier and/or a supplemental uplink (SUL) carrier).

The first message (e.g., Msg 1 1311) may comprise one or more preamble transmissions (e.g., a preamble transmission and one or more preamble retransmissions). An RRC message may be used to configure one or more preamble groups (e.g., group A and/or group B). A preamble group may comprise one or more preambles. The wireless device may determine the preamble group, for example, based on a pathloss measurement and/or a size of the third message (e.g., Msg 3 1313). The wireless device may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*). The wireless device may select at least one preamble associated with the one or more reference signals and/or a selected preamble group, for example, if the association between the one or more preambles and the at least one reference signal is configured by an RRC message.

The wireless device may determine the preamble, for example, based on the one or more RACH parameters provided/configured/comprised in the configuration message 1310. The wireless device may determine the preamble, for example, based on a pathloss measurement, an RSRP measurement, and/or a size of the third message (e.g., Msg 3 1313). The one or more RACH parameters may indicate: a preamble format; a maximum quantity/number of preamble transmissions; and/or one or more thresholds for determining one or more preamble groups (e.g., group A and group B). A base station may use the one or more RACH parameters to configure the wireless device with an association between one or more preambles and one or more reference signals (e.g., SSBs and/or CSI-RSs).The wireless device may determine the preamble to be comprised in first message (e.g., Msg 1 1311), for example, based on the association if the association is configured. The first message (e.g., Msg 1 1311) may be sent/transmitted to the base station via one or more PRACH occasions. The wireless device may use one or more reference signals (e.g., SSBs and/or CSI-RSs) for selection of the preamble and for determining of the PRACH occasion. One or more RACH parameters (e.g., *ra-ssb-OccasionMskIndex* and/or *ra-OccasionList*) *may* indicate an association between the PRACH occasions and the one or more reference signals.

The wireless device may perform a preamble retransmission, for example, if no response is received based on (e.g., after or in response to) a preamble transmission (e.g., for a period of time, such as a monitoring window for monitoring an RAR). The wireless device may increase an uplink transmit power for the preamble retransmission. The wireless device may select an initial preamble transmit power, for example, based on a pathloss measurement and/or a target received preamble power configured by the network. The wireless device may determine to resend/retransmit a preamble and may ramp up the uplink transmit power. The wireless device may receive one or more RACH parameters (e.g., *PREAMBLE_POWER_RAMPING_STEP*) indicating a ramping step for the preamble retransmission. The ramping step may be an amount of incremental increase in uplink transmit power for a retransmission. The wireless device may ramp up the uplink transmit power, for example, if the wireless device determines a reference signal (e.g., SSB and/or CSI-RS) that is the same as a previous preamble transmission. The wireless device may count the quantity/number of preamble transmissions and/or retransmissions, for example, using a counter parameter (e.g., *PREAMBLE_TRANSMISSION_COUNTER*). The wireless device may determine that a random access procedure has been completed unsuccessfully, for example, if the quantity/number of preamble transmissions exceeds a threshold configured by the one or more RACH parameters (e.g., *preambleTransMax*) without receiving a successful response (e.g., an RAR).

The second message (e.g., Msg 2 1312) (e.g., received by the wireless device) may comprise an RAR. The second message (e.g., Msg 2 1312) may comprise multiple RARs corresponding to multiple wireless devices. The second message (e.g., Msg 2 1312) may be received, for example, based on (e.g., after or in response to) the sending/transmitting of the first message (e.g., Msg 1 1311). The second message (e.g., Msg 2 1312) may be scheduled on the DL-SCH and may be indicated by a PDCCH, for example, using a random access radio network temporary identifier (RA RNTI). The second message (e.g., Msg 2 1312) may indicate that the first message (e.g., Msg 1 1311) was received by the base station. The second message (e.g., Msg 2 1312) may comprise a time-alignment command that may be used by the wireless device to adjust the transmission timing of the wireless device, a scheduling grant for transmission of the third message (e.g., Msg 3 1313), and/or a Temporary Cell RNTI (TC-RNTI). The wireless device may determine/start a time window (e.g., *ra-ResponseWindow*) to monitor a PDCCH for the second message (e.g., Msg 2 1312), for example, after sending/transmitting the first message (e.g., Msg 1 1311) (e.g., a preamble). The wireless device may determine the start time of the time window, for example, based on a PRACH occasion that the wireless device uses to send/transmit the first message (e.g., Msg 1 1311) (e.g., the preamble). The wireless device may start the time window one or more symbols after the last symbol of the first message (e.g., Msg 1 1311) comprising the preamble (e.g., the symbol in which the first message (e.g., Msg 1 1311) comprising the preamble transmission was completed or at a first PDCCH occasion from an end of a preamble transmission). The one or more symbols may be determined based on a numerology. The PDCCH may be mapped in a common search space (e.g., a Type1-PDCCH common search space) configured by an RRC message. The wireless device may identify/determine the RAR, for example, based on an RNTI. Radio network temporary identifiers (RNTIs) may be used depending on one or more events initiating/starting the random access procedure. The wireless device may use a RA-RNTI, for example, for one or more communications associated with random access or any other purpose. The RA-RNTI may be associated with PRACH occasions in which the wireless device sends/transmits a preamble. The wireless device may determine the RA-RNTI, for example, based on at least one of: an OFDM symbol index; a slot index; a frequency domain index; and/or a UL carrier indicator of the PRACH occasions. An example RA-RNTI may be determined as follows:

$$\text{RA-RNTI} = 1 + s\_id + 14 \times t\_id + 14 \times 80 \times f\_id + 14 \times 80 \times 8 \times ul\_carrier\_id$$

where s_id may be an index of a first OFDM symbol of the PRACH occasion (e.g., $0 \le s\_id < 14$), t_id may be an index of a first slot of the PRACH occasion in a system frame (e.g., $0 \le t\_id < 80$), f_id may be an index of the PRACH occasion in the frequency domain (e.g., $0 \le f\_id < 8$), and ul_carrier_id may be a UL carrier used for a preamble transmission (e.g., 0 for an NUL carrier, and 1 for an SUL carrier).

The wireless device may send/transmit the third message (e.g., Msg 3 1313), for example, based on (e.g., after or in response to) a successful reception of the second message (e.g., Msg 2 1312) (e.g., using resources identified in the Msg 2 1312). The third message (e.g., Msg 3 1313) may be used, for example, for contention resolution in the contention-based random access procedure. A plurality of wireless devices may send/transmit the same preamble to a base station, and the base station may send/transmit an RAR that corresponds to a wireless device. Collisions may occur, for example, if the plurality of wireless device interpret the RAR as corresponding to themselves. Contention resolution (e.g., using the third message (e.g., Msg 3 1313) and the fourth message (e.g., Msg 4 1314)) may be used to increase the likelihood that the wireless device does not incorrectly use an identity of another the wireless device. The wireless device may comprise a device identifier in the third message (e.g., Msg 3 1313) (e.g., a C-RNTI if assigned, a TC RNTI comprised in the second message (e.g., Msg 2 1312), and/or any other suitable identifier), for example, to perform contention resolution.

The fourth message (e.g., Msg 4 1314) may be received, for example, based on (e.g., after or in response to) the sending/transmitting of the third message (e.g., Msg 3 1313). The base station may address the wireless on the PDCCH (e.g., the base station may send the PDCCH to the wireless device) using a C-RNTI, for example, If the C-RNTI was included in the third message (e.g., Msg 3 1313). The random access procedure may be determined to be successfully completed, for example, if the unique C RNTI of the wireless device is detected on the PDCCH (e.g., the PDCCH is scrambled by the C-RNTI). fourth message (e.g., Msg 4 1314) may be received using a DL-SCH associated with a TC RNTI, for example, if the TC RNTI is comprised in the third message (e.g., Msg 3 1313) (e.g., if the wireless device is in an RRC idle (e.g., an RRC_IDLE) state or not otherwise connected to the base station). The wireless device may determine that the contention resolution is successful and/or the wireless device may determine that the random access procedure is successfully completed, for example, if a MAC PDU is successfully decoded and a MAC PDU comprises the wireless device contention resolution identity MAC CE that matches or otherwise corresponds with the CCCH SDU sent/transmitted in third message (e.g., Msg 3 1313).

The wireless device may be configured with an SUL carrier and/or an NUL carrier. An initial access (e.g., random access) may be supported via an uplink carrier. A base station may configure the wireless device with multiple RACH configurations (e.g., two separate RACH configurations comprising: one for an SUL carrier and the other for an NUL carrier). For random access in a cell configured with an SUL carrier, the network may indicate which carrier to use (NUL or SUL). The wireless device may determine to use the SUL carrier, for example, if a measured quality of one or more reference signals (e.g., one or more reference signals associated with the NUL carrier) is lower than a broadcast threshold. Uplink transmissions of the random access procedure (e.g., the first message (e.g., Msg 1 1311) and/or the third message (e.g., Msg 3 1313)) may remain on, or may be performed via, the selected carrier. The wireless device may switch an uplink carrier during the random access procedure (e.g., between the Msg 1 1311 and the Msg 3 1313). The wireless device may determine and/or switch an uplink carrier for the first message (e.g., Msg 1 1311) and/or the third message (e.g., Msg 3 1313), for example, based on a channel clear assessment (e.g., a listen-before-talk).

FIG. 13B shows a two-step random access procedure. The two-step random access procedure may comprise a two-step contention-free random access procedure. Similar to the four-step contention-based random access procedure, a base station (e.g., base station 1302) may, prior to initiation of the procedure, send/transmit a configuration message 1320 to the wireless device (e.g., wireless device 1301). The configuration message 1320 may be analogous in some respects to the configuration message 1310. The procedure shown in FIG. 13B may comprise transmissions of two messages: a first message (e.g., Msg 1 1321) and a second message (e.g., Msg 2 1322). The first message (e.g., Msg 1 1321) and the second message (e.g., Msg 2 1322) may be analogous in some respects to the first message (e.g., Msg 1 1311) and a second message (e.g., Msg 2 1312), respectively. The two-step contention-free random access procedure may not comprise messages analogous to the third message (e.g., Msg 3 1313) and/or the fourth message (e.g., Msg 4 1314).

The two-step (e.g., contention-free) random access procedure may be configured/initiated for a beam failure recovery, other SI request, an SCell addition, and/or a handover. A base station may indicate, or assign to, the wireless device a preamble to be used for the first message (e.g., Msg 1 1321). The wireless device may receive, from the base station via a PDCCH and/or an RRC, an indication of the preamble (e.g., *ra-PreambleIndex*).

The wireless device may start a time window (e.g., *ra-ResponseWindow*) to monitor a PDCCH for the RAR, for example, based on (e.g., after or in response to) sending/transmitting the preamble. The base station may configure the wireless device with one or more beam failure recovery parameters, such as a separate time window and/or a separate PDCCH in a search space indicated by an RRC message (e.g., *recoverySearchSpaceId*). The base station may configure the one or more beam failure recovery parameters, for example, in association with a beam failure recovery request. The separate time window for monitoring the PDCCH and/or an RAR may be configured to start after sending/transmitting a beam failure recovery request (e.g., the window may start any quantity of symbols and/or slots after sending/transmitting the beam failure recovery request). The wireless device may monitor for a PDCCH transmission addressed to a Cell RNTI (C-RNTI) on the search space. During the two-step (e.g., contention-free) random access procedure, the wireless device may determine that a random access procedure is successful, for example, based on (e.g., after or in response to) sending/transmitting first message (e.g., Msg 1 1321) and receiving a corresponding second message (e.g., Msg 2 1322). The wireless device may determine that a random access procedure has successfully been completed, for example, if a PDCCH transmission is addressed to a corresponding C-RNTI. The wireless device may determine that a random access procedure has successfully been completed, for example, if the wireless device receives an RAR comprising a preamble identifier corresponding to a preamble sent/transmitted by the wireless device and/or the RAR comprises a MAC sub-PDU with the preamble identifier. The wireless device may determine the response as an indication of an acknowledgement for an SI request.

FIG. 13C shows an example two-step random access procedure. Similar to the random access procedures shown in FIGS. 13A and 13B, a base station (e.g., base station 1302) may, prior to initiation of the procedure, send/transmit a configuration message 1330 to the wireless device (e.g., wireless device 1301). The configuration message 1330 may be analogous in some respects to the configuration message 1310 and/or the configuration message 1320. The procedure shown in FIG. 13C may comprise transmissions of multiple messages (e.g., two messages comprising: a first message (e.g., Msg A 1331) and a second message (e.g., Msg B 1332)).

Msg A 1320 may be sent/transmitted in an uplink transmission by the wireless device. Msg A 1320 may comprise one or more transmissions of a preamble 1341 and/or one or more transmissions of a transport block 1342. The transport block 1342 may comprise contents that are similar and/or equivalent to the contents of the third message (e.g., Msg 3 1313) (e.g., shown in FIG. 13A). The transport block 1342 may comprise UCI (e.g., an SR, a HARQ ACK/NACK, and/or the like). The wireless device may receive the second message (e.g., Msg B 1332), for example, based on (e.g., after or in response to) sending/transmitting the first message (e.g., Msg A 1331). The second message (e.g., Msg B 1332) may comprise contents that are similar and/or equivalent to the contents of the second message (e.g., Msg 2 1312) (e.g., an RAR shown in FIGS. 13A), the contents of the second message (e.g., Msg 2 1322) (e.g., an RAR shown in FIG. 13B) and/or the fourth message (e.g., Msg 4 1314) (e.g., shown in FIG. 13A).

The wireless device may start/initiate the two-step random access procedure (e.g., the two-step random access procedure shown in FIG. 13C) for a licensed spectrum and/or an unlicensed spectrum. The wireless device may determine, based on one or more factors, whether to start/initiate the two-step random access procedure. The one or more factors may comprise at least one of: a radio access technology in use (e.g., LTE, NR, and/or the like); whether the wireless device has a valid TA or not; a cell size; the RRC state of the wireless device; a type of spectrum (e.g., licensed vs. unlicensed); and/or any other suitable factors.

The wireless device may determine, based on two-step RACH parameters comprised in the configuration message 1330, a radio resource and/or an uplink transmit power for the preamble 1341 and/or the transport block 1342 (e.g., comprised in the first message (e.g., Msg A 1331)). The RACH parameters may indicate an MCS, a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the wireless device to determine a reception timing and a downlink channel for monitoring for and/or receiving second message (e.g., Msg B 1332).

The transport block 1342 may comprise data (e.g., delay-sensitive data), an identifier of the wireless device, security information, and/or device information (e.g., an International Mobile Subscriber Identity (IMSI)). The base station may send/transmit the second message (e.g., Msg B 1332) as a response to the first message (e.g., Msg A 1331). The second message (e.g., Msg B 1332) may comprise at least one of: a preamble identifier; a timing advance command; a power control command; an uplink grant (e.g., a radio resource assignment and/or an MCS); a wireless device identifier (e.g., a UE identifier for contention resolution); and/or an RNTI (e.g., a C-RNTI or a TC-RNTI). The wireless device may determine that the two-step random access procedure is successfully completed, for example, if a preamble identifier in the second message (e.g., Msg B 1332) corresponds to, or is matched to, a preamble sent/transmitted by the wireless device and/or the identifier of the wireless device in second message (e.g., Msg B 1332) corresponds to, or is matched to, the identifier of the wireless device in the first message (e.g., Msg A 1331) (e.g., the transport block 1342).

A wireless device and a base station may exchange control signaling (e.g., control information). The control signaling may be referred to as L1/L2 control signaling and may originate from the PHY layer (e.g., layer 1) and/or the MAC layer (e.g., layer 2) of the wireless device or the base station. The control signaling may comprise downlink control signaling sent/transmitted from the base station to the wireless device and/or uplink control signaling sent/transmitted from the wireless device to the base station.

The downlink control signaling may comprise at least one of: a downlink scheduling assignment; an uplink scheduling grant indicating uplink radio resources and/or a transport format; slot format information; a preemption indication; a power control command; and/or any other suitable signaling. The wireless device may receive the downlink control signaling in a payload sent/transmitted by the base station via a PDCCH. The payload sent/transmitted via the PDCCH may be referred to as downlink control information (DCI). The PDCCH may be a group common PDCCH (GC-PDCCH) that is common to a group of wireless devices. The GC-PDCCH may be scrambled by a group common RNTI.

A base station may attach one or more cyclic redundancy check (CRC) parity bits to DCI, for example, in order to facilitate detection of transmission errors. The base station may scramble the CRC parity bits with an identifier of a wireless device (or an identifier of a group of wireless devices), for example, if the DCI is intended for the wireless device (or the group of the wireless devices). Scrambling the CRC parity bits with the identifier may comprise Modulo-2 addition (or an exclusive-OR operation) of the identifier value and the CRC parity bits. The identifier may comprise a 16-bit value of an RNTI.

DCIs may be used for different purposes. A purpose may be indicated by the type of an RNTI used to scramble the CRC parity bits. DCI having CRC parity bits scrambled with a paging RNTI (P-RNTI) may indicate paging information and/or a system information change notification. The P-RNTI may be predefined as "FFFE" in hexadecimal. DCI having CRC parity bits scrambled with a system information RNTI (SI-RNTI) may indicate a broadcast transmission of the system information. The SI-RNTI may be predefined as "FFFF" in hexadecimal. DCI having CRC parity bits scrambled with a random access RNTI (RA-RNTI) may indicate a random access response (RAR). DCI having CRC parity bits scrambled with a cell RNTI (C-RNTI) may indicate a dynamically scheduled unicast transmission and/or a triggering of PDCCH-ordered random access. DCI having CRC parity bits scrambled with a temporary cell RNTI (TC-RNTI) may indicate a contention resolution (e.g., a Msg 3 analogous to the Msg 3 1313 shown in FIG. 13A). Other RNTIs configured for a wireless device by a base station may comprise a Configured Scheduling RNTI (CS RNTI), a Transmit Power Control-PUCCH RNTI (TPC PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C RNTI), and/or the like.

A base station may send/transmit DCIs with one or more DCI formats, for example, depending on the purpose and/or content of the DCIs. DCI format 0_0 may be used for scheduling of a PUSCH in a cell. DCI format 0_0 may be a fallback DCI format (e.g., with compact DCI payloads). DCI format 0_1 may be used for scheduling of a PUSCH in a cell (e.g., with more DCI payloads than DCI format 0_0). DCI format 1_0 may be used for scheduling of a PDSCH in a cell. DCI format 1_0 may be a fallback DCI format (e.g., with compact DCI payloads). DCI format 1_1 may be used for scheduling of a PDSCH in a cell (e.g., with more DCI payloads than DCI format 1_0). DCI format 2_0 may be used for providing a slot format indication to a group of wireless devices. DCI format 2_1 may be used for informing/notifying a group of wireless devices of a physical resource block and/or an OFDM symbol where the group of wireless devices may assume no transmission is intended to the group of wireless devices. DCI format 2_2 may be used for transmission of a transmit power control (TPC) command for PUCCH or PUSCH. DCI format 2_3 may be used for transmission of a group of TPC commands for SRS transmissions by one or more wireless devices. DCI format(s) for new functions may be defined in future releases. DCI formats may have different DCI sizes, or may share the same DCI size.

The base station may process the DCI with channel coding (e.g., polar coding), rate matching, scrambling and/or QPSK modulation, for example, after scrambling the DCI with an RNTI. A base station may map the coded and modulated DCI on resource elements used and/or configured for a PDCCH. The base station may send/transmit the DCI via a PDCCH occupying a quantity/number of contiguous control channel elements (CCEs), for example, based on a payload size of the DCI and/or a coverage of the base station. The quantity/number of the contiguous CCEs (referred to as aggregation level) may be 1, 2, 4, 8, 16, and/or any other suitable quantity/number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

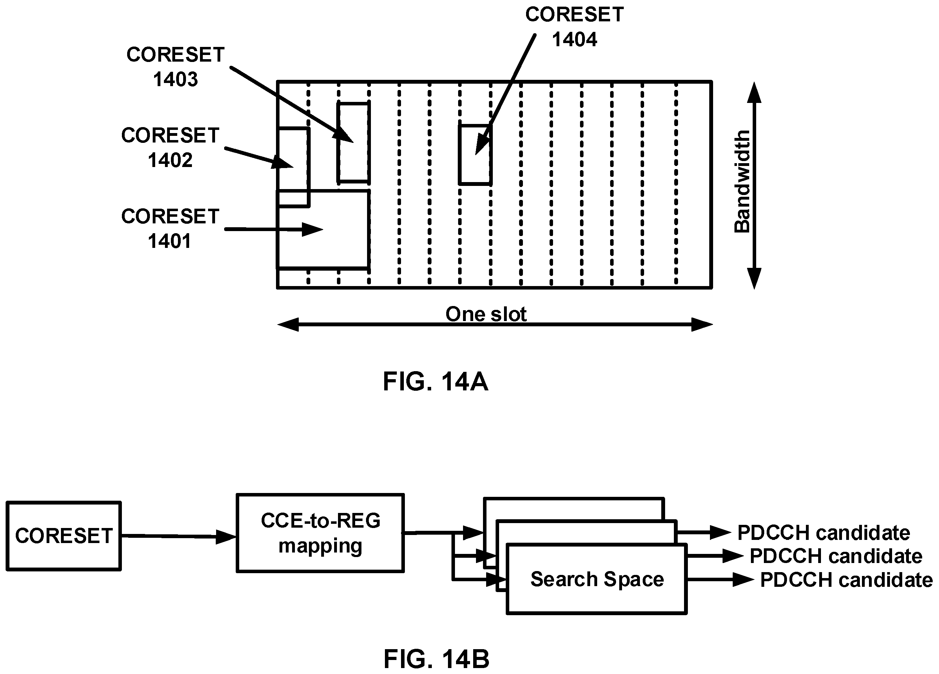

FIG. 14A shows an example of CORESET configurations. The CORESET configurations may be for a bandwidth part or any other frequency bands. The base station may send/transmit DCI via a PDCCH on one or more control resource sets (CORESETs). A CORESET may comprise a time-frequency resource in which the wireless device attempts/tries to decode DCI using one or more search spaces. The base station may configure a size and a location of the CORESET in the time-frequency domain. A first CORESET 1401 and a second CORESET 1402 may occur or may be set/configured at the first symbol in a slot. The first CORESET 1401 may overlap with the second CORESET 1402 in the frequency domain. A third CORESET 1403 may occur or may be set/configured at a third symbol in the slot. A fourth CORESET 1404 may occur or may be set/configured at the seventh symbol in the slot. CORESETs may have a different quantity/number of resource blocks in frequency domain.

FIG. 14B shows an example of a CCE-to-REG mapping. The CCE-to-REG mapping may be performed for DCI transmission via a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping (e.g., by an RRC configuration). A CORESET may be configured with an antenna port QCL parameter. The antenna port QCL parameter may indicate QCL information of a DM-RS for a PDCCH reception via the CORESET.

The base station may send/transmit, to the wireless device, one or more RRC messages comprising configuration parameters of one or more CORESETs and one or more search space sets. The configuration parameters may indicate an association between a search space set and a CORESET. A search space set may comprise a set of PDCCH candidates formed by CCEs (e.g., at a given aggregation level). The configuration parameters may indicate at least one of: a quantity/number of PDCCH candidates to be monitored per aggregation level; a PDCCH monitoring periodicity and a PDCCH monitoring pattern, one or more DCI formats to be monitored by the wireless device; and/or whether a search space set is a common search space set or a wireless device-specific search space set (e.g., a UE-specific search space set). A set of CCEs in the common search space set may be predefined and known to the wireless device. A set of CCEs in the wireless device-specific search space set (e.g., the UE-specific search space set) may be configured, for example, based on the identity of the wireless device (e.g., C-RNTI).

As shown in FIG. 14B, the wireless device may determine a time-frequency resource for a CORESET based on one or more RRC messages. The wireless device may determine a CCE-to-REG mapping (e.g., interleaved or non-interleaved, and/or mapping parameters) for the CORESET, for example, based on configuration parameters of the CORESET. The wireless device may determine a quantity/number (e.g., at most 10) of search space sets configured on/for the CORESET, for example, based on the one or more RRC messages. The wireless device may monitor a set of PDCCH candidates according to configuration parameters of a search space set. The wireless device may monitor a set of PDCCH candidates in one or more CORESETs for detecting one or more DCIs. Monitoring may comprise decoding one or more PDCCH candidates of the set of the PDCCH candidates according to the monitored DCI formats. Monitoring may comprise decoding DCI content of one or more PDCCH candidates with possible (or configured) PDCCH locations, possible (or configured) PDCCH formats (e.g., the quantity/number of CCEs, the quantity/number of PDCCH candidates in common search spaces, and/or the quantity/number of PDCCH candidates in the wireless device-specific search spaces) and possible (or configured) DCI formats. The decoding may be referred to as blind decoding. The wireless device may determine DCI as valid for the wireless device, for example, based on (e.g., after or in response to) CRC checking (e.g., scrambled bits for CRC parity bits of the DCI matching an RNTI value). The wireless device may process information comprised in the DCI (e.g., a scheduling assignment, an uplink grant, power control, a slot format indication, a downlink preemption, and/or the like).

The may send/transmit uplink control signaling (e.g., UCI) to a base station. The uplink control signaling may comprise HARQ acknowledgements for received DL-SCH transport blocks. The wireless device may send/transmit the HARQ acknowledgements, for example, based on (e.g., after or in response to) receiving a DL-SCH transport block. Uplink control signaling may comprise CSI indicating a channel quality of a physical downlink channel. The wireless device may send/transmit the CSI to the base station. The base station, based on the received CSI, may determine transmission format parameters (e.g., comprising multi-antenna and beamforming schemes) for downlink transmission(s). Uplink control signaling may comprise scheduling requests (SR). The wireless device may send/transmit an SR indicating that uplink data is available for transmission to the base station. The wireless device may send/transmit UCI (e.g., HARQ acknowledgements (HARQ-ACK), CSI report, SR, and the like) via a PUCCH or a PUSCH. The wireless device may send/transmit the uplink control signaling via a PUCCH using one of several PUCCH formats.

There may be multiple PUCCH formats (e.g., five PUCCH formats). A wireless device may determine a PUCCH format, for example, based on a size of UCI (e.g., a quantity/number of uplink symbols of UCI transmission and a quantity/number of UCI bits). PUCCH format 0 may have a length of one or two OFDM symbols and may comprise two or fewer bits. The wireless device may send/transmit UCI via a PUCCH resource, for example, using PUCCH format 0 if the transmission is over/via one or two symbols and the quantity/number of HARQ-ACK information bits with positive or negative SR (HARQ-ACK/SR bits) is one or two. PUCCH format 1 may occupy a quantity/number of OFDM symbols (e.g., between four and fourteen OFDM symbols) and may comprise two or fewer bits. The wireless device may use PUCCH format 1, for example, if the transmission is over/via four or more symbols and the quantity/number of HARQ-ACK/SR bits is one or two. PUCCH format 2 may occupy one or two OFDM symbols and may comprise more than two bits. The wireless device may use PUCCH format 2, for example, if the transmission is over/via one or two symbols and the quantity/number of UCI bits is two or more. PUCCH format 3 may occupy a quantity/number of OFDM symbols (e.g., between four and fourteen OFDM symbols) and may comprise more than two bits. The wireless device may use PUCCH format 3, for example, if the transmission is four or more symbols, the quantity/number of UCI bits is two or more, and the PUCCH resource does not comprise an orthogonal cover code (OCC). PUCCH format 4 may occupy a quantity/number of OFDM symbols (e.g., between four and fourteen OFDM symbols) and may comprise more than two bits. The wireless device may use PUCCH format 4, for example, if the transmission is four or more symbols, the quantity/number of UCI bits is two or more, and the PUCCH resource comprises an OCC.

The base station may send/transmit configuration parameters to the wireless device for a plurality of PUCCH resource sets, for example, using an RRC message. The plurality of PUCCH resource sets (e.g., up to four sets in NR, or up to any other quantity of sets in other systems) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid*), and/or a quantity/number (e.g. a maximum quantity/number) of UCI information bits the wireless device may send/transmit using one of the plurality of PUCCH resources in the PUCCH resource set. The wireless device may select one of the plurality of PUCCH resource sets, for example, based on a total bit length of the UCI information bits (e.g., HARQ-ACK, SR, and/or CSI) if configured with a plurality of PUCCH resource sets. The wireless device may select a first PUCCH resource set having a PUCCH resource set index equal to "0," for example, if the total bit length of UCI information bits is two or fewer. The wireless device may select a second PUCCH resource set having a PUCCH resource set index equal to "1," for example, if the total bit length of UCI information bits is greater than two and less than or equal to a first configured value. The wireless device may select a third PUCCH resource set having a PUCCH resource set index equal to "2," for example, if the total bit length of UCI information bits is greater than the first configured value and less than or equal to a second configured value. The wireless device may select a fourth PUCCH resource set having a PUCCH resource set index equal to "3," for example, if the total bit length of UCI information bits is greater than the second configured value and less than or equal to a third value (e.g., 1406, 1706, or any other quantity of bits).

The wireless device may determine a PUCCH resource from the PUCCH resource set for UCI (HARQ-ACK, CSI, and/or SR) transmission, for example, after determining a PUCCH resource set from a plurality of PUCCH resource sets.

The wireless device may determine the PUCCH resource, for example, based on a PUCCH resource indicator in DCI (e.g., with DCI format 1_0 or DCI for 1_1) received on/via a PDCCH. An n-bit (e.g., a three-bit) PUCCH resource indicator in the DCI may indicate one of multiple (e.g., eight) PUCCH resources in the PUCCH resource set. The wireless device may send/transmit the UCI (HARQ-ACK, CSI and/or SR) using a PUCCH resource indicated by the PUCCH resource indicator in the DCI, for example, based on the PUCCH resource indicator.

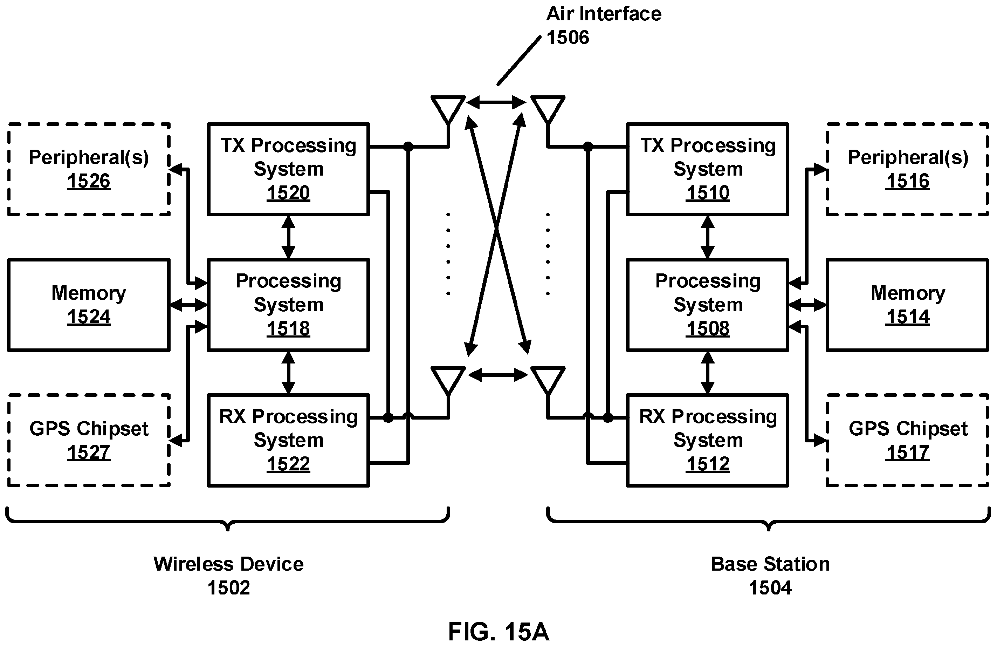

FIG. 15A shows example communications between a wireless device and a base station. A wireless device 1502 and a base station 1504 may be part of a communication network, such as the communication network 100 shown in FIG. 1A, the communication network 150 shown in FIG. 1B, or any other communication network. A communication network may comprise more than one wireless device and/or more than one base station, with substantially the same or similar configurations as those shown in FIG. 15A.

The base station 1504 may connect the wireless device 1502 to a core network (not shown) via radio communications over the air interface (or radio interface) 1506. The communication direction from the base station 1504 to the wireless device 1502 over the air interface 1506 may be referred to as the downlink. The communication direction from the wireless device 1502 to the base station 1504 over the air interface may be referred to as the uplink. Downlink transmissions may be separated from uplink transmissions, for example, using various duplex schemes (e.g., FDD, TDD, and/or some combination of the duplexing techniques).

For the downlink, data to be sent to the wireless device 1502 from the base station 1504 may be provided/-transferred/sent to the processing system 1508 of the base station 1504. The data may be provided/transferred/sent to the processing system 1508 by, for example, a core network. For the uplink, data to be sent to the base station 1504 from the wireless device 1502 may be provided/transferred/sent to the processing system 1518 of the wireless device 1502. The processing system 1508 and the processing system 1518 may implement layer 3 and layer 2 OSI functionality to process the data for transmission. Layer 2 may comprise an SDAP layer, a PDCP layer, an RLC layer, and a MAC layer, for example, described with respect to FIG. 2A, FIG. 2B, FIG. 3, and FIG. 4A. Layer 3 may comprise an RRC layer, for example, described with respect to FIG. 2B.

The data to be sent to the wireless device 1502 may be provided/transferred/sent to a transmission processing system 1510 of base station 1504, for example, after being processed by the processing system 1508. The data to be sent to base station 1504 may be provided/transferred/sent to a transmission processing system 1520 of the wireless device 1502, for example, after being processed by the processing system 1518. The transmission processing system 1510 and the transmission processing system 1520 may implement layer 1 OSI functionality. Layer 1 may comprise a PHY layer, for example, described with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

A reception processing system 1512 of the base station 1504 may receive the uplink transmission from the wireless device 1502. The reception processing system 1512 of the base station 1504 may comprise one or more TRPs. A reception processing system 1522 of the wireless device 1502 may receive the downlink transmission from the base station 1504. The reception processing system 1522 of the wireless device 1502 may comprise one or more antenna panels. The reception processing system 1512 and the reception processing system 1522 may implement layer 1 OSI functionality. Layer 1 may include a PHY layer, for example, described with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

The base station 1504 may comprise multiple antennas (e.g., multiple antenna panels, multiple TRPs, etc.). The wireless device 1502 may comprise multiple antennas (e.g., multiple antenna panels, etc.). The multiple antennas may be used to perform one or more MIMO or multi-antenna techniques, such as spatial multiplexing (e.g., single-user MIMO or multi-user MIMO), transmit/receive diversity, and/or beamforming. The wireless device 1502 and/or the base station 1504 may have a single antenna.

The processing system 1508 and the processing system 1518 may be associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518, respectively, to carry out one or more of the functionalities (e.g., one or more functionalities described herein and other functionalities of general computers, processors, memories, and/or other peripherals). The transmission processing system 1510 and/or the reception processing system 1512 may be coupled to the memory 1514 and/or another memory (e.g., one or more non-transitory computer readable mediums) storing computer program instructions or code that may be executed to carry out one or more of their respective functionalities. The transmission processing system 1520 and/or the reception processing system 1522 may be coupled to the memory 1524 and/or another memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an on-board unit, or any combination thereof. The processing system 1508 and/or the processing system 1518 may perform at least one of signal coding/processing, data processing, power control, input/output processing, and/or any other functionality that may enable the wireless device 1502 and/or the base station 1504 to operate in a wireless environment.

The processing system 1508 may be connected to one or more peripherals 1516. The processing system 1518 may be connected to one or more peripherals 1526. The one or more peripherals 1516 and the one or more peripherals 1526 may comprise software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive input data (e.g., user input data) from, and/or provide output data (e.g., user output data) to, the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 may be connected to a Global Positioning System (GPS) chipset 1517. The processing system 1518 may be connected to a Global Positioning System (GPS) chipset 1527. The GPS chipset 1517 and the GPS chipset 1527 may be configured to determine and provide geographic location information of the wireless device 1502 and the base station 1504, respectively.

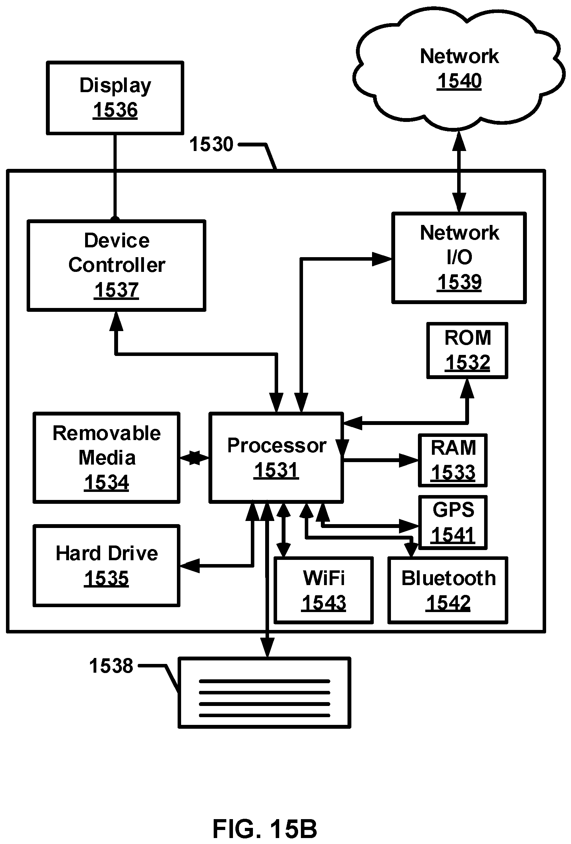

FIG. 15B shows example elements of a computing device that may be used to implement any of the various devices described herein, including, for example, the base station 160A, 160B, 162A, 162B, 220, 1210, 1302, 1720, 1760, 1810, 1830, 1850, 1910, 1930, and/or, 1950, the wireless device 106, 156A, 156B, 210, 1205, 1301, 1700, 1740, 1800, 1820, 1840, 1900, 1920, and/or, 1940, or any other base station, wireless device, AMF, UPF, network device, or computing device described herein. The computing device 1530 may include one or more processors 1531, which may execute instructions stored in the random-access memory (RAM) 1533, the removable media 1534 (such as a Universal Serial Bus (USB) drive, compact disk (CD) or digital versatile disk (DVD), or floppy disk drive), or any other desired storage medium. Instructions may also be stored in an attached (or internal) hard drive 1535. The computing device 1530 may also include a security processor (not shown), which may execute instructions of one or more computer programs to monitor the processes executing on the processor 1531 and any process that requests access to any hardware and/or software components of the computing device 1530 (e.g., ROM 1532, RAM 1533, the removable media 1534, the hard drive 1535, the device controller 1537, a network interface 1539, a GPS 1541, a Bluetooth interface 1542, a WiFi interface 1543, etc.). The computing device 1530 may include one or more output devices, such as the display 1536 (e.g., a screen, a display device, a monitor, a television, etc.), and may include one or more output device controllers 1537, such as a video processor. There may also be one or more user input devices 1538, such as a remote control, keyboard, mouse, touch screen, microphone, etc. The computing device 1530 may also include one or more network interfaces, such as a network interface 1539, which may be a wired interface, a wireless interface, or a combination of the two. The network interface 1539 may provide an interface for the computing device 1530 to communicate with a network 1540 (e.g., a RAN, or any other network). The network interface 1539 may include a modem (e.g., a cable modem), and the external network 1540 may include communication links, an external network, an in-home network, a provider's wireless, coaxial, fiber, or hybrid fiber/coaxial distribution system (e.g., a DOCSIS network), or any other desired network. Additionally, the computing device 1530 may include a location-detecting device, such as a global positioning system (GPS) microprocessor 1541, which may be configured to receive and process global positioning signals and determine, with possible assistance from an external server and antenna, a geographic position of the computing device 1530.

The example in FIG. 15B may be a hardware configuration, although the components shown may be implemented as software as well. Modifications may be made to add, remove, combine, divide, etc. components of the computing device 1530 as desired. Additionally, the components may be implemented using basic computing devices and components, and the same components (e.g., processor 1531, ROM storage 1532, display 1536, etc.) may be used to implement any of the other computing devices and components described herein. For example, the various components described herein may be implemented using computing devices having components such as a processor executing computer-executable instructions stored on a computer-readable medium, as shown in FIG. 15B. Some or all of the entities described herein may be software based, and may co-exist in a common physical platform (e.g., a requesting entity may be a separate software process and program from a dependent entity, both of which may be executed as software on a common computing device).

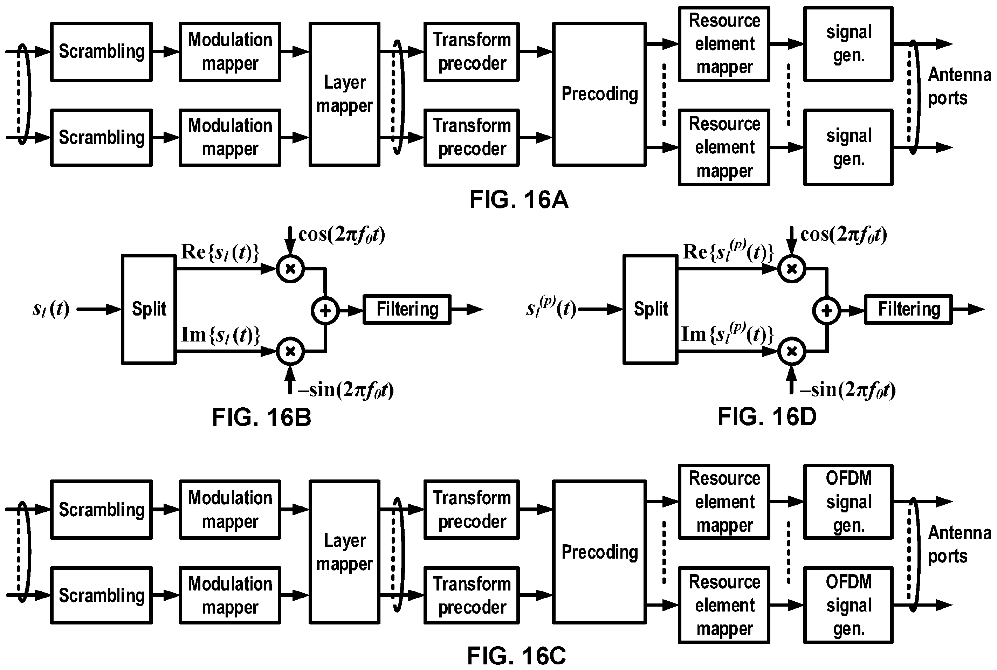

FIG. 16A shows an example structure for uplink transmission. Processing of a baseband signal representing a physical uplink shared channel may comprise/perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA), CP-OFDM signal for an antenna port, or any other signals; and/or the like. An SC-FDMA signal for uplink transmission may be generated, for example, if transform precoding is enabled. A CP-OFDM signal for uplink transmission may be generated, for example, if transform precoding is not enabled (e.g., as shown in FIG. 16A). These functions are examples and other mechanisms for uplink transmission may be implemented.

FIG. 16B shows an example structure for modulation and up-conversion of a baseband signal to a carrier frequency. The baseband signal may be a complex-valued SC-FDMA, CP-OFDM baseband signal (or any other baseband signals) for an antenna port and/or a complex-valued Physical Random Access Channel (PRACH) baseband signal. Filtering may be performed/employed, for example, prior to transmission.

FIG. 16C shows an example structure for downlink transmissions. Processing of a baseband signal representing a physical downlink channel may comprise/perform one or more functions. The one or more functions may comprise: scrambling of coded bits in a codeword to be sent/transmitted on/via a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are examples and other mechanisms for downlink transmission may be implemented.

FIG. 16D shows an example structure for modulation and up-conversion of a baseband signal to a carrier frequency. The baseband signal may be a complex-valued OFDM baseband signal for an antenna port or any other signal. Filtering may be performed/employed, for example, prior to transmission.

A wireless device may receive, from a base station, one or more messages (e.g. RRC messages) comprising configuration parameters of a plurality of cells (e.g., a primary cell, one or more secondary cells). The wireless device may communicate with at least one base station (e.g., two or more base stations in dual-connectivity) via the plurality of cells. The one or more messages (e.g. as a part of the configuration parameters) may comprise parameters of PHY, MAC, RLC, PCDP, SDAP, RRC layers for configuring the wireless device. The configuration parameters may comprise parameters for configuring PHY and MAC layer channels, bearers, etc. The configuration parameters may comprise parameters indicating values of timers for PHY, MAC, RLC, PCDP, SDAP, RRC layers, and/or communication channels.

A timer may begin running, for example, after (e.g., as soon as) it is started and continue running until it is stopped or until it expires. A timer may be started, for example, if it is not running or restarted if it is running. A timer may be associated with a value (e.g., the timer may be started or restarted from a value or may be started from zero and expire after (e.g., as soon as) it reaches the value). The duration of a timer may not be updated, for example, until the timer is stopped or expires (e.g., due to BWP switching). A timer may be used to measure a time period/window for a process. With respect to an implementation and/or procedure related to one or more timers or other parameters, it will be understood that there may be multiple ways to implement the one or more timers or other parameters. One or more of the multiple ways to implement a timer may be used to measure a time period/window for the procedure. A random access response window timer may be used for measuring a window of time for receiving a random access response. The time difference between two time stamps may be used, for example, instead of starting a random access response window timer and determine the expiration of the timer. A process for measuring a time window may be restarted, for example, if a timer is restarted. Other example implementations may be configured/provided to restart a measurement of a time window.

In at least some wireless communications, a wireless device may send (e.g., transmit) a CSI report, for example, based on its own measurement of channel conditions. For example, in such wireless device-initiated CSI reporting, the wireless device may send (e.g., transmit), to a base station, a PUCCH message to request an uplink resource for sending (e.g., transmitting) the CSI report. After sending (e.g., transmitting) the PUCCH message, the wireless device may receive, from the base station, DCI scheduling a PUSCH transmission. However, the base station may fail to receive/decode the PUCCH message. For example, the base station may send (e.g., transmit) the DCI scheduling the PUSCH transmission before receiving/decoding the PUCCH message. If the base station sends (e.g., transmits) the DCI without detecting the PUCCH message, and the wireless device multiplexes the CSI report in the PUSCH message, the base station may fail to correctly receive/decode the PUSCH message. Such misalignment may lead to increased error rates. Consequently, the wireless device and the base station may become misaligned with respect to the multiplexing of the wireless device-initiated CSI report in the PUSCH transmission. Therefore, multiplexing of the wireless device-initiated CSI report in a PUSCH transmission may need to be improved.

As described herein, misalignment between a wireless device and a base station may be reduced. For example, DCI may be used to schedule/trigger a wireless device-initiated CSI report. The DCI may include an additional field (e.g., a 1-bit field, wireless device-initiated beam report request/indicator/indication/flag, wireless device-initiated CSI report request/indicator/indication/flag, and/or the like) indicating transmission/request of the wireless device-initiated CSI report. For example, a first value (e.g., 0 or any other first value) of the new field may indicate that the wireless device-initiated CSI report may not be sent. A second value (e.g., 1 or any other second value) of the new field may indicate that the wireless device-initiated CSI report may be sent. A CRC of the DCI may be scrambled with an RNTI used to indicate an uplink resource for wireless device-initiated CSI reporting on PUSCH. This scrambling may enable the wireless device to identify and/or respond only to DCI messages associated with the wireless device-initiated CSI report.

Additionally or alternatively, a wireless device may determine whether to send a wireless device-initiated CSI report, for example, based on the timing of DCI reception. For example, the timing of the DCI reception/detection relative to the wireless device's PUCCH transmission may be used to determine whether to multiplex the wireless device-initiated CSI report. The wireless device may determine to send (e.g., transmit) the CSI report if the DCI is received after the PUCCH transmission that may request an uplink resource (e.g., PUSCH resource) for sending (e.g., transmitting) the wireless device-initiated CSI report or notifies the intention to send (e.g., transmit) the wireless device-initiated CSI report. The wireless device may determine not to send the wireless device-initiated CSI report if the DCI is received before the PUCCH transmission. By including an additional field (e.g., 1-bit field or any other quantity of bits) in the DCI and/or based on the reception timing of the DCI relative to the PUCCH transmission, misalignment between the wireless device and the base station in multiplexing the wireless device-initiated CSI report may be reduced, leading to increased data rates and/or more reliable wireless communication.

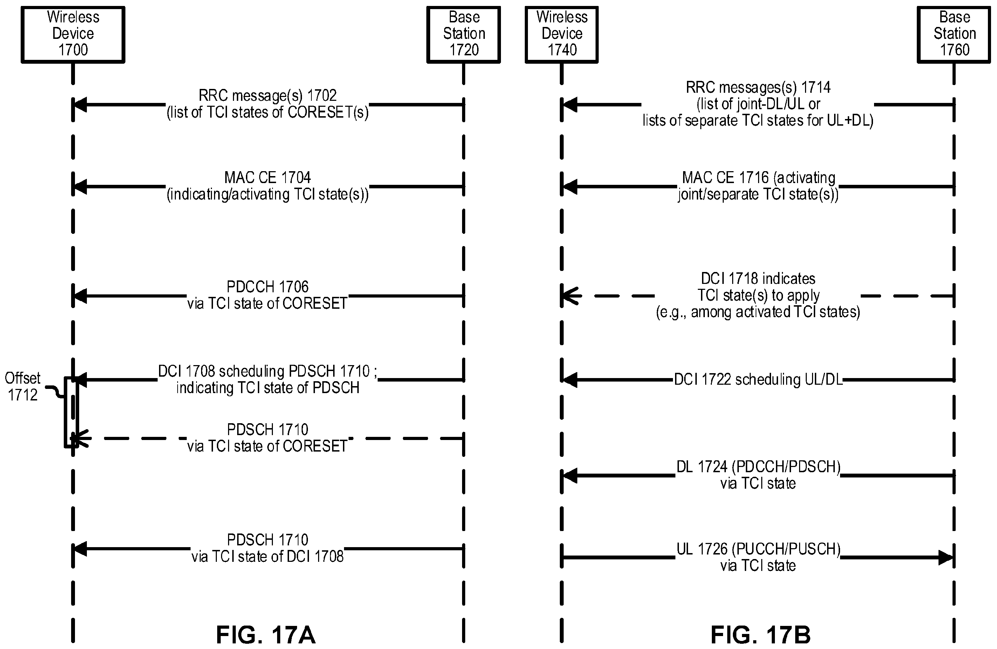

FIG. 17A shows an example method for beam indication based on TCI states. FIG. 17B shows an example method for beam indication based on TCI states. For example, FIG. 17A shows an example of a wireless device 1700 receiving, from a base station 1720, channel-specific beam indications for separate downlink physical channels, such as the PDCCH and the PDSCH. For example, FIG. 17B shows an example of a wireless device 1740 receiving, from a base station 1760, beam indications applicable (jointly) to multiple physical channels (i.e., common among physical channels), such as TCI states for downlink receptions and/or uplink transmissions. This approach of using a TCI state for multiple physical channels as shown in FIG. 17B may be referred to as a unified TCI framework.

As shown in FIG. 17A, wireless device 1700 may receive one or more RRC messages 1702 from base station 1720. One or more RRC messages 1702 may indicate one or more TCI states for one or more CORESETs. For example, RRC messages 1702 may comprise a list of TCI states (e.g., a list of IDs of TCI states) for CORESETs of wireless device 1700.

Each TCI state may indicate one or more reference signals. For example, each TCI state may comprise one or more IDs of one or more reference signals. The one or more reference signals of a TCI state may be used for channel estimation (including beam determination) such that a signal that is quasi co-located (QCL'd) with the reference signal of a TCI state may experience the same channel conditions (e.g., distortions) and properties as the reference signal of the TCI state and therefore the effects of the channel on the signal may be inferred from the effects of the channel on the reference signal as the reference signal is a known sequence (e.g., a pilot signal).

A TCI state may indicate which, so-called, large-scale channel properties may be inferred from the QCL association between a signal and a reference signal of a TCI state. To do so, each of the one or more reference signals of a TCI state may be associated with a QCL type. For example, there may be four QCL types, such as QCL-Type A, QCL-Type B, QCL-Type C, and QCL-Type D. QCL-Type A may be used to estimate Doppler shift, Doppler spread, average delay, and delay spread. QCL-Type B may be used to estimate Doppler shift and Doppler spread. QCL-Type C may be used to estimate average delay and Doppler shift. QCL-Type D may be used for spatial domain parameters (e.g., one or more parameters for spatial domain reception filters used to receive downlink signals).

A reference signal of a TCI state with a QCL type of QCL-Type D may be used for beam determination. Wireless device 1700 may determine (e.g., assume or infer) that base station 1720 may use/apply the same spatial (domain) filter to both the signal and the reference signal of the TCI states, for example, if a signal is QCL'd with a reference signal of a TCI state with QCL-Type D. Wireless device 1700 may apply a spatial domain (reception) filter suitable to receive the signal, for example, by being able to determine (e.g., assume or infer) the spatial domain (transmission) filter used/applied by base station 1720 to a signal (from the spatial domain filter used/applied to the QCL'd reference signal).

As described with respect to FIG. 17A, wireless device 1700 receives one or more RRC messages 1702 that indicate TCI states. For example, one or more RRC messages 1702 may comprise a list of TCI states of a CORESET (e.g., a list of IDs of TCI states). Wireless device 1700 may use the TCI states in the list for receiving PDCCHs on the CORESETs. The TCI states indicated by one or more RRC messages 1702 may be referred to as configured TCI states or RRC-configured TCI states.

FIG. 17A shows that wireless device 1700 may receive MAC CE 1704 from base station 1720. MAC CE 1704 may indicate, or activate, one or more TCI states configured by one or more RRC messages 1702. For example, MAC CE 1704 may indicate a (e.g., single) TCI state for one or more CORESETs (e.g., for PDCCH receptions via the one or more CORESETs). For example, MAC CE 1704 may activate a plurality of TCI states that may be used (applied) for PDCCH receptions via CORESETs. The TCI states indicated by MAC CE 1704 may be referred to as activated TCI states or MAC-CE activated TCI states.

Wireless device 1700 may determine one or more spatial (domain) filter parameters based on a reference signal of the TCI state. For example, FIG. 17A shows that wireless device 1700 may receive PDCCH 1706, of a CORESET, via a TCI state of the CORESET.

For PDSCH reception, a DCI may be used to indicate which TCI state, among the (MAC-CE) activated TCI states (e.g., for the CORESETs), wireless device 1700 may be to use (apply) for receiving PDSCH receptions (e.g., data, transport blocks, code block groups of a transport block). For example, wireless device 1700 may receive DCI 1708. DCI 1708 may schedule a PDSCH transmission and indicate which TCI state, among the activated TCI states, wireless device 1700 may be to use (apply) for receiving the PDSCH transmission. A TCI state indicated by a DCI may be referred to as an indicated TCI state. For example, the TCI state indicated by a MAC CE that indicates one TCI state (e.g., a single TCI state) may be referred to as an indicated TCI state.

Wireless device 1700 may apply a different TCI state depending on an offset (e.g., in scheduling) between receiving DCI 1708 and the PDSCH reception, for example, although DCI 1708 indicates a TCI state to use for receiving the scheduled PDSCH reception. For example, DCI 1708 may schedule PDSCH reception 1710 within an offset 1712. Offset 1712 may be referred to as a scheduling offset. Offset 1712 may be a duration or a quantity/number of symbols. Offset 1712 may be based on a wireless device-capability of wireless device 1700.

Wireless device 1700 may use/apply the TCI state of the CORESET, for example, based on base station 1720 scheduling, via DCI 1708, the PDSCH reception 1710 within offset 1712. Wireless device 1700 may use/apply the TCI state used to receive PDCCH 1706 (e.g., and does not apply the TCI state indicated by DCI 1708 for receiving PDSCH reception 1710).

Within offset 1712, wireless device 1700 may be unable to (successfully) decode DCI 1708, update the spatial filtering, and/or retune RF chains in time for receiving PDSCH reception 1710. By using the TCI state of the CORESET used to receive PDCCH 1706 (instead of the TCI state indicated in DCI 1708 for receiving the PDSCH reception 1710), this may allow wireless device 1700 to receive PDSCH reception 1710 within offset 1712.

Wireless device 1700 may apply the TCI state indicated by DCI 1708 for receiving PDSCH reception 1710, for example, if PDSCH 1710 is scheduled after offset 1712. For example, FIG. 17A shows that wireless device 1700 may receive, from base station 1720, PDSCH reception 1710 via the TCI state indicated by DCI 1708. Wireless device 1700 may apply the TCI state of the CORESET for PDSCH reception 1710, for example, based on (e.g., in response to) DCI 1708 not comprising a field indicating a TCI state (any TCI state) for PDSCH reception 1710 (e.g., based on a DCI format of DCI 1708, such as DCI 1_0).

As shown in FIG. 17A, base station 1720 may send (e.g., transmit) separate beam indications for the PDCCH and the PDSCH, along with separate beam indications for each PDSCH transmission. FIG. 17B shows an example of a unified TCI state framework. Under the unified TCI state framework, a single TCI state (or a set of TCI states) may be indicated for each of the downlink physical channels, such as a single TCI state for both PDCCH and PDSCH transmissions. A TCI state that may be used/applied to both the PDCCH and PDSCH may be referred to as a downlink TCI state or a joint-downlink TCI state (joint may refer to a TCI state being jointly used/applied to different physical channels). For uplink beam indications under the unified TCI state framework, the network may indicate a TCI state (or a set of TCI states) for each of the uplink physical channels, such as a single TCI state for both PUCCH and PUSCH transmissions. A TCI state that may be used/applied to both the PUCCH and PUSCH may be referred to as an uplink TCI state or a joint-uplink TCI state.

The unified TCI state framework may also be used to indicate a single TCI state (or a set of TCI states) for both downlink and uplink, for example, in addition to providing TCI states that may be (jointly) used/applied to each of the physical channels in the downlink or uplink. The TCI state is used for each of the physical channels of the downlink and uplink, such as the PDCCH, PDSCH, PUCCH, and PUSCH. A TCI state applicable to both downlink and uplink, the TCI state may be referred to as a joint TCI state, a joint DL/UL TCI state, or a common TCI state. A TCI state applicable to the unified TCI state framework, the TCI state may be referred to as a unified TCI state.

As described with respect to FIG. 17B, wireless device 1740 may receive, from base station 1760, one or more RRC messages 1714. One or more RRC messages 1714 indicates a plurality of TCI states. The plurality of TCI states may be a plurality of unified TCI states. As an example, one or more RRC messages 1714 may comprise a list of the plurality of TCI states. The list of the plurality of TCI states may be a list of joint (downlink-and-uplink) TCI states, which may be used/applied to both the downlink and uplink (e.g., each of the downlink and uplink physical channels). The list of joint TCI states may be a list of downlink TCI states (or joint-downlink TCI states), and the absence of a (separate) list of uplink TCI states may imply that the list of downlink TCI states is applicable to both the downlink and uplink (physical channels). For example, one or more RRC messages 1714 may comprise separate lists of TCI states for downlink and uplink. For example, the list of the plurality of TCI states may comprise a list of downlink TCI states and a list of uplink TCI states. Additionally or alternatively, one or more RRC messages 1714 may comprise a parameter indicating that the TCI states are joint (e.g., TCI states are applicable for both downlink and uplink) or separate (e.g., TCI states are applicable to downlink or uplink).

One or more RRC messages 1714 may indicate one (e.g., a single) TCI state instead of a plurality of TCI states. Based on (e.g., in response to) one or more RRC messages 1714 indicating one TCI state, wireless device 1740 may (e.g.,

start to) apply the TCI state without additional signaling via MAC CE and/or DCI.

The plurality of TCI states indicated by one or more RRC messages 1714 may be referred to as configured TCI states or RRC-configured TCI states, for example, similar to the TCI states indicated by one or more RRC messages 1702 of FIG. 17A. There may be two mechanisms for indicating which TCI state, among the plurality of TCI states configured by one or more RRC messages 1714, to use (apply) to transmissions between wireless device 1740 and base station 1760. In a first mechanism, wireless device 1740 receives a MAC CE 1716. MAC CE 1716 indicates a (e.g., single) TCI state, or multiple TCI states, among the plurality of TCI states indicated by one or more RRC messages 1714 (i.e., among the (RRC-)configured TCI states). For example, a field of MAC CE 1716 may indicate a (e.g., single) value (e.g., a single value or a single codepoint) that is associated with one TCI state or more TCI states (e.g., one codepoint associated with two TCI states) among the plurality of TCI states indicated by one or more RRC messages 1714.

MAC CE 1716 may indicate a TCI state to be used/applied to downlink and uplink. For example, MAC CE 1716 may indicate, or comprise, an ID of a TCI state among TCI states in a list of downlink TCI states (joint-downlink TCI states). For example, MAC CE 1716 may indicate separate TCI states for downlink and uplink. For example, MAC CE 1716 may indicate an ID of a TCI from the TCI states in a list of downlink TCI states (joint-downlink TCI states) and an ID of a TCI state from TCI states in a (separate) list of uplink TCI states. To indicate the one or more TCI states, MAC CE 1716 may comprise a field and a value of the field may correspond to an ID of the TCI state. Additionally or alternatively, MAC CE 1716 may have an indicator associated with the field (e.g., in the same octet) that indicates whether the indicated TCI state is an uplink TCI or a downlink TCI state (e.g., the ID of the TCI state is from the list of downlink TCI states or from the list of uplink TCI states configured by one or more RRC messages 1714).

Both MAC CE and DCI signaling may be involved, for example, in a second mechanism for indicating which TCI state to use (apply). As shown in FIG. 17B, wireless device 1740 may receive MAC CE 1716. MAC CE 1716 may indicate activation of a plurality of TCI states. For example, fields of MAC CE 1716 may indicate a plurality of values (e.g., codepoints) that are associated with the plurality of TCI states (e.g., each codepoint being associated one or more TCI states) among the plurality of TCI states indicated by one or more RRC messages 1714. The TCI states activated by MAC CE 1716 may be referred to as activated TCI states. Wireless device 1740 may receive DCI 1718. DCI 1718 may indicate a TCI state among the TCI states activated by MAC CE 1716. Based on DCI 1718 indicating the TCI state among the (MAC-CE) activated TCI states, wireless device 1740 use/apply the (DCI-)indicated TCI state for receiving transmissions on physical channels.

DCI 1718 may indicate one or more TCI states, for example, similar to MAC CE 1716. For example, DCI 1718 may indicate a TCI state for downlink receptions (e.g., from among the plurality of TCI states activated by MAC CE 1716). DCI 1718 may indicate a TCI state for uplink transmissions (e.g., from among the plurality of TCI states activated by MAC CE 1716). As example of indicating a TCI state, DCI 1718 may comprise a field to indicate the one or more TCI states. The field may be referred to as a TCI state field. A value (e.g., a codepoint) of the TCI state field of DCI 1718 may be associated with one or more TCI states. For example, a value of the TCI state field may indicate a TCI state to be used/applied to downlink transmission, a value of the TCI state field may indicate a TCI state to be used/applied to uplink transmissions, and/or a value of the TCI state field may indicate (both) a TCI to be used/applied to downlink transmissions and a TCI state to be used/applied to uplink transmissions. One or more RRC messages 1714 may indicate the association between the vales (e.g., codepoints) of the TCI state field of DCI 1718 and the IDs of the plurality of TCI states (configured by one or more RRC messages 1714 and activated by MAC CE 1716).

A TCI state indicated by MAC CE 1716 and/or DCI 1718 may be referred to as an updated TCI state, and the indicating by MAC CE 1716 and/or DCI 1718 may be referred to as updating the (current) TCI state. MAC CE 1716 (in the first mechanism) may be said to update the (indicated) TCI state, for example, by indicating a TCI state for downlink and/or uplink. DCI 1718 may be said to update the (indicated) TCI state, for example, if MAC CE 1716 indicates activation of TCI states and DCI 1718 indicates a TCI state for downlink and/or uplink.

Wireless device 1740 may use/apply the TCI state to receive downlink receptions and/or send (e.g., transmit) uplink transmissions, for example, if (or after) the TCI state is indicated by MAC CE 1716 and/or DCI 1718. The (indicated) TCI state may remain as the TCI state that wireless device 1740 use/apply to (subsequent) downlink receptions and uplink receptions (e.g., until the TCI state is indicated, or updated, by a subsequent MAC CE and/or DCI).

As described with respect to FIG. 17B, wireless device 1740 may receive a DCI 1722 from base station 1760. DCI 1722 may schedule one or more downlink transmissions and/or schedules (or triggers) one or more uplink transmissions. Wireless device 1740 may receive downlink transmission 1724 via the TCI state (indicated by MAC CE 1716 and/or DCI 1718). Additionally or alternatively, wireless device 1740 may send (e.g., transmit) uplink transmission 1726 via the TCI state (indicated by MAC CE 1716 and/or DCI 1718).

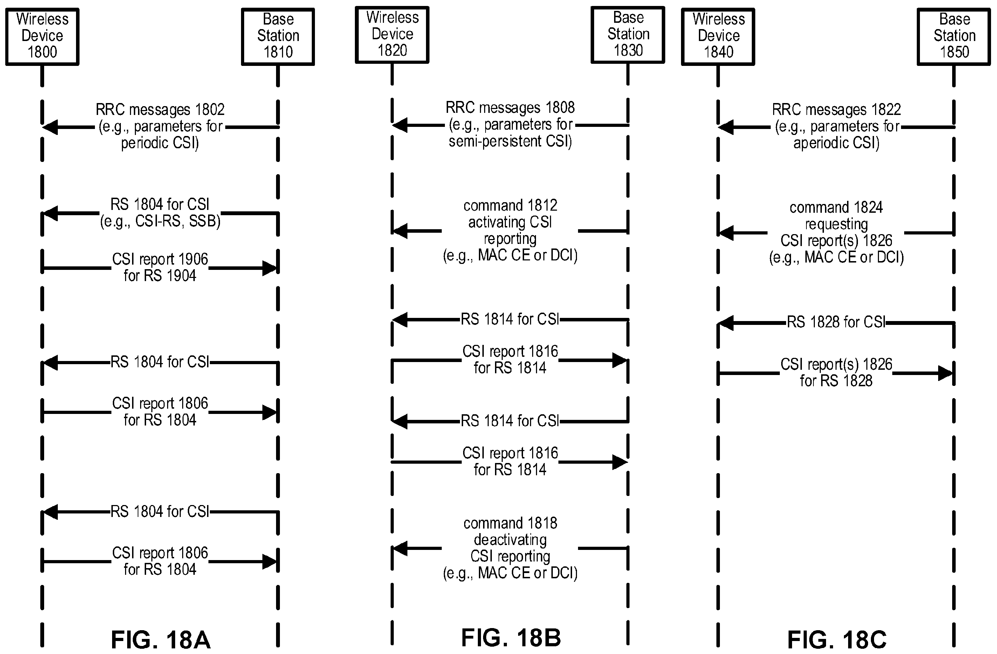

FIGs. 18A, 18B, and 18C show example methods for CSI reporting triggered by the network (e.g., a base station). FIG. 18A shows an example of periodic CSI reporting in which a wireless device 1800 periodically may send (e.g., transmit) CSI reports to a base station 1810. FIG. 18B shows an example of semi-persistent CSI reporting in which a wireless device 1820, after receiving an activation command from a base station 1830, periodically may send (e.g., transmit) CSI reports to base station 1830 until wireless device 1820 receives a deactivation command from base station 1830. FIG. 18C shows an

EP 4 648 344 A1

example of aperiodic CSI reporting in which a wireless device 1840 receives, from a base station 1850, a request to send (e.g., transmit) one or more aperiodic CSI reports to base station 1850 (e.g., a plurality of aperiodic CSI reports may be requested, which are not periodically sent (e.g., transmitted).

FIG. 18A shows wireless device 1800 receives, from base station 1810, one or more RRC messages 1802. One or more RRC messages 1802 may indicate, or comprise, parameters for periodic CSI reporting. The parameters for periodic CSI reporting may comprise, for example, one or more CSI reporting configuration parameters, such as a CSI report configuration and/or a resource configuration of reference signals (e.g., resources of reference signals).

One or more RRC messages 1802 may indicate a periodicity for CSI reporting. This may be referred to as a report periodicity type. The periodicity may indicate that report periodicity type is periodic or semi-persistent. In FIG. 18A, the one or more parameters for periodic CSI reporting, in one or more RRC messages 1802, may indicate that the periodicity for CSI reporting is periodic (e.g., the periodicity is set to periodic).

The one or more parameters for periodic CSI reporting (e.g., in the CSI report configuration), of one or more RRC messages 1802, may indicate one or more quantities to measure and report. A quantity to measure and report may be referred to as a report quantity, a quantity, or a radio link quality. The report quantity of the one or more configuration parameters for periodic CSI reporting may indicate to report one or a combination of any one of the following report quantities: channel quality indicator (CQI), a rank indicator (RI), a precoder-matrix indicator (PMI), a (e.g., strongest) layer indicator (LI or SLI), and/or a layer-1 RSRP (L1-RSRP).

The one or more parameters for periodic CSI reporting, of one or more RRC messages 1802, may indicate the (downlink) reference signals that wireless device 1800 measures to report the report quantity. For example, one or more parameters may indicate a reference signal from reference signals in a reference signal configuration. The reference signals and configurations of reference signals may be referred to as resource sets (e.g., of reference signals) and configuration of resource sets (e.g., for reference signals). The types of reference signals indicated by the one or more parameters may be CSI-RSs and/or SSBs. For example, the reference signal configuration may be a (non-zero power) CSI-RS resource set, which configures a set of CSI-RSs or a set of SSBs for CSI. The set of CSI-RSs may be one or more CSI-RSs (e.g., one CSI-RS may be configured in the set) and the set of SSBs may be one or more SSBs (e.g., one SSB may be configured in the set). As with CSI reports, there may be three types of periodicities of (downlink) reference signals that may be measured and reported. A reference signal may be a periodic reference signal, a semi-persistent reference signal, or an aperiodic reference signal. A semi-persistent reference signal is a reference signal with a periodicity that may be (e.g., dynamically) stopped or skipped based on signaling.

The CSI reporting periodicity and the periodicity of the reference signal may be different from each other. For example, periodic CSI reporting may be reported for periodic reference signals. Semi-persistent CSI reporting may be reported for periodic reference signals and/or semi-persistent reference signals. Aperiodic CSI reporting may be reported for periodic reference signals, semi-persistent reference signals, and/or aperiodic reference signals.

Wireless device 1800 may not receive any signaling to begin reporting CSI (other than one or more RRC messages 1802) from base station 1810, for example, in periodic CSI reporting. There may be no (trigger) condition for periodic CSI reporting. For example, FIG. 18A shows that wireless device 1800 receives (e.g., starts receiving) a reference signal 1804 from base station 1810, for example, if (or after) wireless device 1800 receives one or more RRC messages 1802. Reference signal 1804 may be a periodic reference signal (e.g., periodic CSI-RS or SSB), as described herein. One or more RRC messages 1808 may indicate reference signal 1804 to be used for the periodic CSI reporting (e.g., from a reference signal configuration). Wireless device may send (e.g., transmit) a CSI report 1806, for example, based on reference signal 1804 to base station 1810. CSI report 1806 may comprise the report quantity indicated by the one or more parameters for periodic CSI reporting in one or more RRC messages 1802. Wireless device 1800 may measure (e.g., a radio link quality) of reference signal 1804, for example, based on the report quantity indicated by one or more RRC messages 1802.

As shown in FIG. 18A, wireless device 1800 periodically may send (e.g., transmit) CSI report 1806 to base station 1810. While the same CSI report 1806 is shown (with the same type of report quantity), a value of the report quantity may change with each transmission of CSI report 1806, for example, based on reference signal 1804.

FIG. 18B shows an example of semi-persistent CSI reporting. For example, wireless device 1820 may receive one or more RRC messages 1808 from base station 1830. One or more RRC messages 1808 may comprise parameters for semi-persistent CSI reporting. One or more RRC messages 1808 may indicate, or comprise, the same parameters discussed above one or more RRC messages 1802 in FIG. 18A. For example, one or more RRC messages 1808 may indicate a periodicity for CSI reporting. The report periodicity type in one or more RRC messages 1808 may be semi-persistent (instead of periodic as in one or more RRC messages 1802). Additionally or alternatively, the report periodicity type may indicate one of two types of semi-persistent CSI reporting. For example, the report periodicity type may indicate semi-persistent CSI reporting on PUCCH or semi-persistent CSI reporting on PUSCH. In FIG. 18B, the report periodicity type may be semi-persistent on PUSCH.

One or more RRC messages 1808 may indicate a report quantity and (downlink) reference signals for the semi-persistent CSI reporting (on PUCCH or PUSCH), for example, similar to one or more RRC messages 1802. The parameters for semi-persistent CSI reporting may indicate a periodic reference signal or a semi-persistent reference signal for wireless device 1820 to measure and report to base station 1830.

Semi-persistent CSI reporting is similar to periodic CSI reporting except that signaling may be involved to activate and deactivate the CSI reporting. For example, wireless device 1820 may receive a command 1812 indicating activation of the (semi-persistent) CSI reporting. Command 1812 may be an activation command. For example, command 1812 may be a MAC CE indicating activation of the semi-persistent CSI reporting (e.g., on PUCCH) or a DCI indicating activation of semi-persistent CSI reporting (e.g., on PUSCH). Wireless device 1820 may (start) receiving a reference signal 1814 for CSI reporting (e.g., CSI-RS or SSB), for example, if (or after) receiving command 1812. For example, wireless device 1820 may not receive (e.g., measure) reference signal 1814, for example, until (after) wireless device 1820 receives command 1812 from base station 1830,

Wireless device 1820 (periodically) may send (e.g., transmit) a CSI report 1816 for reference signal 1814, for example, if (or after) base station 1830 indicates activation of semi-persistent CSI reporting via command 1812. CSI report 1816 may indicate the reporting quantity of reference signal 1814. The reporting quantity in CSI report 1816 may change over time based on measurements on reference signal 1814, for example, similar to (periodic) CSI report 1806 of FIG. 18A.

Wireless device 1820 may continue periodically sending (e.g., transmitting) CSI report 1816 until a deactivation command is received in semi-persistent CSI reporting. For example, wireless device 1820 may receive a command 1818 from base station 1830. Command 1818 may indicate deactivation of the (semi-persistent) CSI reporting. Command 1818 may be a deactivation command. For example, command 1818 may be a MAC CE indicating deactivation of the semi-persistent CSI reporting (e.g., on PUCCH) or a DCI indicating deactivation of semi-persistent CSI reporting (e.g., on PUSCH). Wireless device 1820 may stop sending/transmitting (and/or measuring) CSI report 1816 of reference signal 1814, for example, if (or after) receiving command 1818 indicating to deactivate (semi-persistent) CSI reporting.

FIG. 18C shows an example of aperiodic CSI reporting. For example, wireless device 1840 may receive one or more RRC messages 1822 from base station 1850. One or more RRC messages 1822 may comprise parameters for aperiodic CSI reporting.

One or more RRC messages 1822 may indicate, or comprise, the same parameters discussed above one or more RRC messages 1802 in FIG. 18A for periodic CSI reporting and/or one or more RRC messages 1808 for semi-persistent CSI reporting. For example, one or more RRC messages 1822 may indicate a periodicity for CSI reporting. The report periodicity type in one or more RRC messages 1822 is aperiodic (instead of periodic or semi-persistent).

One or more RRC messages 1822 may indicate a report quantity and (downlink) reference signals for the aperiodic CSI reporting (e.g., on PUSCH), for example, similar to one or more RRC messages 1802 for periodic CSI reporting and one or more RRC messages 1808 for semi-persistent CSI reporting. The parameters for aperiodic CSI reporting may indicate one or more reference signals for aperiodic CSI reporting. The types of reference signals for aperiodic CSI reporting may be periodic reference signals, semi-persistent reference signals, and/or aperiodic reference signals. The reference signals used for aperiodic CSI reports may be CSI-RSs and/or SSBs.

A base station 1850 may send (e.g., transmit) a DCI indicating a request for one or more aperiodic CSI reports, for example, for aperiodic CSI reporting. The request may be a CSI request field of the DCI. One or more RRC messages 1822 may indicate an association between reference signals or reference signal resource sets) and one or more bits of a CSI request field of a DCI. This allows base station 1850 to (dynamically) request (or trigger) wireless device 1840 to send (e.g., transmit) a CSI report for one or more of the reference signals (or reference signal resource sets). Additionally or alternatively, one or more RRC messages 1822 may indicate a size of the CSI request field of the DCI for requesting aperiodic CSI reports (e.g., a trigger size). The size of CSI request field may be 0, 1, 2, 3, 4, 5 or 6 bits depending on the size indicated by a parameter in (the parameters for aperiodic CSI reporting of) one or more RRC messages 1822.

Wireless device 1840 may receive a command 1824 from base station 1850, for example, if (or after) receiving one or more RRC messages 1822 in FIG. 18C. Command 1824 may request wireless device 1840 to send (e.g., transmit) one or more aperiodic CSI reports 1826 of one or more reference signals 1828. Command 1824 may be a DCI. One or more aperiodic CSI reports 1826 may be a plurality of aperiodic CSI reports.

The parameters for aperiodic CSI reporting in one or more RRC messages 1822 may not comprise uplink resources for sending (e.g., transmitting) aperiodic CSI reports 1826. For example, command 1824 may indicate uplink resources (e.g., comprises an uplink grant) for one or more CSI reports 1826. For example, wireless device 1840 may send (e.g., transmit) one or more CSI reports 1826 for one or more reference signals 1828. Wireless device 1840 may send (e.g., transmit) the one or more CSI reports 1826 on the PUSCH.

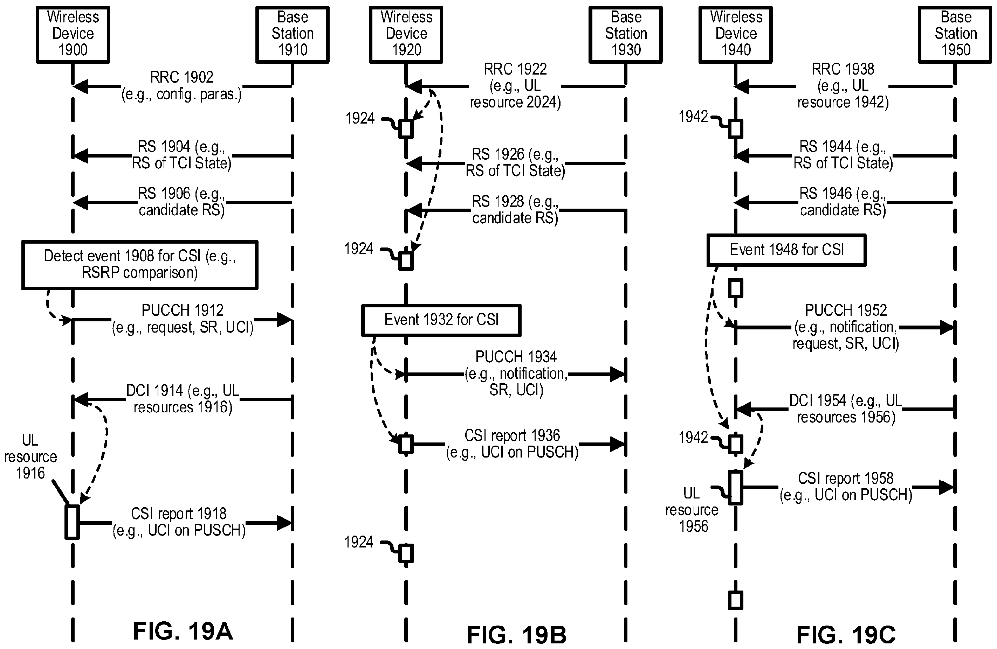

FIGs. 19A, 19B, and 19C show example procedures for CSI reporting triggered (initiated) by the wireless device independently of the network. In periodic CSI reporting, semi-persistent CSI reporting, and aperiodic CSI reporting as shown in FIGs. 18A, 18B, and 18C, respectively, the network acts as a scheduler of CSI reporting and triggers the wireless device to send (e.g., transmit) CSI reports. In the CSI reporting shown in FIGs. 19A, 19B, and 19C, the wireless device may initiate (or trigger) CSI reporting. The example procedures in FIGs. 19A, 19B, and 19C may be used to provide the network with CSI for use in updating a (current) TCI state, such as a TCI state used in the unified TCI framework (e.g., for downlink, uplink, and/or both downlink and uplink) as shown in FIG. 17B.

CSI reporting triggered by a wireless device may be referred to event-driven CSI reporting, event-based CSI reporting, wireless device-initiated CSI reporting, wireless device-initiated beam reporting, or wireless device-initiated beam management. For example, a procedure for CSI reporting triggered by the wireless device may be referred to as an event-driven CSI reporting procedure, an event-based CSI reporting procedure, a wireless device-initiated CSI reporting procedure, a wireless device-initiated beam reporting procedure, or a wireless device-initiated beam management procedure. A CSI report, based on CSI reporting triggered by the wireless device, may be referred to as an event-driven CSI report, an event-based CSI report, a wireless device-initiated CSI report, a wireless device-initiated beam report, or a wireless device-initiated beam management report. Furthermore, the terms "event-driven," "event-based," "event-triggered," "wireless device-initiated," "wireless device-triggered," "terminal-initiated," and "terminal-triggered" may be used to refer to CSI reporting triggered by a wireless device and CSI reports based on the same.

FIG. 19A shows a first mode of wireless device-initiated CSI reporting in which a wireless device 1900 uses (dynamic) uplink grants to send (e.g., transmit) wireless device-initiated CSI reporting to a base station 1910. FIG. 19B shows a second mode of wireless device-initiated CSI reporting in which a wireless device 1920 may use preconfigured uplink resources for reporting wireless device-initiated CSI reports to a base station 1930. FIG. 19C shows a scenario in which a wireless device 1940 and a base station 1950 use a combination of the first mode of FIG. 19A (using dynamic uplink grants) and the second mode of FIG. 19B (using preconfigured uplink resources) for sending (e.g., transmitting) wireless device-initiated CSI reporting.

As shown in FIG. 19A, wireless device 1900 may receive one or more RRC messages 1902 from base station 1910. One or more RRC messages 1902 may indicate, or comprise, one or more CSI reporting configuration parameters for CSI reporting (e.g., wireless device-initiated CSI reporting).

The one or more CSI reporting configuration parameters, in one or more RRC messages 1902, may comprise a report configuration type parameter. The report configuration type parameter may indicate that the CSI reporting, of the one or more CSI reporting configuration parameters, may be based on wireless device 1900 detecting an event. For example, the report configuration type parameter may be set to event-triggered (or wireless device-initiated).

The event may be a result from a comparison of a radio link quality of a reference signal to a reference signal of a TCI state. The reference signal of the TCI state may be referred to as a current reference signal or a reference signal of a current TCI state (e.g., a TCI state that has been indicated by a MAC CE for downlink and/or uplink or a TCI state that has been activated by a MAC CE and indicated by a DCI, as described in connection with FIG. 17B). A QCL type of the reference signal of the TCI, used for the comparison, may be QCL-Type D. The reference signal that wireless device 1900 compares to the current reference signal of the TCI state, for detecting the event, may be referred to a candidate reference signal.

The event may be that the radio link quality of the candidate reference signal is a threshold value better than (e.g., higher than, greater than, etc.) a radio link quality of a reference signal of a TCI state. For example, the event may be that the radio link quality of the candidate reference signal is better (e.g., higher) than a radio link quality of a current reference signal of a TCI state by a threshold value. The amount that the radio link quality of the candidate reference signal is better (e.g., higher or greater than) the radio link quality of the current reference signal of the TCI state may be greater than, or equal to, a threshold value.

One or more RRC messages 1902 may indicate the threshold value for detecting the event. For example, the threshold value may be preconfigured (e.g., predetermined without being signaled). The threshold value may be an RSRP value, an RSRP offset, an SINR value, or an SINR offset. The radio link quality may be a RSRP, a layer-1 RSRP, or a signal to interference-and-noise ratio (SINR). The radio link quality may be referred to as a report quantity. One or more RRC messages 1902 may indicate in the radio link quality to report (e.g., a report quantity).

The one or more CSI reporting configuration parameters may comprise a CSI resource parameter indicating a list of candidate reference signals. The list of candidate reference signals may be for CSI reporting triggered by the wireless device based on detecting the event. The list of candidate reference signals may be referred to as a list of candidate reference signals for wireless device-initiated CSI reporting or a reference signal resource set for wireless device-initiated CSI reporting.

The list of candidate reference signals may be a (e.g., wireless device-specific or dedicated) list of reference signals for CSI reporting triggered by wireless device 1900. For example, the list of candidate reference signals may be for a cell (e.g., common among wireless devices in the cell). For example, the list of reference signals for CSI reporting may be reference signals of TCI states indicated (e.g., configured) by one or more RRC messages 1902. For example, the list of reference signals for CSI reporting may be reference signals of TCI states activated by a MAC CE.

The one or more CSI reporting configuration parameters, indicated by one or more RRC messages 1902, may comprise an ID of a reference signal (resource) configuration. The reference signal configuration may be a CSI resource configuration ID. The reference signal configuration may indicate a list of one or more CSI-RS resource sets. The reference signals of the one or more CSI-RS resource sets may be CSI-RSs or SSBs.

The one or more CSI reporting configuration parameters may indicate PUCCH resources. The one or more CSI reporting configuration parameters may indicate a PUCCH resource among PUCCH resources of an uplink BWP. For example, the one or more CSI reporting configuration parameters, of one or more RRC messages 1902, may comprise an ID of a PUCCH resource among (IDs of) PUCCH resources of an uplink BWP.

The one or more CSI reporting configuration parameters may not indicate uplink resources for (transmitting) the CSI reporting, for example, in the first mode. The one or more CSI reporting configuration parameters may not indicate the uplink resources (e.g., PUSCH resources) for sending (e.g., transmitting) CSI reports triggered by wireless device 1900, for example, based on detecting an event. The absence of an indication of the uplink resources to be used for sending (e.g., transmitting) CSI reports triggered by wireless device 1900 may, for example, implicitly, indicate that the CSI reporting configuration parameters may be for a first mode of CSI reporting in which the uplink resources is to be requested from base station 1910 (e.g., a request for a dynamic grant).

The one or more CSI reporting configuration parameters may comprise a parameter indicating that CSI reporting, triggered by wireless device 1900, for example, based on detecting the event (e.g., wireless device-initiated or event-driven CSI reporting), may be enabled or activated. For example, the parameter may indicate that CSI reporting may be enabled, or activated, for a cell. For example, the parameter may indicate that CSI reporting is enabled, or activated, for an uplink BWP. Additionally or alternatively to the implicit indication, the parameter (or another parameter) may (explicitly) indicate a mode that is being configured among the first mode and the second mode.

The one or more CSI reporting configuration parameters may comprise one or more timer values of one or more timers for detecting the event. Each of the one or more timers may be associated with at least one candidate reference signal among the one or more candidate reference signals.

The one or more CSI reporting configuration parameters may comprise one or more maximum count values of one or more counters of a quantity/number of times the event is detected, for one or more candidate reference signals. Each of the one or more counters may be incremented (e.g., up to an associated maximum count value among the one or more maximum count values) based on (e.g., in response to) receiving an indication (e.g., from a PHY layer of wireless device 1900) that the one or more candidate reference signals satisfy the event. Each of the one or more counters may be associated with a (respective) candidate reference signal.

The one or more CSI reporting configuration parameters may comprise, or indicate, one or more configuration parameters of an SR (e.g., an SR configuration for the SR). The one or more configuration parameters of the SR may indicate a PUCCH resource, from among PUCCH resources in an uplink BWP, configured for the SR. The one or more configuration parameters of the SR indicate a periodicity and offset of the SR.

Wireless device 1900 may receive a reference signal 1904, of a TCI state, from base station 1910, for example, if (or after) receiving one or more RRC messages 1902. Reference signal 1904 is a current reference signal of a TCI (an indicated TCI state by MAC CE and/or DCI for downlink and/or uplink). Wireless device 1900 may receive a reference signal 1906. Reference signal 1906 may be a candidate reference signal for CSI reporting triggered by wireless device 1900. Reference signal 1906 may be from a list of candidate reference signals in one or more RRC messages 1902. For example, reference signal 1906 may be a reference signal of a TCI state among the (e.g., MAC CE) activated TCI states (other than reference signal 1904). For example, reference signal 1906 may be a reference signal of a TCI state among the (e.g., RRC) configured TCI states.

FIG. 19A shows that wireless device 1900 detects an event 1908 for CSI reporting (e.g., that triggers CSI reporting). For example, as an example of event 1908, wireless device 1900 may detect that a radio link quality (e.g., L1-RSRP, L1-SINR) of reference signal 1906 is a threshold value better than (e.g., greater than by at least a threshold value) than a radio link quality of reference signal 1904 of the TCI state.

Wireless device 1900 may send (e.g., transmit) PUCCH transmission 1912, for example, based on detecting event 1908 for CSI reporting. Wireless device 1900 may send (e.g., transmit) PUCCH transmission 1912 via one or more PUCCH resources indicated by one or more RRC messages 1902. For example, PUCCH transmission 1912 may be sent (e.g., transmitted) via the PUCCH resource indicated by one or more RRC messages 1902.

PUCCH transmission 1912 may request uplink resources for sending (e.g., transmitting) a CSI report. The uplink resources may be PUSCH resources. For example, PUCCH transmission 1912 may be SR. For example, PUCCH transmission 1912 may comprise a SR. A PUCCH format of PUCCH transmission 1912 may be PUCCH format 0 or PUCCH format 1. For example, PUCCH transmission 1912 may be a UCI.

Wireless device 1900 may receive DCI 1914 from base station 1910, for example, if (or after) sending (e.g., transmitting) PUCCH transmission 1912. DCI 1914 may indicate uplink resources 1916 for sending (e.g., transmitting) CSI reporting, for example, based on wireless device 1900 detecting event 1908. For example, DCI 1914 may comprise an uplink grant indicating uplink resources 1916. Uplink resources 1916 may be PUSCH resources.

Wireless device 1900 may send (e.g., transmit) a CSI report 1918 via uplink resources 1916, for example, if (or after) receiving DCI 1914. For example, CSI report 1918 may be a UCI (e.g., CSI report 1918 may be a type of UCI). Wireless device 1900 may send (e.g., transmit) the UCI on uplink resources 1916. The UCI (e.g., CSI report 1918) may be multiplexed on uplink resources 1916 (indicated by DCI 1914).

CSI report 1918 may comprise one or more radio link qualities and/or IDs of reference signals. For example, CSI report 1918 may comprise a radio link quality of (candidate) reference signal 1906. For example, CSI report 1918 may comprise an ID of reference signal 1906. For example, CSI report 1918 may comprise a radio link quality of (current) reference signal 1904 of the (indicated or current) TCI state. For example, CSI report 1918 may comprise a plurality of radio link qualities of a plurality of candidate reference signals.

The quantity/number of radio link qualities and/or reference signals indicated in CSI report 1918 may be one, greater than one, or less than or equal to a maximum quantity/number of radio link qualities for CSI reporting (e.g., one or more RRC messages 1902 may comprise a parameter indicating the maximum quantity/number of radio link qualities for CSI reporting triggered by wireless device 1900).

The one or more radio link qualities indicated by CSI report 1918 may be absolute values, or differential values, of one or more radio link qualities of reference signals. The radio link qualities may be RSRP values, L1-RSRP values, and/or SINR values.

Wireless device 1900 may monitor, detect, and/or report one or more events among a plurality of events for reporting CSI. A first event may be that a radio link quality of a candidate reference signal is a threshold value better than a radio link quality of a current reference signal of a TCI state. A second event may be that a radio link quality of a candidate reference signal is worse than a threshold. A third event may be that a radio link quality of a candidate reference signal is better than a threshold. A fourth event may be that a radio link quality of a reference signal, of a TCI state indicated by a control command, is worse than a first threshold and a radio link quality of at least one candidate reference signal is better than a second threshold. A fifth event may be that a difference between a radio link quality of a reference signal, of a TCI state indicated by a control command (e.g., DCI or MAC CE), and a radio link quality of at least one candidate reference signal is lower than a threshold. A sixth event may be that a radio link quality of the reference signal, of the TCI state indicated by the control command, is not among a quantity/number of candidate reference signals with a highest radio link quality. A seventh event may be that a radio link quality of at least one candidate reference signal is a threshold value better than a reference signal of a TCI state, indicated by a control command, with a worst radio link quality among reference signals of TCI states indicated by the control command. An eighth event may be that a radio link quality of at least one candidate reference signal is a threshold value better than a reference signal of a TCI state, indicated by a control command, with a highest radio link quality among reference signals of TCI states indicated by the control command. A ninth event may be that a radio link quality of a quantity/number of candidate reference signals become a threshold value better than the reference signal of the TCI state indicated by the control command. A tenth event may be that a radio link quality of at least one candidate reference signal becomes a threshold value better than a reference signal configured by one or more RRC messages. The one or more events may comprise any one or any combination of the first, second, third, fourth, fifth, sixth, seventh, eighth, ninth, and tenth events. For example, wireless device 1900 may monitor, detect, and/or report events other than those listed above.

CSI report 1918 may comprise an ID of the event. The ID of the event may be referred to as an event ID. Each of the events among a plurality of events may be associated with an event ID. For example, a first value of the event ID may indicate that the first event is detected (or satisfied). A second value of the event ID may indicate that the second event is detected. A third value of the event ID may indicate that the third event is detected. A fourth value of the event ID may indicate that the fourth event is detected. A fifth value of the event ID may indicate that the fifth event is detected. A sixth value of the event ID may indicate that the sixth event is detected. A seventh value of the event ID may indicate that the seventh event is detected. An eighth value of the event ID may indicate that the eighth event is detected. A ninth value of the event ID may indicate that the ninth event is detected. A tenth value of the event ID may indicate that the tenth event is detected.

Additionally or alternatively, PUCCH transmission 1912 may comprise, or indicate, an event ID. As an example of (implicitly) indicating an event ID, a set of PUCCH resources for PUCCH transmission 1912 may be associated with an event ID among the plurality of event IDs Base station 1910 may determine (e.g., infer) that the PUCCH transmission 1912 is for the associated event ID, for example, based on receiving PUCCH transmission 1912 via the set of PUCCH resources.

One or more RRC messages 1902 may comprise a list of the plurality of events and/or event IDs of the plurality of events. Each of the event IDs in CSI report 1918 (and/or PUCCH transmission 1912) may be associated with a respective reference signal (e.g., of a candidate reference signal or a reference signal of a TCI state) in CSI report 1918 (and/or PUCCH transmission 1912).

FIG. 19B shows a second mode of CSI reporting in which wireless device 1920 uses preconfigured uplink resources for reporting CSI, to base station 1930, based on wireless device 1920 detecting an event based on a radio link quality of a reference signal. The procedure, messages, and parameters in second mode shown in FIG. 19B may be the same as those discussed above in the first mode shown in FIG. 19A and the specific differences between the procedure, messages, and parameters in the second mode for CSI reporting based on preconfigured uplink resources will be discussed below.

Wireless device 1920 may receive one or more RRC messages 1922. One or more RRC messages 1922 may comprise, or indicate, the one or more CSI reporting configuration parameters (and other parameters) of one or more RRC messages 1902 (from FIG. 19A). The one or more CSI reporting configuration parameters of one or more RRC messages 1922 indicate uplink resources 1924 for (transmitting) CSI reporting triggered by wireless device 1920, for example, in contrast to the one or more CSI reporting configuration parameters of one or more RRC messages 1902. Uplink resources 1924 may be PUSCH resources or PUCCH resources for sending (e.g., transmitting) CSI reporting triggered by the wireless device 1920. Base station 1930 may send (e.g., transmit) the one or more CSI reporting configuration parameters of one or more RRC messages 1922 to wireless device 1920 based on receiving a wireless device-capability message from wireless device 1920 indicating that wireless device 1920 supports the second mode.

The presence of an indication of uplink resources 1924 may indicate to wireless device 1920 that the one or more CSI reporting configuration parameters, of one or more RRC messages 1922, are for the second mode of CSI reporting. For example, the one or more CSI reporting configuration parameters of one or more RRC messages 1922 may comprise a parameter indicating that one or more CSI reporting configuration parameters are for reporting (e.g., wireless device-initiated) CSI on preconfigured uplink resources (e.g., the second mode). The parameter may indicate that the (e.g., wireless device-initiated) CSI reporting on preconfigured uplink resources is enabled or activated. Additionally or alternatively, the parameter (or another parameter) may (explicitly) indicating a mode that is being configured among the first mode and the second mode.

One or more RRC messages 1922 may indicate a periodicity of uplink resources 1924 (e.g., a configured (uplink) grant). The periodicity of uplink resources 1924 is shown in FIG. 19B. Wireless device 1920 may send (e.g., transmit) a notification to base station 1930, for example, before sending (e.g., transmitting) CSI reporting. For example, FIG. 19B shows that wireless device 1920 receives a reference signal 1926. Reference signal 1926 is a (current) reference signal of a TCI state, for example, similar to reference signal 1904 of FIG. 19A. Wireless device 1920 receives a reference signal 1928. Similar to reference signal 1906 of FIG. 19A, reference signal 1928 may be a candidate reference signal.

Wireless device 1920 detects an event 1932 for CSI reporting (e.g., that triggers CSI reporting), for example, if (or after) receiving reference signal 1926 and reference signal 1928. Event 1932 may be the same as event 1908 of FIG. 19A. For example, for event 1932, wireless device 1920 may detect that a radio link quality (e.g., L1-RSRP, L1-SINR) of reference signal 1928 is a threshold value better than (e.g., greater than by at least a threshold value) than a radio link quality (e.g., L1-RSRP) of reference signal 1926 of the TCI state.

Wireless device 1920 may (e.g., transmit) PUCCH transmission 1934 to base station 1930, for example, based on detecting event 1932 for (wireless device-initiated) CSI reporting. Wireless device 1900 may send (e.g., transmit) PUCCH transmission 1912 via one or more PUCCH resources indicated by one or more RRC messages 1922. As described herein, one or more RRC messages 1922 may indicate uplink resources 1924 for sending (e.g., transmitting) CSI reporting triggered by wireless device 1920. In the second mode, PUCCH transmission 1934 may notify that CSI reporting is to be sent (e.g., transmitted) on uplink resources 1924.

Similar to PUCCH transmission 1912, PUCCH transmission 1934 may be SR. For example, PUCCH transmission 1934 may comprise a SR. A PUCCH format of PUCCH transmission 1934 may be PUCCH format 0 or PUCCH format 1. For example, PUCCH transmission 1934 may be a UCI.

Wireless device 1920 may send (e.g., transmit) a CSI report 1936 via uplink resources 1924, for example, if (or after) sending (e.g., transmitting) PUCCH transmission 1934. CSI report 1936 may be a UCI. For example, wireless device 1920 may send (e.g., transmit) the UCI on the uplink resources 1924. The UCI (e.g., CSI report 1936) may be multiplexed on uplink resources 1924 (on PUSCH). CSI report 1936 may indicate, or comprise, the same information as CSI report 1918 of FIG. 19A.

The (advance) notification, provided by PUCCH transmission 1934, may enable the network (e.g., base station 1930) to indicate (e.g., allocate) uplink resources 1924 to multiple wireless devices and/or reassign uplink resources 1924, for example, prior to the (notified) CSI reporting is sent (e.g., transmitted). Base station 1930 may send (e.g., transmit) a reconfiguration (e.g., via RRC message with modified values for the parameters of one or more RRC messages 1922), for example, to reassign uplink resources 1924 or otherwise prevent a collision (interference) from occurring on uplink resources 1924 if uplink resources 1924 are configured to multiple wireless devices. For example, the network may use a combination of the first mode and the second mode as described with respect to FIG. 19C.

FIG. 19C shows an example in which wireless device 1940 and base station 1950 use a combination of the first mode of FIG. 19A (using dynamic uplink grants) and the second mode of FIG. 19B (using preconfigured uplink resources) for reporting CSI triggered by wireless device 1940.

Wireless device 1940 may receive one or more RRC messages 1938. One or more RRC messages 1938 indicate uplink resources 1942 for sending (e.g., transmitting) CSI reporting triggered by wireless device 1940 (similar to one or more RRC messages 1922 and uplink resources 1924). Wireless device 1940 may receive a reference signal 1944, which may be a (current) reference signal of an (indicated) TCI state (similar to reference signal 1904 and reference signal 1926), for example, if (or after) receiving one or more RRC messages 1938. Wireless device 1940 may receive a reference signal 1946, which may be a candidate reference signal (e.g., similar to reference signal 1906 and reference signal 1928).

Wireless device 1940 may detect an event 1948 for CSI reporting (e.g., that triggers wireless device-initiated CSI reporting), for example, based on (measurements of radio link qualities of) reference signal 1944 and reference signal 1946. Event 1948 may be the same as event 1908 and/or event 1932 of FIGs. 19A and 19B, respectively. Wireless device 1940 may send (e.g., transmit) a PUCCH transmission 1952 to base station 1950, for example, based on detecting event 1948. PUCCH transmission may notify base station 1950 that CSI reporting is to be sent (e.g., transmitted) on uplink resources 1942, for example, similar to PUCCH transmission 1934.

As shown in FIG. 19C, base station 1950 may determine that another wireless device is to send (e.g., transmit) on uplink resources 1942, for example, if (or after) receiving PUCCH transmission 1952. Additionally or alternatively, base station 1950 may determine that another wireless device is to perform a transmission on other radio resources (uplink or downlink) that may interfere (or collide) with the CSI reporting that wireless device 1940 intends to send (e.g., transmit) using uplink resources 1942.

Base station 1950 may send (e.g., transmit) a DCI 1954. DCI 1954 may indicate (alternative) uplink resources to avoid inference, for example, if (or after) receiving PUCCH transmission 1952. For example, as shown, DCI 1954 indicates uplink resources 1956. Uplink resources 1956 may be the same as uplink resources 1916. For example, DCI 1954 may comprise an uplink grant indicating uplink resources 1956. Uplink resources 1956 may be PUSCH resources.

Wireless device 1940 may send (e.g., transmit) a CSI report 1958 via uplink resource 1956, for example, based on receiving DCI 1954. Wireless device 1940 may send (e.g., transmit) CSI report 1958 on uplink resources 1956 instead of sending (e.g., transmitting) CSI report 1958 on the preconfigured uplink resources (i.e., uplink resources 1942). Wireless device 1940 may cancel (or skip) sending (e.g., transmitting) CSI report 1958 on the preconfigured resources, for example, based on receiving DCI 1954.

A wireless device may be configured with a list of TCI states (e.g., *TCI-State*. within/by a higher layer parameter *PDSCH-Config* to decode PDSCH according to a detected PDCCH with DCI intended for the wireless device and a given cell (e.g., a given serving cell, a given non-serving/candidate/target cell). A quantity/number of TCI states in the list may depend on a UE capability parameter *maxNumberConfiguredTCIstatesPerCC*. Each TCI state (e.g., *TCI-State*) may contain/comprise/include/indicate/have respective parameters for configuring a quasi co-location relationship between one or two downlink reference signals and DM-RS port(s) of a PDSCH, a DM-RS port of a PDCCH, or CSI-RS port(s) of a CSI-RS resource. The quasi co-location relationship may be configured by a higher layer parameter *qcl-Type1* for a first downlink reference signal of the one or more downlink reference signals. The quasi co-location relationship may be configured by a higher layer parameter *qcl-Type2* for a second downlink reference signal of the one or more downlink reference signals. If/when two downlink reference signals comprising a first downlink reference signal and a second downlink reference signal are indicated by a TCI state, QCL types of the two downlink reference signals may not be the same, regardless of whether the first downlink reference signal and the second downlink reference signal are the same or different. A quasi co-location type corresponding to a downlink reference signal of the one or more downlink reference signals may be given by a higher layer parameter *qcl-Type* in a higher layer parameter *QCL-Info* and may take one of the following values:

- 'typeA': {Doppler shift, Doppler spread, average delay, delay spread}

- 'typeB': {Doppler shift, Doppler spread}

- 'typeC': {Doppler shift, average delay}

- 'typeD': {Spatial Rx parameter}

A wireless device may be configured with a list of TCI states (e.g., up to 128 TCI-State configurations) within/by a higher layer parameter *dl-OrJointTCI-StateList* in *PDSCH-Config*. A TCI state (or a TCI state configuration) in the list of TCI states may contain/include/have/provide/comprise a reference signal for a quasi co-location for i) DM-RS of a PDSCH, ii) DM-RS of a PDCCH in a BWP/cell, and/or iii) a CSI-RS. A TCI state in the list of TCI states may provide/indicate a reference signal for determining uplink transmission spatial filter for i) a dynamic-grant PUSCH, ii) a configured-grant based PUSCH, iii) a PUCCH resource in a BWP/cell, and/or, iv) an SRS.

A wireless device may be configured with a list of TCI states (e.g., up to 64 TCI-UL State configurations) within a higher layer parameter *ul-TCI-StateList* in *BWP-UplinkDedicated*. A TCI state (e.g., *TCI-UL-State* or a TCI state configuration) in the list of TCI states may contain/include/have/provide/comprise a parameter for configuring a reference signal, for example, if applicable, for determining uplink transmission spatial filter for i) dynamic-grant PUSCH transmissions, ii) configured-grant based PUSCH transmissions, iii) PUCCH transmissions via a PUCCH resource in a cell, and SRS transmissions.

A wireless device may receive an activation command (e.g., MAC-CE, DCI) used to map up to a quantity/number TCI states and/or pairs of TCI states (e.g., up to 8 TCI states and/or pairs of TCI states), with one TCI state for downlink channels/signals and/or one TCI state for uplink channels/signals, to codepoint(s) of a DCI field 'Transmission Configuration Indication' for one cell or for a set of cells/downlink BWPs, and/or up to a quantity/number of sets of TCI states (e.g., up to 8 sets of TCI states). Each set of the quantity/number of sets may be comprised of up to a quantity/number of TCI state(s) for downlink and uplink signals/channels (e.g., up to two TCI state(s)), or up to a quantity/number of TCI state(s)

EP 4 648 344 A1

(e.g., up to two TCI state(s)) for downlink channels/signals and up to a quantity/number of TCI state(s) (e.g., up to two TCI state(s)) for uplink channels/signals to codepoint(s) of a DCI field *'Transmission Configuration Indication'* for one cell or for a set of cells/downlink BWPs, and if applicable, for one cell or for a set of cells/uplink BWPs. If/when a set of TCI state IDs are activated, by the activation command, for a set of cells/downlink BWPs and if applicable, for a set of cells/uplink BWPs, where the applicable list of cells may be determined, by the wireless device, by an indicated cell in the activation command, the (same) set of TCI state IDs may be used/applied by the wireless device to/for all downlink and/or uplink BWPs in the indicated cells (or the applicable list of cells). If the activation command maps *TCI-State(s)* and/or *TCI-UL-State(s)* to only one (or to a single) TCI codepoint, the wireless device may use/apply the (indicated) *TCI-State(s)* and/or *TCI-UL-State(s)* to one cell or to a set of cells/downlink BWPs, and if applicable, to one cell or to a set of cells/uplink BWPs once the indicated mapping for the one single TCI codepoint is used/applied by the wireless device.

If/when *tci-PresentInDCI* is set as 'enabled' or *tci-PresentDCI-1-2* is configured for a CORESET, a wireless device 1) configured with *dl-OrJointTCI-StateList* by one or more configuration parameters (e.g., RRC messages/parameters) and activated with *TCI-State* by the activation command, or 2) configured with *ul-TCI-StateList* by one or more configuration parameters (e.g., RRC messages/parameters) and activated with *TCI-UL-State* by the activation command may receive a DCI format (e.g., DCI format 1_1/1_2) providing/indicating TCI state(s) (e.g., *TCI-State(s)* and/or *TCI-UL-State(s)*) for a cell or all cells in the same cell list configured by a simultaneous TCI update parameter (e.g., *simultaneous U-TCI-UpdateList1, simultaneousU-TCI-UpdateList2, simultaneousU-TCI-UpdateList3, simultaneousU-TCI-UpdateList4*). The DCI format may be with or without a downlink assignment. The simultaneous TCI update parameter may be a higher layer parameter (e.g., RRC parameter).

If/when a wireless device configured with *dl-OrJointTCI-StateList* by one or more configuration parameters (e.g., RRC messages/parameters) may send (e.g., transmit) an uplink transmission (e.g., a PUCCH transmission, a PUSCH transmission) with a positive HARQ-ACK corresponding to the DCI format indicating the indicated TCI state(s) (e.g., *TCI-State(s)* and/or *TCI-UL-State(s)*), and if the indicated TCI State(s) is/are different from the previously indicated TCI state(s), the indicated TCI-State(s) may be used/applied, by the wireless device, starting from a first/starting/earliest slot that is at least a quantity/number of symbols (e.g., symbols) after the last symbol of the uplink transmission. The first/starting/earliest slot and the quantity/number of symbols may be both determined, by the wireless device, based on an active BWP with the smallest subcarrier spacing among BWP(s) of the cells using/applying the indicated TCI-State(s) that are active at the end of the uplink transmission carrying/with the positive HARQ-ACK. The quantity/number of symbols may be indicated/provided to the wireless device by RRC messages (e.g., one or more configuration parameters).

If/when a wireless device supports two TCI states in a codepoint of a DCI field *'Transmission Configuration Indication',* the wireless device may receive an activation command (e.g., MAC-CE, DCI) used to map up to 8 combinations of one or two TCI states to codepoint(s) of the DCI field *'Transmission Configuration Indication'.* The wireless device may not expect to receive more than 8 TCI states in the activation command.

A wireless device may receive one or more messages. For example, the wireless device may receive the one or more messages from a base station. For example, the wireless device may receive the one or more messages from a relay node. For example, the wireless device may receive the one or more messages from another wireless device (e.g., TRP, vehicle, remote radio head, and the like). The one or more messages may comprise one or more configuration parameters. For example, the one or more configuration parameters may be RRC configuration parameter(s). For example, the one or more configuration parameters may be RRC reconfiguration parameter(s). For example, the one or more configuration parameters may be for one or more cells.

The one or more cells may comprise a cell. The cell may be, for example, a serving cell. For example, at least one configuration parameter of the one or more configuration parameters may be for the cell. For example, the cell may be a primary cell (PCell). For example, the cell may be a secondary cell (SCell). The cell may be a secondary cell configured with PUCCH (e.g., PUCCH SCell). For example, the cell may be an unlicensed cell, e.g., operating in an unlicensed band. For example, the cell may be a licensed cell, e.g., operating in a licensed band. For example, the cell may operate in a first frequency range (FR1). The FR1 may, for example, comprise frequency bands below 6 GHz. For example, the cell may operate in a second frequency range (FR2). The FR2 may, for example, comprise frequency bands from 24 GHz to 52.6 GHz. For example, the cell may operate in a third frequency range (FR3). The FR3 may, for example, comprise frequency bands from 52.6 GHz to 71 GHz. The FR3 may, for example, comprise frequency bands starting from (or above) 52.6 GHz.

The wireless device may perform uplink transmissions (e.g., PUSCH, PUCCH, PUCCH) via/of the cell in a first time and in a first frequency. The wireless device may perform downlink receptions (e.g., PDCCH, PDSCH) via/of the cell in a second time and in a second frequency. For example, the cell may operate in a time-division duplex (TDD) mode. In the TDD mode, the first frequency and the second frequency may be the same. In the TDD mode, the first time and the second time may be different. For example, the cell may operate in a frequency-division duplex (FDD) mode. In the FDD mode, the first frequency and the second frequency may be different. In the FDD mode, the first time and the second time may be the same.

The wireless device may be in an RRC connected mode. For example, the wireless device may be in an RRC idle mode. For example, the wireless device may be in an RRC inactive mode.

The cell may comprise a plurality of BWPs. The plurality of BWPs may comprise one or more uplink BWPs comprising an uplink BWP of the cell. The plurality of BWPs may comprise one or more downlink BWPs comprising a downlink BWP of the cell.

A BWP of the plurality of BWPs may be in one of an active state and an inactive state. For example, in the active state of a downlink BWP of the one or more downlink BWPs, the wireless device may monitor a downlink channel/signal (e.g., PDCCH, DCI, CSI-RS, PDSCH) on/for/via the downlink BWP. For example, in the active state of a downlink BWP of the one or more downlink BWPs, the wireless device may receive a PDSCH on/via/for the downlink BWP. For example, in the inactive state of a downlink BWP of the one or more downlink BWPs, the wireless device may not monitor a downlink channel/signal (e.g., PDCCH, DCI, CSI-RS, PDSCH) on/via/for the downlink BWP. In the inactive state of a downlink BWP of the one or more downlink BWPs, the wireless device may stop monitoring (or receiving) a downlink channel/signal (e.g., PDCCH, DCI, CSI-RS, PDSCH) on/via/for the downlink BWP. For example, in the inactive state of a downlink BWP of the one or more downlink BWPs, the wireless device may not receive a PDSCH on/via/for the downlink BWP. In the inactive state of a downlink BWP of the one or more downlink BWPs, the wireless device may stop receiving a PDSCH on/via/for the downlink BWP.

The wireless device may send (e.g., transmit) an uplink signal/channel (e.g., PUCCH, preamble, PUSCH, PRACH, PUCCH, etc.) on/via the uplink BWP, for example, in the active state of an uplink BWP of the one or more uplink BWPs. For example, in the inactive state of an uplink BWP of the one or more uplink BWPs, the wireless device may not send (e.g., transmit) an uplink signal/channel (e.g., PUCCH, preamble, PUSCH, PRACH, PUCCH, etc.) on/via the uplink BWP.

The wireless device may activate the downlink BWP of the one or more downlink BWPs of the cell. For example, the activating the downlink BWP may comprise setting (or switching to) the downlink BWP as an active downlink BWP of the cell. For example, the activating the downlink BWP may comprise setting the downlink BWP in the active state. For example, the activating the downlink BWP may comprise switching the downlink BWP from the inactive state to the active state.

The wireless device may activate the uplink BWP of the one or more uplink BWPs of the cell. For example, the activating the uplink BWP may comprise that the wireless device sets (or switches to) the uplink BWP as an active uplink BWP of the cell. For example, the activating the uplink BWP may comprise setting the uplink BWP in the active state. For example, the activating the uplink BWP may comprise switching the uplink BWP from the inactive state to the active state.

The one or more configuration parameters may be for the (active) downlink BWP of the cell. For example, at least one configuration parameter of the one or more configuration parameters may be for the downlink BWP of the cell.

The one or more configuration parameters may be for the (active) uplink BWP of the cell. For example, at least one configuration parameter of the one or more configuration parameters may be for the uplink BWP of the cell.

The one or more configuration parameters may indicate a subcarrier spacing (or a numerology) for the downlink BWP. The one or more configuration parameters may indicate a subcarrier spacing (or numerology) for the uplink BWP.

A value of the subcarrier spacing (of the downlink BWP and/or the uplink BWP) may be/indicate, for example, 15 kHz (mu = 0). A value of the subcarrier spacing may be/indicate, for example, 30 kHz (mu = 1). A value of the subcarrier spacing may be/indicate, for example, 60 kHz (mu = 2). A value of the subcarrier spacing may be/indicate, for example, 120 kHz (mu = 3). A value of the subcarrier spacing may be/indicate, for example, 240 kHz (mu = 4). A value of the subcarrier spacing may be/indicate, for example, 480 kHz (mu = 5). A value of the subcarrier spacing may be/indicate, for example, 960 kHz (mu = 6). For example, 480 kHz may be valid/applicable in FR3. For example, 960 kHz may be valid/applicable in FR3. For example, 240 kHz may be valid/applicable in FR3. For example, 120 kHz may be valid/applicable in FR3.

The one or more configuration parameters may indicate a plurality of TCI states for the cell. The one or more configuration parameter may comprise a TCI state list parameter (e.g., provided by a higher layer (e.g., RRC) parameter *dl-OrJoint-TCIStateList*) indicating a TCI state list. The TCI state list may comprise the plurality of TCI states. The one or more configuration parameters may comprise one or more PDSCH configuration parameters (e.g., *PDSCH-Config),* for example, comprising the TCI state list parameter that indicates the plurality of TCI states.

The one or more configuration parameters may indicate, for the plurality of TCI states, a plurality of TCI state indexes/identifiers/identities (e.g., *TCI-StateId).* The one or more configuration parameters may indicate, for each TCI state of the plurality of TCI states, a respective TCI state index of the plurality of TCI state indexes. Each TCI state of the plurality of TCI states may be indicated/identified by a respective TCI state index of the plurality of TCI state indexes. For example, the one or more configuration parameters may indicate, for a first TCI state of the plurality of TCI states, a first TCI state index of the plurality of TCI state indexes. The one or more configuration parameters may indicate, for a second TCI state of the plurality of TCI states, a second TCI state index of the plurality of TCI state indexes.

The one or more configuration parameters may indicate the plurality of TCI states that indicate a unified TCI state for the cell. The one or more configuration parameters may comprise the one or more PDSCH configuration parameters, for example, for/of a downlink BWP (e.g., an active downlink BWP) of the cell. The one or more configuration parameters indicate the plurality of TCI states for the downlink BWP of the cell. The one or more PDSCH configuration parameters of the downlink BWP of the cell may comprise the TCI state list parameter (e.g., provided by a higher layer (e.g., RRC) parameter *dl-OrJoint-TCIStateList*) indicating the TCI state list.

The one or more configuration parameters may comprise the one or more PDSCH configuration parameters, for example, for a second downlink BWP of a second cell. The one or more cells may comprise the second cell. The one or more configuration parameters indicate the plurality of TCI states for the second downlink BWP of the second cell. The one or more PDSCH configuration parameters of the second downlink BWP of the second cell may comprise the TCI state list parameter (e.g., provided by a higher layer (e.g., RRC) parameter *dl-OrJoint-TCIStateList*) indicating the TCI state list. The one or more configuration parameters may comprise, for/of the downlink BWP of the cell, a reference unified TCI state list parameter (e.g., *unifiedTCI-StateRef*) indicating the second downlink BWP of the second cell. The reference unified TCI state list parameter may comprise a BWP index (e.g., BWP-Id) identifying/indicating the second downlink BWP. The reference unified TCI state list parameter may comprise a cell index (e.g., *ServCellIndex)* identifying/indicating the second cell. The second downlink BWP of the second cell may be a reference BWP of a reference cell for the downlink BWP of the cell. The downlink BWP of the cell may be a target BWP of a target cell. One or more PDSCH configuration parameters of the downlink BWP of the cell may not comprise a higher layer (e.g., RRC) parameter *dl-OrJoint-TCIStateList,* for example, based on the one or more configuration parameters comprising, for the downlink BWP of the cell, the reference unified TCI state list parameter.

The one or more configuration parameters may comprise a unified-TCI-state-type parameter (e.g., *unifiedtci-StateType*). The one or more configuration parameters may comprise one or more serving cell parameters (e.g., *ServingCellConfig)* comprising the unified-TCI-state-type parameter. The unified-TCI-state-type parameter may indicate the unified TCI state type of the cell.

For example, the unified-TCI-state-type parameter may be set to "Joint". The wireless device may use/apply the plurality of TCI states (e.g., provided/indicated by *dl-OrJoint-TCIStateList*) for both uplink transmissions (e.g., PUSCH/-PUCCH/SRS transmissions) of/via the cell and downlink receptions (e.g., PDCCH/PDSCH/CSI-RS receptions) of/via the cell, for example, based on the one or more configuration parameters comprising the unified-TCI-state-type parameter set to "Joint". The plurality of TCI states may be, for example, a plurality of joint TCI states.

The unified-TCI-state-type parameter may be set to "Separate". The wireless device may use/apply the plurality of TCI states (e.g., provided/indicated by a higher layer parameter *dl-OrJoint-TCIStateList*) for downlink receptions (e.g., PDCCH/PDSCH/CSI-RS receptions) of/via the cell, for example, based on the one or more configuration parameters comprising the unified-TCI-state-type parameter set to "Separate". The wireless device may not use/apply the plurality of TCI states for uplink transmissions (e.g., PUSCH/PUCCH/SRS transmissions) of/via the cell, for example, based on the one or more configuration parameters comprising the unified-TCI-state-type parameter set to "Separate". The plurality of TCI states may be, for example, a plurality of downlink TCI states.

The one or more configuration parameters may indicate a second plurality of TCI states. The one or more configuration parameters may comprise an TCI state list parameter (e.g., provided/indicated by a higher layer parameter *ul-TCI-StateList*) indicating the TCI state list. The TCI state list may comprise the second plurality of TCI states. The one or more configuration parameters may comprise one or more uplink BWP configuration parameters comprising the TCI state list parameter that indicates the second plurality of TCI states.

The one or more configuration parameters may comprise the one or more uplink BWP configuration parameters, for example, for an uplink BWP (e.g., an active uplink BWP) of the cell. The one or more configuration parameters indicate the second plurality of TCI states for the uplink BWP of the cell. The one or more uplink BWP configuration parameters of the uplink BWP of the cell may comprise the TCI state list parameter (e.g., provided by a higher layer (e.g., RRC) parameter *dl ul-TCI-StateList*) indicating the TCI state list.

The one or more configuration parameters may comprise the one or more uplink BWP configuration parameters, for example, for a second uplink BWP of a second cell. The one or more configuration parameters indicate the second plurality of TCI states for the second uplink BWP of the second cell. The one or more uplink BWP configuration parameters of the second uplink BWP of the second cell may comprise the TCI state list parameter (e.g., provided by a higher layer (e.g., RRC) parameter *dl ul-TCI-StateList*) indicating the TCI state list. The one or more configuration parameters may comprise, for the uplink BWP of the cell, a reference unified TCI state list parameter (e.g., *unifiedTCI-StateRef*) indicating the second uplink BWP of the second cell. The reference unified TCI state list parameter may comprise a BWP index (e.g., BWP-Id) identifying/indicating the second uplink BWP. The reference unified TCI state list parameter may comprise a cell index (e.g., *ServCellIndex)* identifying/indicating the second cell. The second uplink BWP of the second cell may be a reference BWP of a reference cell for the uplink BWP of the cell. The uplink BWP of the cell may be a target BWP of a target cell. One or more uplink BWP configuration parameters of the uplink BWP of the cell may not comprise a higher layer (e.g., RRC) parameter *ul-TCI-StateList,* for example, based on the one or more configuration parameters comprising, for the uplink BWP of the cell, the reference unified TCI state list parameter.

The one or more configuration parameters may indicate, for the second plurality of TCI states, a plurality of TCI state indexes/identifiers/identities (e.g., *TCI-StateId).* The one or more configuration parameters may indicate, for each TCI state of the second plurality of TCI states, a respective TCI state index of the plurality of TCI state indexes. Each TCI state of the second plurality of TCI states may be indicated/identified by a respective TCI state index of the plurality of TCI state indexes. For example, the one or more configuration parameters may indicate, for a first TCI state of the second plurality of TCI states, a first TCI state index of the plurality of TCI state indexes. The one or more configuration parameters may indicate, for a second TCI state of the second plurality of TCI states, a second TCI state index of the plurality of TCI state indexes.

The wireless device may use/apply the second plurality of TCI states for uplink transmissions (e.g., PUSCH/-PUCCH/SRS transmissions) of/via the cell, for example, based on the one or more configuration parameters comprising the unified-TCI-state-type parameter set to "Separate". The wireless device may not use/apply the second plurality of TCI states for downlink receptions (e.g., PDCCH/PDSCH/CSI-RS receptions) of/via the cell, for example, based on the one or more configuration parameters comprising the unified-TCI-state-type parameter set to "Separate". The second plurality of TCI states may be, for example, a plurality of uplink TCI states.

The wireless device may use, for downlink receptions via the downlink BWP of the cell, the plurality of TCI states, for example based on the one or more configuration parameters indicating the plurality of TCI states for the downlink BWP of the cell. For example, the wireless device may use, for uplink transmissions receptions via the uplink BWP of the cell, the plurality of TCI states, for example, based on the one or more configuration parameters indicating the plurality of TCI states for the downlink BWP of the cell. The wireless device may use, for downlink receptions via the downlink BWP of the cell, the plurality of TCI states of the second downlink BWP of the second cell, for example, based on the reference unified TCI state list parameter indicating, for the downlink BWP of the cell, the second downlink BWP of the second cell.

The wireless device may use, for uplink transmissions receptions via the uplink BWP of the cell, the plurality of TCI states of the second downlink BWP of the second cell, for example, based on the reference unified TCI state list parameter indicating, for the downlink BWP of the cell, the second downlink BWP of the second cell. For example, the wireless device may use, for uplink transmissions receptions via the uplink BWP of the cell, the second plurality of TCI states, for example based on the one or more configuration parameters indicating the second plurality of TCI states for the uplink BWP of the cell. For example, the wireless device may use, for uplink transmissions receptions via the uplink BWP of the cell, the second plurality of TCI states of the second uplink BWP of the second cell, for example, based on the reference unified TCI state list parameter indicating, for the uplink BWP of the cell, the second uplink BWP of the second cell.

The cell may be served by a plurality of TRPs comprising a first TRP and a second TRP. The wireless device may be served by the plurality of TRPs via the cell. The wireless device may receive, via the cell, a first downlink reception (e.g., PDSCH, PDCCH, CSI-RS) from the first TRP. The first TRP may send (e.g., transmit), to the wireless device, the first downlink reception. The wireless device may receive, via the cell, a second downlink reception (e.g., PDSCH, PDCCH, CSI-RS) from the second TRP. The second TRP may send (e.g., transmit), to the wireless device, the second downlink reception.

The wireless device may send (e.g., transmit), via the cell, a first uplink transmission (e.g., PUSCH, PUCCH, SRS) to the first TRP. The first TRP may receive, from the wireless device, the first uplink transmission. The wireless device may send (e.g., transmit), via the cell, a second uplink transmission (e.g., PUSCH, PUCCH, SRS) to the second TRP. The second TRP may receive, from the wireless device, the second uplink transmission.

The wireless device may receive an activation command (e.g., MAC-CE, MAC-CE, DCI, RRC, one or more control commands, one or more downlink control commands/messages, one or more control commands/messages, Unified TCI States Activation/Deactivation MAC CE, Enhanced Unified TCI States Activation/Deactivation MAC CE, The Enhanced Unified TCI States Activation/Deactivation MAC-CE for Joint TCI State Mode, Enhanced Unified TCI States Activation/Deactivation MAC-CE for Separate TCI State Mode and the like).

The activation command may indicate activation of a subset of TCI states of the plurality of TCI states (e.g., *DLorJoint-TCIStateList*). The subset of TCI states may be, for example, a subset of joint TCI states of the plurality of joint TCI states. The subset of TCI states may be, for example, a subset of downlink TCI states of the plurality of downlink TCI states. The activation command may indicate activation of a subset of TCI states of the second plurality of TCI states (e.g., *ul-TCI-StateList*). The subset of TCI states may be, for example, a subset of uplink TCI states of the plurality of uplink TCI states.

The base station may activate and/or deactivate the subset of TCI states, for example, by sending/transmitting the activation command. The wireless device may map the subset of TCI states to one or more TCI codepoints of/for the cell. The activation command may indicate mapping of the subset of TCI states to the one or more TCI codepoints. The wireless device may map respective TCI state(s) of the subset of TCI states to a respective TCI codepoint of the one or more TCI codepoints. The one or more TCI codepoints may indicate/comprise the subset of TCI states. Each TCI codepoint of the one or more TCI codepoints may indicate (or may be mapped to) respective TCI state(s) of the subset of TCI states. Each TCI codepoint of the one or more TCI codepoints may indicate/comprise (or be mapped to) one or more TCI states.

The one or more TCI codepoints may be/comprise TCI codepoint 000, TCI codepoint 001, ..., TCI codepoint 110, and TCI codepoint 111. The subset of TCI states may be/comprise TCI state 4, TCI state 5, TCI state 8, ..., TCI state 26, TCI state 61, and TCI state 2. TCI codepoint 000 may comprise/indicate (or may be mapped to) TCI state 4. TCI codepoint 001 may comprise/indicate (or may be mapped to) TCI state 5 and TCI state 8. TCI codepoint 110 may comprise/indicate (or may be mapped to) TCI state 26 and TCI state 61. TCI codepoint 111 may comprise/indicate (or may be mapped to) TCI state 2. For example, TCI codepoint 000 and TCI codepoint 111 may indicate a single TCI state (e.g., a single joint TCI state, a single downlink TCI state, a single uplink TCI state, and the like). TCI codepoint 001 and TCI codepoint 110 may indicate two TCI states (e.g., two joint TCI states, two uplink TCI states, two downlink TCI states, and the like).

The wireless device may receive a control command (e.g., MAC-CE 1716 and/or DCI 1718 in FIG. 17B). The control command may be, for example, a MAC-CE. The control command may be, for example, a DCI (e.g., DCI format 1_1/1_2/1_3). The control command may be, for example, a downlink control command/message (e.g., activation command).

The control command may indicate, for the cell, a first TCI state of the subset of TCI states. For example, the control command may indicate, for uplink transmissions (e.g., PUCCH, PUSCH, SRS) via the cell (or via the uplink BWP of the cell), the first TCI state.

A quantity/number of the one or more TCI codepoints may be equal to one (e.g., a single TCI codepoint). The single TCI codepoint may indicate the first TCI state. The control command indicating the first TCI state may be the activation command activating the subset of TCI states, for example, based on the quantity/number of the one or more TCI codepoints being equal to one. The first TCI state may be the subset of TCI states, for example, based on the quantity/number of the one or more TCI codepoints being equal to one. The activation command may indicate the first TCI state based on the quantity/number of the one or more TCI codepoints being equal to one. The control command may be, for example, a MAC-CE.

A quantity/number of the one or more TCI codepoints may be more than one. The control command indicating the first TCI state may be different from the activation command activating the subset of TCI states, for example, based on the quantity/number of the one or more TCI codepoints being more than one. The wireless device may receive the control command after receiving the activation command. The control command may be, for example, a DCI (e.g., DCI format 1_1/1_2/1_3). The control command (e.g., DCI format 1_1/1_2/1_3) may comprise a TCI field indicating the first TCI state. A value of the TCI field (e.g., '111') may be equal to a TCI codepoint (e.g., TCI codepoint 111), of the one or more TCI codepoints, indicating (or mapped to/with) the first TCI state. The control command may indicate, for the TCI field, the TCI codepoint. The first TCI state may be mapped to the TCI codepoint.

The first TCI state may be, for example, a first joint TCI state. The first TCI state may be, for example, a first downlink TCI state. The first TCI state may be, for example, a first uplink TCI state.

The first TCI state may comprise/indicate a first reference signal (e.g., CSI-RS, SSB/PBCH block, DM-RS, SRS, and the like). The first TCI state may comprise/indicate a first quasi co-location type (e.g., QCL TypeA, QCL TypeB, QCL TypeC, QCL TypeD).

The second TCI state may comprise/indicate a second reference signal (e.g., CSI-RS, SSB/PBCH block, DM-RS, SRS, and the like). The second TCI state may comprise/indicate a second quasi co-location type (e.g., QCL TypeA, QCL TypeB, QCL TypeC, QCL TypeD).

The TCI state list (e.g., indicated by *dl-OrJoint-TCIStateList* or *ul-TCI-StateList*) may comprise the first TCI state. For example, the plurality of TCI states indicated by the higher layer parameter by *dl-OrJoint-TCIStateList* may comprise the first TCI state. For example, the second plurality of TCI states indicated by the higher layer parameter by *ul-TCI-StateList* may comprise the first TCI state.

The one or more configuration parameters may comprise a first TCI state configuration of the first TCI state. The one or more configuration parameters may indicate, for the first TCI state, a first TCI state index (e.g., tci-StateId). The plurality of TCI state indexes may comprise the first TCI state index. The first TCI state may be indicated/identified by the first TCI state index. The first TCI state configuration of the first TCI state may comprise/have/indicate/provide the first TCI state index of/for the first TCI state. For example, a TCI state index may be (or may be interchangeably used with) a TCI state identity. For example, a TCI state index may be (or may be interchangeably used with) a TCI state identifier.

The one or more configuration parameters may indicate, for the first TCI state, a first reference signal (e.g., referenceSignal). The first TCI state configuration of the first TCI state may comprise/have/indicate/provide a first reference signal index (e.g., ssb-Index, csi-RS-Index/ NZP-CSI-RS-ResourceId, SRS-ResourceId) indicating/identifying the first reference signal. For example, a reference signal index may be (or may be interchangeably used with) a reference signal identity. For example, a reference signal index may be (or may be interchangeably used with) a reference signal identifier.

The wireless device may use/apply the first TCI state to a first uplink transmission (e.g., PUSCH/PUCCH/SRS). For example, using/applying the first TCI state to the first uplink transmission may comprise sending/transmitting/performing the first uplink transmission with/using a first spatial domain transmission/transmit filter/beam determined based on the first reference signal indicated by the first TCI state. The wireless device may determine, for the first uplink transmission, the first spatial domain transmission/transmit filter/beam based on the first reference signal indicated by (or of) the first TCI state For example, the wireless device may send (e.g., transmit) the first uplink transmission with/using the first spatial domain transmission/transmit filter/beam that is the same as (or substantially same as, x degrees apart, x = 0, 1, 5, 10, and the like) a spatial domain reception/receiving filter/beam used to receive the first reference signal (e.g., SSB.

CSI-RS). For example, the wireless device may send (e.g., transmit) the first uplink transmission with/using the first spatial domain transmission/transmit filter/beam that is the same as (or substantially same as, x degrees apart, x = 0, 1, 5, 10, and the like) a spatial domain transmission/transmit filter/beam used to send (e.g., transmit) the first reference signal (e.g., SRS). For example, at least one DMRS antenna port of the first uplink transmission may be quasi co-located with the first reference signal indicated by the first TCI state. The at least one DMRS antenna port of the first uplink transmission may be quasi co-located with the first reference signal with respect to the first quasi co-location type (e.g., QCL TypeA, QCL Type B, QCL type C, QCL TypeD) indicated by the first TCI state.

The one or more configuration parameters may indicate one or more uplink power control sets (e.g., *Uplink-powerControl)*. The one or more configuration parameters may comprise an uplink power control parameter (e.g., *ul-powerControl)* indicating the one or more uplink power control sets. The one or more configuration parameters may comprise one or more serving cell parameters (e.g., *ServingCellConfig)* indicating, for example, the one or more uplink power control sets. The one or more serving cell parameters may comprise the uplink power control parameter. The one or more configuration parameters may indicate, for the one or more uplink power control sets, one or more uplink power control set indexes/identifiers/identities (e.g., *Uplink-powerControlId)*. The one or more configuration parameters may indicate, for each uplink power control set of the one or more uplink power control sets, a respective uplink power control set index of the one or more uplink power control set indexes/identifiers/identities. Each uplink power control set of the one or more uplink power control sets may comprise/indicate respective power control parameters (e.g., target received power, closed-loop index, pathloss compensation factor, alpha, pathloss reference signal, and the like). For example, the one or more uplink power control sets may comprise a first uplink power control set. The first uplink power control set may comprise/indicate one or more first power control parameters (e.g., target received power, closed-loop index, pathloss compensation factor, alpha, pathloss reference signal, and the like). The first uplink power control set may be indicated/identified by a first uplink power control set index of the one or more uplink power control set indexes/identifiers/identities. For example, the one or more uplink power control sets may comprise a second uplink power control set. The second uplink power control set may comprise/indicate one or more second power control parameters (e.g., target received power, closed-loop index, pathloss compensation factor, alpha, pathloss reference signal, and the like). The second uplink power control set may be indicated/identified by a second uplink power control set index of the one or more uplink power control set indexes/identifiers/identities.

The one or more configuration parameters may indicate, for the first TCI state, a first uplink power control set (e.g., ul-powerControl). The first TCI state configuration of the first TCI state may comprise/have/indicate/provide a first uplink power control index (e.g., *ul-powerControlId*) indicating/identifying the first uplink power control set. The first uplink power control set may indicate/comprise one or more first power control parameters (e.g., target received power, closed-loop index, pathloss compensation factor, alpha, pathloss reference signal, and the like). The one or more configuration parameters may comprise, for the first uplink power control set, a power parameter (e.g., *p0AlphaSetforPUSCH*) indicating the one or more first power control parameters. The one or more first power control parameters may comprise, for example, a target received power (e.g., P0 or $P_{O\_PUSCH,b,f,c}(j)$). The one or more first power control parameters may comprise, for example, a closed-loop index (e.g., $l$). The one or more first power control parameters may comprise, for example, a pathloss compensation factor (e.g., $\alpha_{b,f,c}(j)$. The first TCI state may indicate (or comprise or be mapped to or be associated with) the one or more first power control parameters.

The one or more uplink power control sets may comprise the first uplink power control set associated with the first TCI state. The one or more uplink power control set indexes/identifiers/identities of the one or more uplink power control sets may comprise the first uplink power control index of the first uplink power control set associated with the first TCI state. For example, using/applying the first TCI state to the first uplink transmission may comprise transmitting/performing the first uplink transmission with/using a first transmission/transmit power determined based on the one or more first power control parameters indicated by (or mapped to or associated with) the first TCI state. For example, an uplink power control index may be (or may be interchangeably used with) an uplink power control identity. For example, an uplink power control index may be (or may be interchangeably used with) an uplink power control identifier.

The one or more configuration parameters may indicate, for the first TCI state, a first reference signal (e.g., PathlossReferenceRS-Id) for pathloss estimation. The first TCI state configuration of the first TCI state may comprise/have/indicate/provide a first pathloss reference RS index (e.g., PathlossReferenceRS-Id) indicating/identifying the first reference signal. The first reference signal may be a first pathloss reference signal used for pathloss estimation of uplink transmissions using/applying the first TCI state. The first TCI state may indicate (or comprise or be mapped to or be associated with) the first reference signal. For example, using/applying the first TCI state to the first uplink transmission may comprise transmitting/performing the first uplink transmission with/using a first transmission power determined based on the first reference signal (e.g., PathlossReferenceRS-Id) indicated by (or mapped to or associated with) the first TCI state. For example, a pathloss reference RS index may be (or may be interchangeably used with) a pathloss reference RS identity. For example, a pathloss reference RS index may be (or may be interchangeably used with) a pathloss reference RS identifier.

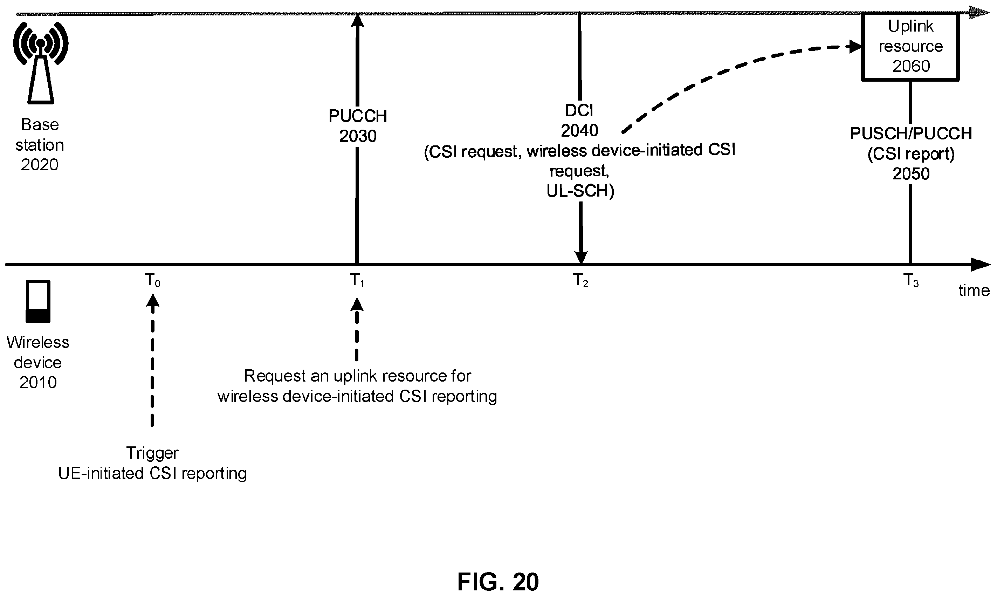

FIG. 20 shows an example of an uplink resource indication for CSI reporting. A wireless device 2010 may receive, from a base station 2020, a wireless device (e.g., user equipment (UE)) capability enquiry message (e.g., *UECapability-Enquiry*). The wireless device 2010 may send (e.g., transmit), to the base station 2020, a wireless device capability information message (e.g., *UECapabilityInformation*), for example, based on receiving the wireless device capability enquiry message.

The wireless device 2010 may receive/detect a DCI 2040 (e.g., DCI 1914, DCI 1954, DCI at time T2 in FIG. 20) indicating an uplink resource for transmission of a CSI report (e.g., CSI report 1918, CSI report 1958). The CSI report may be triggered by the wireless device. The CSI report may be, for example, a wireless device-initiated CSI report. The CSI report may be, for example, an event-based CSI report. The CSI report may be, for example, an event-triggered CSI report.

The DCI 2040 may indicate the uplink resource for transmission of the CSI report, for example, based on the wireless device capability information message indicating support/capability of detection of a DCI format (e.g., DCI format 0_1, DCI format 0_2, DCI format 0_3) indicating an uplink resource (e.g., PUSCH resource) to send (e.g., transmit) a wireless device-initiated CSI report. For example, the DCI may indicate the uplink resource for transmission of the CSI report, for example, based on the wireless device capability information message indicating support/capability of detection of a DCI format (e.g., DCI format 0_1, DCI format 0_2, DCI format 0_3) indicating PUSCH occasions/resources to carry/send/transmit/send a wireless device-initiated CSI report.

The DCI 2040 may indicate the uplink resource for a CSI reporting (or a CSI reporting procedure). The CSI reporting may be triggered by the wireless device (e.g., at time T0 in FIG. 20). The CSI reporting may be, for example, a wireless device-initiated CSI reporting. The CSI reporting may be, for example, an event-based CSI reporting. The CSI reporting may be, for example, an event-triggered CSI reporting.

The DCI 2040 may indicate the uplink resource on/via an uplink BWP of a cell. The uplink BWP may be, for example, an active uplink BWP of the cell. The cell may be, for example, a scheduled cell.

The wireless device 2010 may send (e.g., transmit), via the uplink resource, the CSI report (e.g., at time T3 in FIG. 20). The uplink resource 2060 may be, for example, a PUSCH resource. The uplink resource may be, for example, a PUCCH resource. For example, the DCI 2040 may be (or may be with) a DCI format 0_1. For example, the DCI 2040 may be (or may be with) a DCI format 0_2. For example, the DCI 2040 may be (or may be with) a DCI format 0_3.

A cyclic redundancy check (CRC) of the DCI 2040 may be scrambled with/by an RNTI. The RNTI of the DCI 2040 may not be (or may be different from) a semi-persistent (SP)-CSI- RNTI (SP-CSI-RNTI) used to activate/deactivate semi-persistent CSI reporting on PUSCH. The CRC of the DCI 2040 may not be scrambled with/by an SP-CSI-RNTI. For example, the RNTI of the DCI 2040 may be used to indicate an uplink resource for wireless device-initiated CSI reporting on PUSCH. For example, the RNTI of the DCI 2040 may be C-RNTI. For example, the RNTI of the DCI 2040 may be CS-RNTI.

The DCI 2040 may schedule/trigger/indicate transmission of the CSI report. The DCI 2040 may schedule/trigger/indicate transmission of the CSI report via the uplink resource.

The DCI 2040 may schedule/trigger/indicate transmission of the CSI report via the uplink resource, for example, based on the CRC of the DCI 2040 being scrambled with/by the RNTI used to indicate an uplink resource for wireless device-initiated CSI reporting on PUSCH. The DCI 2040 may not schedule/trigger/indicate transmission of the CSI report via the uplink resource, for example, based on the CRC of the DCI 2040 being scrambled with/by a second RNTI different from the RNTI used to indicate an uplink resource for wireless device-initiated CSI reporting on PUSCH.

The DCI 2040 may schedule/trigger/indicate transmission of the CSI report via the uplink resource, for example, based on receiving/detecting the DCI 2040 after a PUCCH transmission (e.g., PUCCH 1912, PUCCH 1952, PUCCH at time T1 in FIG. 20) requesting an uplink resource (e.g., a PUSCH resource) to send (e.g., transmit) the CSI report. The DCI 2040 may not schedule/trigger/indicate transmission of the CSI report, for example, based on receiving/detecting the DCI 2040 before (or prior to) the PUCCH transmission requesting an uplink resource (e.g., a PUSCH resource) to send (e.g., transmit) the CSI report.

The DCI 2040 may comprise a CSI request field with a non-zero value. The wireless device may send/transmit/perform the CSI report (e.g., wireless device-initiated CSI report), for example based on successful decoding of the DCI (e.g., the DCI format 0_1 or the DCI format 0_2) with the non-zero *CSI request field* after the PUCCH transmission (e.g., PUCCH 1912 and PUCCH 1952). The wireless device may not send/transmit/perform the CSI report on a PUSCH scheduled by a DCI format 0_1 or a DCI format 0_2 successfully decoded prior to (or before) the PUCCH transmission.

The one or more configuration parameters may comprise a first parameter. For example, the first parameter may enable detection of a DCI format (e.g., DCI format 0_1, DCI format 0_2) indicating an uplink resource (e.g., PUSCH resource) to send (e.g., transmit) a wireless device-initiated CSI report. For example, the first parameter may enable detection of a DCI format (e.g., DCI format 0_1, DCI format 0_2) indicating PUSCH occasions/resources to carry/send/transmit/send a wireless device-initiated CSI report. The one or more configuration parameters may comprise the first parameter, for example, based on the wireless device capability information message indicating support/capability of detection of the DCI format indicating the uplink resource (e.g., PUSCH resource, PUSCH occasions/resources) to send/transmit/carry the wireless device-initiated CSI report. The wireless device capability information message may comprise a parameter indicating the support/capability of detection of the DCI format indicating the uplink resource (e.g.,

PUSCH resource, PUSCH occasions/resources) to send/transmit/carry the wireless device-initiated CSI report.

The one or more configuration parameters may comprise a first parameter. For example, the first parameter may enable detection of a DCI format 0_1 indicating an uplink resource (e.g., PUSCH resource) to send (e.g., transmit) a wireless device-initiated CSI report. For example, the first parameter may enable detection of a DCI format 0_1 indicating PUSCH occasions/resources to carry/send/transmit/send a wireless device-initiated CSI report. The one or more configuration parameters may comprise the first parameter, for example, based on the wireless device capability information message indicating support/capability of detection of the DCI format 0_1 indicating the uplink resource (e.g., PUSCH resource, PUSCH occasions/resources) to send/transmit/carry the wireless device-initiated CSI report. The wireless device capability information message may comprise a parameter indicating the support/capability of detection of the DCI format 0_1 indicating the uplink resource (e.g., PUSCH resource, PUSCH occasions/resources) to send/transmit/carry the wireless device-initiated CSI report.

The one or more configuration parameters may comprise a second parameter. For example, the second parameter may enable detection of a DCI format 0_2 indicating an uplink resource (e.g., PUSCH resource) to send (e.g., transmit) a wireless device-initiated CSI report. For example, the second parameter may enable detection of a DCI format 0_2 indicating PUSCH occasions/resources to carry/transmit/send a wireless device-initiated CSI report. The one or more configuration parameters may comprise the second parameter, for example, based on the wireless device capability information message indicating support/capability of detection of the DCI format 0_2 indicating the uplink resource (e.g., PUSCH resource, PUSCH occasions/resources) to send/transmit/carry the wireless device-initiated CSI report. The wireless device capability information message may comprise a parameter indicating the support/capability of detection of the DCI format 0_2 indicating the uplink resource (e.g., PUSCH resource, PUSCH occasions/resources) to send/transmit/carry the wireless device-initiated CSI report. The parameter for the DCI format 0_1 and the parameter for the DCI format 0_2 may be, for example, different. The parameter for the DCI format 0_1 and the parameter for the DCI format 0_2 may be, for example, the same.

The DCI 2040 (e.g., DCI 1914, DCI 1954) may not comprise a first field (e.g., wireless device-initiated beam report request/indicator/indication/flag, wireless device-initiated CSI report request/indicator/indication/flag, and the like). The first field may be absent in the DCI 2040. A size/length of the first field may be 0 bit. The size/length of the first field may be 0 bit, for example, based on the one or more configuration parameters not comprising the first parameter that enables detection of the DCI format indicating an uplink resource to send (e.g., transmit) a wireless device-initiated CSI report.

The size/length of the first field may be 0 bit, for example, based on the one or more configuration parameters not comprising the first parameter for any BWP in the cell. The size/length of the first field may be 0 bit, for example, based on the one or more configuration parameters not comprising the first parameter for any downlink BWP in the cell. The size/length of the first field may be 0 bit, for example, based on the one or more configuration parameters not comprising the first parameter for any uplink BWP in the cell.

The DCI 2040 may not comprise a first field (e.g., wireless device-initiated beam report request/indicator/indication/flag, wireless device-initiated CSI report request/indicator/indication/flag, and the like). A size/length of the first field may be 0 bit. For example, the first field may be absent in the DCI 2040 with the DCI format 0_1. The size/length of the first field may be 0 bit, for example, based on the one or more configuration parameters not comprising the first parameter that enables detection of the DCI format 0_1 indicating an uplink resource to send (e.g., transmit) a wireless device-initiated CSI report. For example, the first field may be absent in the DCI with the DCI format 0_2. The size/length of the first field may be 0 bit, for example, based on the one or more configuration parameters not comprising the second parameter that enables detection of the DCI format 0_2 indicating an uplink resource to send (e.g., transmit) a wireless device-initiated CSI report.

The size/length of the first field may be 0 bit, for example, based on the one or more configuration parameters not comprising the first parameter for any BWP in the cell. The size/length of the first field may be 0 bit, for example, based on the one or more configuration parameters not comprising the first parameter for any downlink BWP in the cell. The size/length of the first field may be 0 bit, for example, based on the one or more configuration parameters not comprising the first parameter for any uplink BWP in the cell.

The size/length of the first field may be 0 bit, for example, based on the one or more configuration parameters not comprising the second parameter for any BWP in the cell. The size/length of the first field may be 0 bit, for example, based on the one or more configuration parameters not comprising the second parameter for any downlink BWP in the cell. The size/length of the first field may be 0 bit, for example, based on the one or more configuration parameters not comprising the second parameter for any uplink BWP in the cell.

The DCI 2040 (e.g., DCI 1914, DCI 1954, DCI at time T2 in FIG. 20) may comprise a first field (e.g., wireless device-initiated beam report request/indicator/indication/flag, wireless device-initiated CSI report request/indicator/indication/flag, and the like). The first field may be present in the DCI 2040. A size/length of the first field may be N bits (e.g., N =1 bit, N =2 bits, N = 3 bits, and the like). The size/length of the first field may be N bits, for example, based on the one or more configuration parameters comprising the first parameter that enables detection of the DCI format indicating an uplink resource to send (e.g., transmit) a wireless device-initiated CSI report.

The size/length of the first field may be N bits, for example, based on the one or more configuration parameters comprising the first parameter for at least one BWP in the cell. The size/length of the first field may be N bits, for example, based on the one or more configuration parameters comprising the first parameter for at least one downlink BWP in the cell. The size/length of the first field may be N bits, for example, based on the one or more configuration parameters comprising the first parameter for at least one uplink BWP in the cell.

The DCI 2040 may comprise a first field (e.g., wireless device-initiated beam report request/indicator/indication/flag, wireless device-initiated CSI report request/indicator/indication/flag, and the like). A size/length of the first field may be N bits (e.g., N =1 bit, N =2 bits, N = 3 bits, and the like). For example, the first field may be present in the DCI with the DCI format 0_1. The size/length of the first field may be N bits, for example, based on the one or more configuration parameters comprising the first parameter that enables detection of the DCI format 0_1 indicating an uplink resource to send (e.g., transmit) a wireless device-initiated CSI report. For example, the first field may be present in the DCI 2040 with the DCI format 0_2. The size/length of the first field may be N bits, for example, based on the one or more configuration parameters comprising the second parameter that enables detection of the DCI format 0_2 indicating an uplink resource to send (e.g., transmit) a wireless device-initiated CSI report.

The size/length of the first field may be N bits, for example, based on the one or more configuration parameters comprising the first parameter for at least one BWP in the cell. The size/length of the first field may be N bits, for example, based on the one or more configuration parameters comprising the first parameter for at least one downlink BWP in the cell. The size/length of the first field may be N bits, for example, based on the one or more configuration parameters comprising the first parameter for at least one uplink BWP in the cell.

The size/length of the first field may be N bits, for example, based on the one or more configuration parameters comprising the second parameter for at least one BWP in the cell. The size/length of the first field may be N bits, for example, based on the one or more configuration parameters comprising the second parameter for at least one downlink BWP in the cell. The size/length of the first field may be N bits, for example, based on the one or more configuration parameters comprising the second parameter for at least one uplink BWP in the cell.

The first field may be different from a CSI request field. For example, the DCI may comprise both the first field and a CSI request field. For example, the DCI may comprise the first field and may not comprise a CSI request field. For example, a first value (e.g., 0) of the first field may indicate no transmission/request of a wireless device-initiated CSI report. A second value (e.g., 1) of the first field may indicate transmission/request of a wireless device-initiated CSI report. The second value may be, for example, a non-zero value.

The DCI may schedule/trigger/indicate transmission of the CSI report via the uplink resource, for example, based on the first field being set/equal to the second value (e.g., 1). The DCI may schedule/trigger/indicate transmission of the CSI report via the uplink resource, for example, based on the first field being set/equal to the non-zero value.

The DCI may comprise, for example, a CSI request field with a value. The DCI may schedule/trigger/indicate transmission of the CSI report via the uplink resource, for example, based on the CSI request field being set/equal to the value. For example, the value may be zero. The DCI may schedule/trigger/indicate transmission of the CSI report via the uplink resource, for example, based on the value the CSI request field being set/equal to zero. For example, the value may be a predefined/preconfigured/preset/fixed value. The DCI may schedule/trigger/indicate transmission of the CSI report via the uplink resource, for example, based on the value the CSI request field being set/equal to the predefined value (e.g., 0, 1, or 11... 11).

The DCI may schedule/trigger/indicate transmission of the CSI report via the uplink resource, for example, based on the CSI request field being set/equal to all one(s). The DCI may schedule/trigger/indicate transmission of the CSI report via the uplink resource based on the CSI request field being set/equal to '11', for example, if the CSI request field is 2 bits. The DCI may schedule/trigger/indicate transmission of the CSI report via the uplink resource based on the CSI request field being set/equal to '1111', for example, if/when the CSI request field is 4 bits.

The DCI may trigger an aperiodic CSI report, for example, if the CSI request field is set/equal to a second value different from the value. The DCI may trigger the aperiodic CSI report, for example, if the second value of the CSI request field is different from zero. The DCI may trigger the aperiodic CSI report, for example, if the second value of the CSI request field is set/equal to a non-zero value. The DCI may trigger an aperiodic CSI report or a wireless device-initiated CSI report, for example, based on a value of the CSI request field. The DCI may trigger an aperiodic CSI report or indicate an uplink resource for a wireless device-initiated CSI report, for example, based on a value of the CSI request field.

The one or more configuration parameters may comprise a list of aperiodic trigger states (e.g., *CSI-Aperiodic-TriggerStateList*). The CSI request field (or a value of the CSI request field or a non-zero value of the CSI request field) in the DCI may indicate a trigger state (e.g., *CSI-AperiodicTriggerState*) in the list of aperiodic trigger states.

The one or more configuration parameters may comprise a list of associated report configuration information parameters of/for the trigger state (e.g., *associatedReportConfigInfoList*). The trigger state may indicate (or may be associated with) one or more report configurations. The one or more configuration parameters may indicate, for the trigger state, the one or more report configurations. Each associated report configuration information parameter (e.g., *CSI-AssociatedReportConfigInfo*) in the list of associated report configuration information parameters may indicate (or may be associated with) a respective report configuration of the one or more report configurations.

The list of associated report configuration information parameters of the trigger state may comprise an associated report configuration information parameter (e.g., *CSI-AssociatedReportConfigInfo*). The associated report configuration information parameter of the trigger state may indicate (or be associated with) a report configuration of the one or more report configurations. The report configuration may be indicated/identified by a report configuration index/identifier/identity (e.g., *CSI-ReportConfigId, ReportConfigId*). The associated report configuration information parameter of the trigger state may comprise the report configuration index/identifier/identity indicating/identifying the report configuration. The associated report configuration information parameter of the trigger state may comprise a channel resource parameter (e.g., *resourcesForChannel, nzp-CSI-RS, resourceSet*).

The one or more configuration parameters may comprise one or more resource parameters (e.g., *resources-ForChannelMeasurement, csi-IM-ResourcesForInterference, nzp-CSI-RS-ResourcesForInterference*) for CSI measurement and reporting of the report configuration. The one or more resource parameters may indicate one or more reference signals (e.g., CSI-RS, SS/PBCH blocks). The one or more configuration parameters may indicate, for the report configuration, a report configuration type (e.g., *reportConfigType*). For example, the report configuration type may be set to a first value (e.g., 'EventTriggered' or 'wireless device-initiated') indicating a wireless device-initiated CSI reporting for the report configuration. The DCI may schedule/trigger/indicate transmission of the CSI report via the uplink resource, for example, based on the CSI request field indicating the trigger state that is associated with the report configuration with the report configuration type set to the first value.

The wireless device may ignore the channel resource parameter, for example, based on the report configuration type of the report configuration being set to the first value. The wireless device may measure the one or more reference signals before receiving the DCI, for example, based on the report configuration type of the report configuration being set to the first value. The wireless device may measure, for a wireless device-initiated CSI reporting, the one or more reference signals before receiving the DCI, for example, based on the report configuration type of the report configuration being set to the first value. For example, the report configuration type may be set to a second value (e.g., 'aperiodic') indicating an aperiodic CSI reporting for the report configuration.

The wireless device may use the channel resource parameter, for example, based on the report configuration type of the report configuration being set to the second value. The wireless device may measure, for channel measurements, the one or more reference signals after receiving the DCI, for example, based on the report configuration type of the report configuration being set to the second value.

The wireless device may cancel the CSI reporting (e.g., the CSI reporting procedure). The wireless device may cancel the CSI reporting (e.g., the CSI reporting procedure), for example, based on the DCI triggering the aperiodic CSI report. The wireless device may cancel the CSI reporting (e.g., the CSI reporting procedure), for example, based on the CSI request field of/in the DCI being set to a non-zero value. The wireless device may cancel the CSI reporting (e.g., the CSI reporting procedure), for example, based on the second value of the CSI request field of/in the DCI being equal to non-zero. A wireless device may cancel a triggered wireless device-initiated CSI reporting, for example, if/when the *CSI request* field in DCI is set to non-zero.

The wireless device may perform/transmit/send the CSI reporting (e.g., the wireless device-initiated CSI reporting) using PUSCH on/via the cell (e.g., serving cell c), for example, based on (e.g., upon) successful decoding/detection/reception of the DCI format (e.g., DCI format 0_1 or DCI format 0_2) that schedules/indicates/triggers the CSI report (e.g., the wireless device-initiated CSI report). The wireless device may perform/transmit/send the CSI reporting (e.g., the wireless device-initiated CSI reporting) on the cell (e.g., the serving cell) with the smallest serving cell index among serving cell indexes of a plurality of cells scheduled by the DCI format 0_3 that schedules/indicates/triggers the CSI report (e.g., the wireless device-initiated CSI report). The plurality of cells may comprise the cell.

No wireless device-initiated CSI report is requested/scheduled, for example, if the first field (e.g., wireless device-initiated beam report request/indicator/indication/flag field) in the DCI is set to zero. A wireless device-initiated CSI is requested/scheduled, for example, if the first field (e.g. the wireless device-initiated beam report request/indicator/indication/flag field) in the DCI is set to one. The DCI (e.g., DCI 1914, DCI 1954, DCI at time T2 in FIG. 20) indicating the uplink resource for transmission of the CSI report, for example, the wireless device may receive/detect, in a time slot and via the cell. The base station may send (e.g., transmit), to the wireless device and in the time slot and via the cell, the DCI.

The wireless device may not receive/detect, in the time slot and via the cell, a second DCI indicating a second uplink resource for transmission of a second CSI report. The base station may not send (e.g., transmit), to the wireless device and in the time slot and via the cell, a second DCI indicating a second uplink resource for transmission of a second CSI report.

The wireless device may receive/detect, in a time slot and via the cell, the DCI (e.g., DCI 1914, DCI 1954, DCI at time T2 in FIG. 20) with the first field set to a non-zero value. The base station may send (e.g., transmit), to the wireless device and in the time slot and via the cell, the DCI with the first field set to the non-zero value. The wireless device may not receive/detect, in the time slot and via the cell, a second DCI with the first field set to a non-zero value. The base station may not send (e.g., transmit), to the wireless device and in the time slot and via the cell, a second DCI with the first field set to a non-zero value. The wireless device may not be expected to receive more than one DCI with non-zero first field (e.g., wireless device-initiated beam report request/indicator/indication/flag field) per slot per cell. The base station may not send (e.g., transmit), to the wireless device, more than one DCI with non-zero first field (e.g., wireless device-initiated beam report request/indicator/indication/flag field) per slot per cell.

The wireless device may receive/detect, in a time slot and via the cell in a cell group (e.g., PUCCH cell group, PUCCH group, master cell group, secondary cell group, and the like), the DCI (e.g., DCI 1914, DCI 1954, DCI at time T2 in FIG. 20) with the first field set to a non-zero value. The base station may send (e.g., transmit), to the wireless device and in the time slot and via the cell in the cell group, the DCI with the first field set to the non-zero value. The wireless device may not receive/detect, in a second time slot that overlaps with the time slot and via a second cell in the cell group, a second DCI with the first field set to a non-zero value. The base station may not send (e.g., transmit), to the wireless device and in the second time slot and via the second cell in the cell group, a second DCI with the first field set to a non-zero value.

The wireless device may not be expected to receive a second DCI with non-zero first field (e.g., wireless device-initiated beam report request/indicator/indication/flag field) within a cell group in a slot overlapping with any slot that the wireless device receives a first DCI with a non-zero field within the same cell group. The base station may not send (e.g., transmit), to the wireless device, a second DCI with non-zero first field (e.g., wireless device-initiated beam report request/indicator/indication/flag field) within a cell group in a slot overlapping with any slot that the base station may send (e.g., transmit), to the wireless device, a first DCI with a non-zero field within the same cell group.

The wireless device may not receive/detect a DCI with a first field (e.g., wireless device-initiated beam report request/indicator/indication/flag field) set to a non-zero value and with a CSI request field set to a non-zero value. The wireless device may not be expected to receive a DCI with a first field (e.g., wireless device-initiated beam report request/indicator/indication/flag field) set to a non-zero value and with a CSI request field set to a non-zero value. The wireless device may not be expected to receive a DCI with a first field (e.g., wireless device-initiated beam report request/indicator/indication/flag field) and a CSI request field set both set to a non-zero value.

The base station may not send (e.g., transmit), to the wireless device, a DCI with a first field (e.g., wireless device-initiated beam report request/indicator/indication/flag field) set to a non-zero value and with a CSI request field set to a non-zero value. The base station may not send (e.g., transmit), to the wireless device, a DCI with a first field (e.g., wireless device-initiated beam report request/indicator/indication/flag field) set to a non-zero value and with a CSI request field set to a non-zero value. The base station may not send (e.g., transmit), to the wireless device, a DCI with a first field (e.g., wireless device-initiated beam report request/indicator/indication/flag field) and a CSI request field set both set to a non-zero value.

The first field (e.g., wireless device-initiated beam report request/indicator/indication/flag field) may not be set to a non-zero value, for example, if the CSI request field in the DCI is set to a non-zero value. The wireless device may not be expected to receive a DCI with a first field (e.g., wireless device-initiated beam report request/indicator/indication/flag field) set to a non-zero value if/when a CSI request field in the DCI is set to a non-zero value. The base station may not send (e.g., transmit), to the wireless device, a DCI with a first field (e.g., wireless device-initiated beam report request/indicator/-indication/flag field) set to a non-zero value if/when a CSI request field in the DCI is set to a non-zero value. The base station may set the value of/for the first field. The base station may set the value of/for the CSI request field.

The wireless device capability information message may not indicate capability/support of triggering sounding reference signal (SRS) by a DCI (e.g., *'srs-TriggeringDCI'*) The DCI (e.g., DCI 1914 in FIG. 19A, DCI 1954 in FIG. 19C, DCI 2040 at time T2 in FIG. 20) indicating the uplink resource for transmission of the CSI report may comprise an uplink shared channel (UL-SCH) indicator field with a first value and a channel state information (CSI) request field with a second value.

Both the first value of the UL-SCH indicator field and the second value of the CSI request field may be equal/set to zero, for example, based on the one or more configuration parameters comprising the first parameter that enables detection of a DCI format (e.g., DCI format 0_1, DCI format 0_2) indicating an uplink resource (e.g., PUSCH resource) to send (e.g., transmit) a wireless device-initiated CSI report. The base station may set both the first value of the UL-SCH indicator field and the second value of the CSI request field to zero, for example, based on (or if/when) the one or more configuration parameters comprising the first parameter.

Both the first value of the UL-SCH indicator field and the second value of the CSI request field may be equal/set to zero, for example, based on the wireless device capability information message indicating support/capability of detection of the DCI format indicating the uplink resource (e.g., PUSCH resource, PUSCH occasions/resources) to transmit/carry the wireless device-initiated CSI report. The base station may set both the first value of the UL-SCH indicator field and the second value of the CSI request field to zero, for example, based on (or if/when) the wireless device capability information message indicating support/capability of detection of the DCI format indicating the uplink resource (e.g., PUSCH resource, PUSCH occasions/resources) to transmit/carry the wireless device-initiated CSI report.

The one or more configuration parameters may not comprise a first parameter that enables detection of a DCI format 0_1 indicating an uplink resource (e.g., PUSCH resource) to send (e.g., transmit) a wireless device-initiated CSI report. At least one of the first value of the UL-SCH indicator field and the second value of the CSI request field may be equal/set to non-zero, for example, based on the one or more configuration parameters not comprising the first parameter that enables detection of a DCI format (e.g., DCI format 0_1, DCI format 0_2) indicating an uplink resource (e.g., PUSCH resource) to send (e.g., transmit) a wireless device-initiated CSI report. Both the first value of the UL-SCH indicator field and the second value of the CSI request field may not be equal/set to zero, for example, based on the one or more configuration parameters not comprising the first parameter that enables detection of a DCI format (e.g., DCI format 0_1, DCI format 0_2) indicating an uplink resource (e.g., PUSCH resource) to send (e.g., transmit) a wireless device-initiated CSI report. The base station may not set both the first value of the UL-SCH indicator field and the second value of the CSI request field to zero, for example, based on (or if/when) the one or more configuration parameters not comprising the first parameter. The base station may set at least one of the first value of the UL-SCH indicator field and the second value of the CSI request field to non-zero, for example, based on (or if/when) the one or more configuration parameters not comprising the first parameter. For example, the first value of the UL-SCH indicator field may be equal/set to zero and the second value of the CSI request field may be equal/set to non-zero. For example, the first value of the UL-SCH indicator field may be equal/set to non-zero and the second value of the CSI request field may be equal/set to zero. For example, the first value of the UL-SCH indicator field may be equal/set to non-zero and the second value of the CSI request field may be equal/set to non-zero.

The wireless device capability information message may not indicate support/capability of detection of a DCI format indicating an uplink resource (e.g., PUSCH resource, PUSCH occasions/resources) to send/transmit/carry a wireless device-initiated CSI report. At least one of the first value of the UL-SCH indicator field and the second value of the CSI request field may be equal/set to non-zero, for example, based on the wireless device capability information message not indicating support/capability of detection of a DCI format indicating an uplink resource (e.g., PUSCH resource, PUSCH occasions/resources) to send/transmit/carry a wireless device-initiated CSI report. Both the first value of the UL-SCH indicator field and the second value of the CSI request field may not be equal/set to zero, for example, based on the wireless device capability information message not indicating support/capability of detection of a DCI format indicating an uplink resource (e.g., PUSCH resource, PUSCH occasions/resources) to send/transmit/carry a wireless device-initiated CSI report. The base station may not set both the first value of the UL-SCH indicator field and the second value of the CSI request field to zero, for example, based on (or if/when) the wireless device capability information message not indicating support/capability of detection of a DCI format indicating an uplink resource (e.g., PUSCH resource, PUSCH occasions/resources) to transmit/carry a wireless device-initiated CSI report. The base station may set at least one of the first value of the UL-SCH indicator field and the second value of the CSI request field to non-zero, for example, based on (or if/when) the wireless device capability information message not indicating support/capability of detection of a DCI format indicating an uplink resource (e.g., PUSCH resource, PUSCH occasions/resources) to transmit/carry a wireless device-initiated CSI report. For example, the first value of the UL-SCH indicator field may be equal/set to zero and the second value of the CSI request field may be equal/set to non-zero. For example, the first value of the UL-SCH indicator field may be equal/set to non-zero and the second value of the CSI request field may be equal/set to zero. For example, the first value of the UL-SCH indicator field may be equal/set to non-zero and the second value of the CSI request field may be equal/set to non-zero.

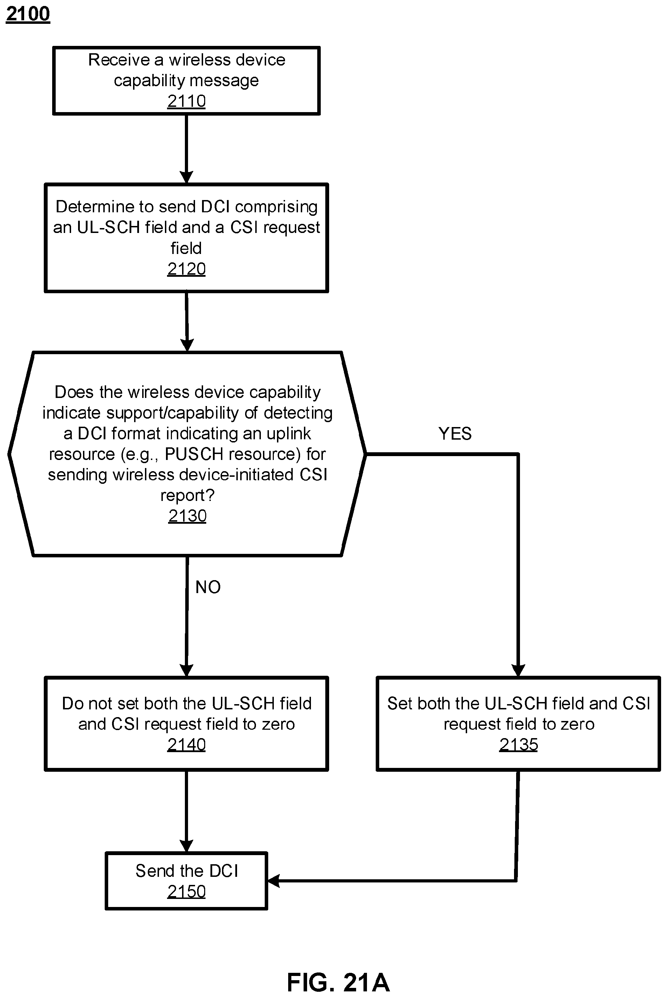

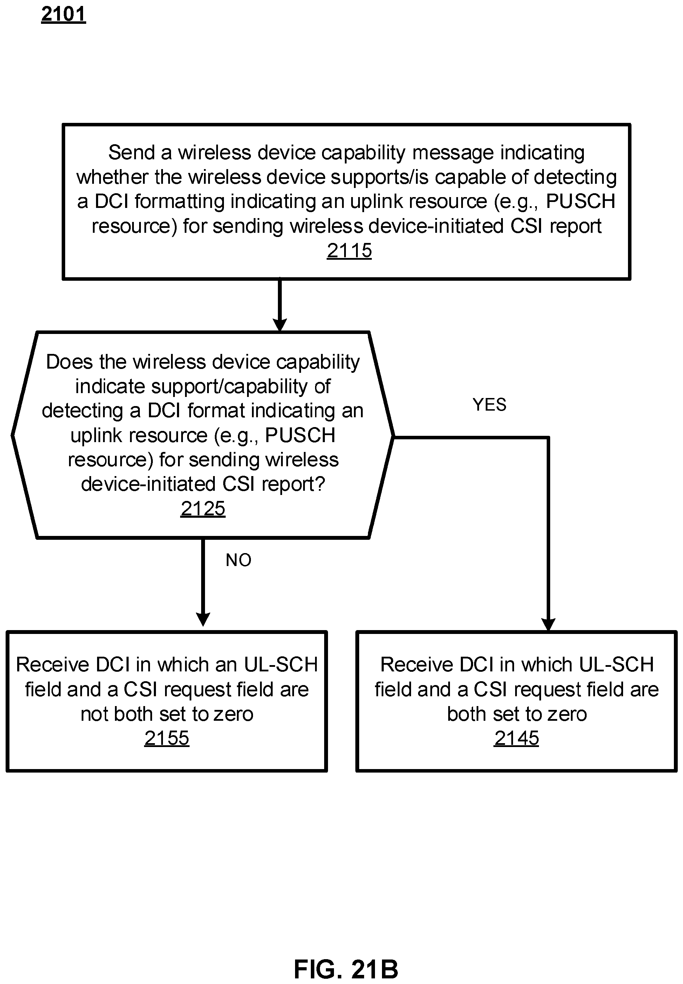

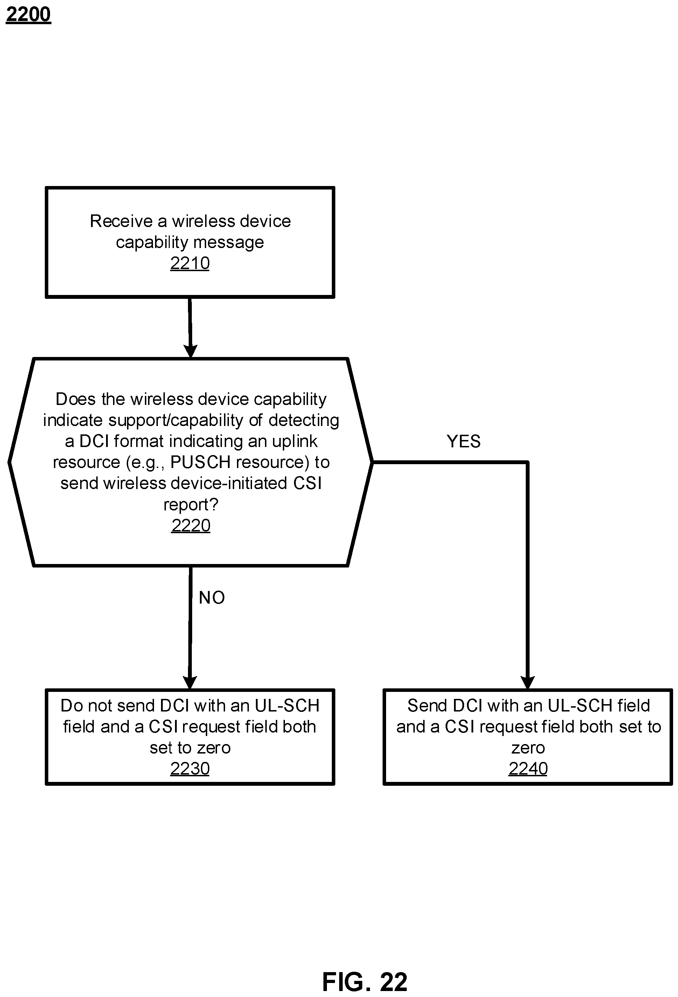

FIG. 21A and FIG. 21B show example methods 2100 and 2101 for wireless communication configuration. FIG. 22 shows an example method 2200 for wireless communication configuration.

A wireless device reporting its wireless device capability 'srs-TriggeringDCI' may be indicated with a DCI format 0_1 and a DCI format 0_2 to trigger aperiodic SRS without data and without CSI. Otherwise, except for a DCI format 0_1/0_2 with CRC scrambled by SP-CSI-RNTI, wireless device may not be expected to receive a DCI format 0_1/0_2 with a UL-SCH indicator field of "0" and a CSI request field of all zero(s).

Additionally or alternatively, the wireless device may receive DCI in which an UL-SCH field and a CSI request field are not both set to zero. For example, if the wireless device does not report its wireless device capability of detecting a DCI format indicating an uplink resource (e.g., PUSCH resource) to send (e.g., transmit) a wireless device-initiated CSI report, the wireless device may not be expected to receive a DCI format 0_1/0_2 with a UL-SCH indicator field of "0" and a CSI request field of all zero(s).

A base station may send (e.g., transmit), to the wireless device reporting its wireless device capability 'srs-TriggeringDCI', a DCI format 0_1 and a DCI format 0_2 triggering aperiodic SRS without data and without CSI. If/when the wireless device does not report its wireless device capability 'srs-TriggeringDCI', the base station may not send (e.g., transmit), to the wireless device, a DCI format 0_1/0_2 with a UL-SCH indicator field of "0" and a CSI request field of all zero(s), except for the DCI format 0_1/0_2 with CRC scrambled by SP-CSI-RNTI and/or the wireless device reporting its wireless device capability of detecting a DCI format indicating an uplink resource (e.g., PUSCH resource) to send (e.g., transmit) a wireless device-initiated CSI report. If/when the wireless device does not report its wireless device capability 'srs-TriggeringDCI' and does not report its wireless device capability of detecting a DCI format indicating an uplink resource (e.g., PUSCH resource) to send (e.g., transmit) a wireless device-initiated CSI report, the base station may not send (e.g., transmit), to the wireless device, a DCI format 0_1/0_2 with a UL-SCH indicator field of "0" and a CSI request field of all zero(s), except for the DCI format 0_1/0_2 with CRC scrambled by SP-CSI-RNTI.

At step 2130 (in FIG. 21A), at step 2125 (in FIG. 21B), and/or at step 2220 (in FIG. 22), whether the wireless device capability indicates support for detecting a DCI format indicating an uplink resource for sending a wireless device-initiated CSI report may be determined. If yes, step 2135 (in FIG. 21A), step 2145 (in FIG. 21B), step 2240 (in FIG. 22) may be performed. For example, at step 2135 (in FIG. 21A), the base station may set both the UL-SCH field and CSI request field to zero. For example, if/when the wireless device reports its wireless device capability of detecting a DCI format indicating an uplink resource (e.g., PUSCH resource) to send (e.g., transmit) a wireless device-initiated CSI report (e.g., yes at step 2220 in FIG. 22) and does not report its wireless device capability 'srs-TriggeringDCI', the base station may send (e.g., transmit), to the wireless device, a DCI format 0_1/0_2 with a UL-SCH indicator field of "0" and a CSI request field of all zero(s) (e.g., at step 2240 in FIG. 22). At step 2150 (in FIG. 21A), the base station may send, to the wireless device, the DCI. At 2145 (in FIG. 21B), the wireless station may receive DCI in which UL-SCH field and a CSI request field are both set to zero.

At step 2130 (in FIG. 21A), at step 2125 (in FIG. 21B), and/or at step 2220 (in FIG. 22), whether the wireless device capability indicates support for detecting a DCI format indicating an uplink resource for sending a wireless device-initiated CSI report may be determined. If no, step 2140 (in FIG. 21A), step 2155 (in FIG. 21B), step 2230 (in FIG. 22) may be performed. For example, at step 2140 (in FIG. 21A), the base station may not set both the UL-SCH field and CSI request field to zero. For example, if the wireless device does not support triggering SRS only in DCI (e.g., 'srs-TriggeringDCI') or does not support detecting a DCI format indicating an uplink resource to send (e.g., transmit) a wireless device-initiated CSI report, except for DCI format 0_1 with CRC scrambled by SP-CSI-RNTI, the wireless device may not be expected to receive a DCI format 0_1/0_2/0_3 with a UL-SCH indicator field of "0" and a CSI request field of all zero(s). At step 2230 (in FIG. 22), the base station may not send (e.g., transmit), to the wireless device, a DCI format 0_1/0_2/0_3 with a UL-SCH indicator field of "0" and a CSI request field of all zero(s) if/when the wireless device capability information message does not indicate support/capability of triggering SRS only in DCI (e.g., 'srs-TriggeringDCI') or does not indicate support/capability of detecting a DCI format indicating an uplink resource to send (e.g., transmit) a wireless device-initiated CSI report (e.g., no at 2220 in FIG. 22). At step 2150 (in FIG. 21A), the base station may send, to the wireless device, the DCI. At step 2155 (in FIG. 21B), the wireless device may receive DCI in which an UL-SCH field and a CSI request field are not both set to zero.

The wireless device reporting its wireless device capability 'srs-TriggeringDCI' may be indicated with a DCI format 0_1 and a DCI format 0_2 to trigger aperiodic SRS without data and without CSI. Otherwise, except for a DCI format 0_1/0_2 with CRC scrambled by SP-CSI-RNTI and/or the wireless device configured/enabled with a higher layer parameter enabling detection of a DCI format indicating an uplink resource (e.g., PUSCH resource) to send (e.g., transmit) a wireless device-initiated CSI report, the wireless device may not be expected to receive a DCI format 0_1/0_2 with a UL-SCH indicator field of "0" and a CSI request field of all zero(s).

A base station may send (e.g., transmit), to the wireless device reporting its wireless device capability 'srs-TriggeringDCI', a DCI format 0_1 and a DCI format 0_2 triggering aperiodic SRS without data and without CSI. If/when the wireless device does not report its wireless device capability 'srs-TriggeringDCI', the base station may not send (e.g., transmit), to the wireless device, a DCI format 0_1/0_2 with a UL-SCH indicator field of "0" and a CSI request field of all zero(s), except for the DCI format 0_1/0_2 with CRC scrambled by SP-CSI-RNTI and/or for the wireless device configured/enabled with a higher layer parameter enabling detection of a DCI format indicating an uplink resource (e.g., PUSCH resource) to send (e.g., transmit) a wireless device-initiated CSI report. If/when the wireless device does not report its wireless device capability 'srs-TriggeringDCI' and is not configured/enabled with a higher layer parameter enabling detection of a DCI format indicating an uplink resource (e.g., PUSCH resource) to send (e.g., transmit) a wireless device-initiated CSI report, the base station may not send (e.g., transmit), to the wireless device, a DCI format 0_1/0_2 with a UL-SCH indicator field of "0" and a CSI request field of all zero(s), except for the DCI format 0_1/0_2 with CRC scrambled by SP-CSI-RNTI. If/when the wireless device is configured/enabled with a higher layer parameter enabling detection of a DCI format indicating an uplink resource (e.g., PUSCH resource) to send (e.g., transmit) a wireless device-initiated CSI report and does not report its wireless device capability 'srs-TriggeringDCI', the base station may send (e.g., transmit), to the wireless device, a DCI format 0_1/0_2 with a UL-SCH indicator field of "0" and a CSI request field of all zero(s).

The wireless device may not be expected to receive a DCI format 0_1/0_2/0_3 with a UL-SCH indicator field of "0" and a CSI request field of all zero(s), for example, if the wireless device does not support triggering SRS only in DCI (e.g., 'srs-TriggeringDCI') or is not configured/enabled/indicated with a higher layer parameter enabling detection of a DCI format indicating an uplink resource (e.g., PUSCH resource) to send (e.g., transmit) a wireless device-initiated CSI report, except for DCI format 0_1 with CRC scrambled by SP-CSI-RNTI. The base station may not send (e.g., transmit), to the wireless device, a DCI format 0_1/0_2/0_3 with a UL-SCH indicator field of "0" and a CSI request field of all zero(s) if/when the wireless device capability information message does not indicate support/capability of triggering SRS only in DCI (e.g., 'srs-TriggeringDCI') or the base station does not configure/indicate, to the wireless device, a higher layer parameter enabling detection of a DCI format indicating an uplink resource (e.g., PUSCH resource) to send (e.g., transmit) a wireless device-initiated CSI report.

The wireless device may not be expected to receive a DCI format 0_1/0_2/0_3 with a UL-SCH indicator field of "0", CSI request field of all zero(s) and SRS request field of all zero(s), for example, if the wireless device supports triggering SRS only in DCI (e.g., 'srs-TriggeringDCI'), except for DCI format 0_1 with CRC scrambled by SP-CSI-RNTI and/or for the wireless device reporting its wireless device capability of detecting a DCI format indicating an uplink resource (e.g., PUSCH resource) to send (e.g., transmit) a wireless device-initiated CSI report. If the wireless device supports triggering SRS only in DCI, except for the wireless device reporting its wireless device capability of detecting a DCI format indicating an uplink resource (e.g., PUSCH resource) to send (e.g., transmit) a wireless device-initiated CSI report, the wireless device may not be expected to receive a DCI format 0_1/0_2/0_3 with a UL-SCH indicator field of "0", a CSI request field of all zero(s) and an SRS request field of all zero(s). If/when the wireless device supports triggering SRS only in DCI, if the wireless device does not report its wireless device capability of detecting a DCI format indicating an uplink resource (e.g., PUSCH resource) to send (e.g., transmit) a wireless device-initiated CSI report, the wireless device may not be expected to receive a DCI format 0_1/0_2/0_3 with a UL-SCH indicator field of "0", a CSI request field of all zero(s) and an SRS request field of all zero(s). If/when the wireless device supports triggering SRS only in DCI, if the wireless device reports its wireless device capability of detecting a DCI format indicating an uplink resource (e.g., PUSCH resource) to send (e.g., transmit) a wireless device-initiated CSI report, the wireless device may be expected to receive a DCI format 0_1/0_2/0_3 with a UL-SCH indicator field of "0", a CSI request field of all zero(s) and an SRS request field of all zero(s).

The base station may not send (e.g., transmit), to the wireless device that supports triggering SRS only in DCI (e.g., 'srs-TriggeringDCI'), a DCI format 0_1/0_2/0_3 with a UL-SCH indicator field of "0", a CSI request field of all zero(s) and an SRS request field of all zero(s), except for the DCI format 0_1 with CRC scrambled by SP-CSI-RNTI and/or for the wireless device reporting its wireless device capability of detecting a DCI format indicating an uplink resource (e.g., PUSCH resource) to send (e.g., transmit) a wireless device-initiated CSI report. The base station may not send (e.g., transmit), to the wireless device that supports triggering SRS only in DCI, a DCI format 0_1/0_2/0_3 with a UL-SCH indicator field of "0", a CSI request field of all zero(s) and an SRS request field of all zero(s), except for the wireless device reporting its wireless device capability of detecting a DCI format indicating an uplink resource (e.g., PUSCH resource) to send (e.g., transmit) a wireless device-initiated CSI report. The base station may not send (e.g., transmit), to the wireless device that supports triggering SRS only in DCI, a DCI format 0_1/0_2/0_3 with a UL-SCH indicator field of "0", a CSI request field of all zero(s) and an SRS request field of all zero(s) if the wireless device does not report its wireless device capability of detecting a DCI format indicating an uplink resource (e.g., PUSCH resource) to send (e.g., transmit) a wireless device-initiated CSI report. The base station may send (e.g., transmit), to the wireless device that supports triggering SRS only in DCI, a DCI format 0_1/0_2/0_3 with a UL-SCH indicator field of "0", a CSI request field of all zero(s) and an SRS request field of all zero(s) if the wireless device reports its wireless device capability of detecting a DCI format indicating an uplink resource (e.g., PUSCH resource) to send (e.g., transmit) a wireless device-initiated CSI report.

The wireless device may not be expected to receive a DCI format 0_1/0_2/0_3 with a UL-SCH indicator field of "0", a CSI request field of all zero(s) and an SRS request field of all zero(s), for example, if the wireless device supports triggering SRS only in DCI (e.g., 'srs-TriggeringDCI'), except for DCI format 0_1 with CRC scrambled by SP-CSI-RNTI and/or for the wireless device configured/enabled/indicated with a higher layer parameter enabling detection of a DCI format indicating an uplink resource (e.g., PUSCH resource) to send (e.g., transmit) a wireless device-initiated CSI report. The wireless device may not be expected to receive a DCI format 0_1/0_2/0_3 with a UL-SCH indicator field of "0", a CSI request field of all zero(s) and an SRS request field of all zero(s), for example, if the wireless device supports triggering SRS only in DCI, except for the wireless device configured/enabled/indicated with a higher layer parameter enabling detection of a DCI format indicating an uplink resource (e.g., PUSCH resource) to send (e.g., transmit) a wireless device-initiated CSI report. If/when the wireless device supports triggering SRS only in DCI, if the wireless device is not configured/enabled/indicated with a higher layer parameter enabling detection of a DCI format indicating an uplink resource (e.g., PUSCH resource) to send (e.g., transmit) a wireless device-initiated CSI report, the wireless device may not be expected to receive a DCI format 0_1/0_2/0_3 with a UL-SCH indicator field of "0", a CSI request field of all zero(s) and an SRS request field of all zero(s). If/when the wireless device supports triggering SRS only in DCI, if the wireless device is configured/enabled/indicated with a higher layer parameter enabling detection of a DCI format indicating an uplink resource (e.g., PUSCH resource) to send (e.g., transmit) a wireless device-initiated CSI report, the wireless device may be expected to receive a DCI format 0_1/0_2/0_3 with a UL-SCH indicator field of "0", a CSI request field of all zero(s) and an SRS request field of all zero(s).

The base station may not send (e.g., transmit), to the wireless device that supports triggering SRS only in DCI (e.g., 'srs-TriggeringDCI'), a DCI format 0_1/0_2/0_3 with a UL-SCH indicator field of "0", a CSI request field of all zero(s) and an SRS request field of all zero(s), except for DCI format 0_1 with CRC scrambled by SP-CSI-RNTI and/or for the wireless device configured/enabled/indicated with a higher layer parameter enabling detection of a DCI format indicating an uplink resource (e.g., PUSCH resource) to send (e.g., transmit) a wireless device-initiated CSI report. The base station may not send (e.g., transmit), to the wireless device that supports triggering SRS only in DCI, a DCI format 0_1/0_2/0_3 with a UL-SCH indicator field of "0", a CSI request field of all zero(s) and an SRS request field of all zero(s), except for the wireless device configured/enabled/indicated with a higher layer parameter enabling detection of a DCI format indicating an uplink resource (e.g., PUSCH resource) to send (e.g., transmit) a wireless device-initiated CSI report. The base station may not send (e.g., transmit), to the wireless device that supports triggering SRS only in DCI, a DCI format 0_1/0_2/0_3 with a UL-SCH indicator field of "0", a CSI request field of all zero(s) and an SRS request field of all zero(s) if the wireless device is not configured/enabled/indicated with a higher layer parameter enabling detection of a DCI format indicating an uplink resource (e.g., PUSCH resource) to send (e.g., transmit) a wireless device-initiated CSI report. The base station may send (e.g., transmit), to the wireless device that supports triggering SRS only in DCI, a DCI format 0_1/0_2/0_3 with a UL-SCH indicator field of "0", a CSI request field of all zero(s) and an SRS request field of all zero(s) if the wireless device is configured/enabled/indicated with a higher layer parameter enabling detection of a DCI format indicating an uplink resource (e.g., PUSCH resource) to send (e.g., transmit) a wireless device-initiated CSI report.

The wireless device may receive a DCI (e.g., DCI format 0_1/0_2/0_3) scheduling a PUSCH transmission. The DCI may comprise an UL-SCH indicator field. A value of "1" of the UL-SCH indicator field may indicate UL-SCH may be sent (e.g., transmitted) on the PUSCH transmission. A value of "0" of the UL-SCH indicator field may indicate UL-SCH may not be sent (e.g., transmitted) on the PUSCH transmission.

The wireless device reporting its wireless device capability 'srs-TriggeringDCI' or reporting its wireless device capability of triggering SRS by/in a DCI may comprise the wireless device capability information message comprising capability parameter 'srs-TriggeringDCI' or the wireless device capability information message indicating capability/support of triggering SRS by/in a DCI.

At step 2110 (in FIG. 21A) and at step 2210 (in FIG. 22), a base station may receive (e.g., from a wireless device) a wireless device capability message. At step 2115 (in FIG. 21B), a wireless device may send a wireless device capability message indicating whether the wireless device supports/is capable of detecting a DCI formatting indicating an uplink resource (e.g., PUSCH resource) for sending wireless device-initiated CSI report. For example, the wireless device reporting its wireless device capability (e.g., UE capability) of detecting a DCI format indicating an uplink resource (e.g., PUSCH resource) to send (e.g., transmit) a wireless device-initiated CSI report (e.g., UE initiated CSI report) may comprise the wireless device capability information message indicating capability/support of detecting a DCI format indicating an uplink resource (e.g., PUSCH resource) to send (e.g., transmit) a wireless device-initiated CSI report.

The wireless device capability information message may indicate support of CSI reporting cross (or across) PUCCH groups. The PUCCH groups may comprise different PUCCH groups. For example, the PUCCH groups may comprise a primary PUCCH group and a secondary PUCCH group. The wireless device capability information message (e.g., UE capability message) may comprise a parameter (e.g., *csi-ReportingCrossPUCCH-Grp)* indicating the support of CSI reporting cross (or across) PUCCH groups.

The primary PUCCH group may be a group of serving cells including PCell whose PUCCH signaling is associated with the PUCCH on PCell. The secondary PUCCH group may be a group of SCells whose PUCCH signaling is associated with the PUCCH on the PUCCH SCell.

The parameter (e.g., *csi-ReportingCrossPUCCH-Grp)* may indicate (or may comprise):

- Support reporting CSI of an SCell belonging to the secondary PUCCH group by PUSCH or PUCCH of active serving cells belonging to the primary PUCCH group, for both during and after SCell activation procedure;

- Support reporting CSI of an SCell belonging to the primary PUCCH group by PUSCH or PUCCH of active serving cells belonging to the secondary PUCCH group, for both during and after SCell activation procedure;

- Support for periodic CSI reporting and aperiodic CSI reporting and wireless device-initiated CSI reporting for cross-PUCCH group CSI reporting;

- *computationTimeForA-CSI* indicates the CSI computation time for aperiodic CSI reporting; if *'relaxed'* is reported, the *additionalSymbols* may be reported to indicate for each supported SCS the required additional quantity/number of symbols in addition to existing Z and Z' for aperiodic CSI report for cross-PUCCH group CSI reporting. The value *s14* indicates 14 symbols, and so on. For FR2-2 bands, the time relaxation values of the required additional quantity/number of symbols for SCS 480/960 kHz ($\mu=5$ and $\mu=6$) are the same amount of absolute time as wireless device reported for SCS 120kHz ($\mu=3$).

- *sp-CSI-ReportingOnPUCCH* indicates whether the wireless device supports semi-persistent CSI reporting on PUCCH for cross-PUCCH group CSI reporting;

- *sp-CSI-ReportingOnPUSCH* indicates whether the wireless device supports semi-persistent CSI reporting on PUSCH for cross-PUCCH group CSI reporting;

- wireless device-*initiated-CSI-ReportingOnPUSCH* indicates whether the wireless device supports wireless device-initiated-CSI reporting on PUSCH for cross-PUCCH group CSI reporting;

- *carrierTypePairList* indicates one or multiple supported carrier type pairs(s). For each supported carrier type pair in *carrierTypePairList:*

  ◦ carrierForCSI-Measurement indicates the carrier type in a PUCCH group in which CSI measurement is performed;

  ◦ carrierForCSI-Reporting indicates the carrier type in the other PUCCH group in which CSI report is performed, where a carrier type is one of {*fr1-NonSharedTDD, fr1-SharedTDD, fr1-NonSharedFDD, fr2*}

The parameter (e.g., *csi-ReportingCrossPUCCH-Grp*) may indicate (or may comprise) support for wireless device-initiated CSI reporting for cross-PUCCH group CSI reporting. This is different from support for periodic CSI reporting for cross-PUCCH group CSI reporting and support for aperiodic CSI reporting for cross-PUCCH group CSI reporting.

The parameter (e.g., *csi-ReportingCrossPUCCH-Grp*) may indicate (or may comprise) support for wireless device-initiated CSI reporting for cross-PUCCH group CSI reporting. This is different from support for semi-persistent CSI reporting for cross-PUCCH group CSI reporting.

The wireless device capability information message may comprise a first parameter (e.g., *UE-initiated-CSI-ReportingOnPUSCH, UE-initiated-CSI-Reporting, event-based-CSI-Reporting, UE-triggered-CSI-Reporting*) indicating whether the wireless device supports wireless device-initiated-CSI reporting on PUSCH for cross-PUCCH group CSI reporting. The first parameter is different from a second parameter (e.g., *sp-CSI-ReportingOnPUCCH*) indicating whether the wireless device supports semi-persistent CSI reporting on PUCCH for cross-PUCCH group CSI reporting. The first parameter is different from a third parameter (e.g., *sp-CSI-ReportingOnPUSCH*) indicating whether the wireless device supports semi-persistent CSI reporting on PUSCH for cross-PUCCH group CSI reporting.

At step 2120 (in FIG. 21A), as described herein, the DCI (e.g., DCI 1914 in FIG. 19A, DCI 1954 in FIG. 19C, DCI 2040 at time T2 in FIG. 20) indicating the uplink resource for transmission of the CSI report may comprise an uplink shared channel (UL-SCH) indicator field with a first value and a channel state information (CSI) request field with a second value. For example, the base station may send the DCI comprising the UL-SCH indicator field and the CSI field.

The base station may schedule/configure the wireless device-initiated CSI reporting in one PUCCH group only, for example, if the base station is not aware whether the wireless device supports of wireless device-initiated CSI reporting cross (or across) PUCCH groups. The CSI reporting may be delayed if the uplink in the configured/scheduled PUCCH group is not available. The delayed CSI reporting may lead to wrong scheduling decisions and increased retransmissions.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1. A method comprising receiving, by a wireless device, one or more configuration parameters.

Clause 2. The method of clause 2, wherein the one or more configuration parameters indicate a list of aperiodic trigger states that comprise a first aperiodic trigger state.

Clause 3. The method of any one of clauses 1 to 2, wherein the first aperiodic trigger state indicates a report configuration associated with wireless device-initiated channel state information (CSI) reporting.

Clause 4. The method of any one of clauses 1 to 3, further comprising receiving downlink control information (DCI) configured to schedule a physical uplink shared channel (PUSCH) transmission.

Clause 5. The method of any one of clauses 1 to 4, wherein the DCI comprises a CSI request field comprising a first value indicating the first aperiodic trigger state.

Clause 6. The method of any one of clauses 1 to 5, wherein the DCI comprises a first field comprising a second value indicating that the wireless device is to send a wireless device-initiated CSI report.

Clause 7. The method of any one of clauses 1 to 6, further comprising sending the wireless device-initiated CSI report via a PUSCH and based on: the first value of the CSI request field indicating the first aperiodic trigger state, and the first field being set to the second value.

Clause 8. The method of any one of clauses 1 to 7, further comprising sending, by the wireless device and to a base station, a wireless device capability information message.

Clause 9. The method of any one of clauses 1 to 8, wherein the wireless device capability information message indicates whether the wireless device has a capability to detect a DCI format that indicates an uplink resource for the wireless device-initiated CSI report.

Clause 10. The method of any one of clauses 1 to 9, further comprising sending, via a physical uplink control channel (PUCCH), a request for an uplink resource for a second wireless device-initiated CSI report.

Clause 11. The method of any one of clauses 1 to 10, further comprising receiving second DCI configured to schedule a second PUSCH transmission.

Clause 12. The method of any one of clauses 1 to 11, wherein the second DCI comprises a CSI request field comprising a non-zero value.

Clause 13. The method of any one of clauses 1 to 12, further comprising sending, based on the second DCI, the second wireless device-initiated CSI report.

Clause 14. The method of any one of clauses 1 to 13, further comprising sending, by the wireless device and prior to receiving the DCI, a request for the DCI, wherein the request for the DCI indicates a request to send the wireless device-initiated CSI report.

Clause 15. The method of any one of clauses 1 to 14, wherein the DCI comprises a DCI format 0_1 or a DCI format 0_2.

Clause 16. The method of any one of clauses 1 to 15, further comprising sending, via an uplink of an active uplink bandwidth part of a cell, the wireless device-initiated CSI report.

Clause 17. The method of any one of clauses 1 to 16, further comprising cancelling the wireless device-initiated CSI reporting based on the DCI triggering an aperiodic CSI report.

Clause 18. The method of any one of clauses 1 to 17, wherein the sending the wireless capability information message is based on receiving a wireless device capability enquiry message from the base station.

Clause 19. The method of any one of clauses 1 to 18, wherein a cyclic redundancy check (CRC) of the DCI format 0_1 or the DCI format 0_2 is not configured to be scrambled by a semi-persistent (SP)-CSI-radio network temporary identifier (SP-CSI-RNTI).

Clause 20. The method of any one of clauses 1 to 19, wherein the wireless device capability message indicates capability of triggering sounding reference signal (SRS) by the DCI.

Clause 21. The method of any one of clauses 1 to 20, wherein the DCI comprises an SRS request field that comprises a third value.

Clause 22. The method of any one of clauses 1 to 21, wherein the wireless device capability information message comprises a parameter configured to indicate support of the wireless device-initiated CSI reporting for a cross PUCCH group CSI reporting.

Clause 23. A computing device comprising: one or more processors; and memory storing instructions that, when executed by the one or more processors, cause the computing device to perform the method of any one of clauses 1 to 22.

Clause 24. A system comprising: a wireless device configured to perform the method of any one of clauses 1 to 22; and a base station configured to send the DCI.

Clause 25. A computer-readable medium storing instructions that, when executed, cause performance of the method of any one of clauses 1 to 22.

Clause 26. A method comprising receiving, by a wireless device, one or more configuration parameters.

Clause 27. The method of clause 26, wherein the one or more configuration parameters indicate a list of aperiodic trigger states that comprise a first aperiodic trigger state.

Clause 28. The method of any one of clauses 26 to 27, wherein the first aperiodic trigger state indicates a report configuration associated with wireless device-initiated channel state information (CSI) reporting.

Clause 29. The method of any one of clauses 26 to 28, further comprising sending a wireless device capability information message.

Clause 30. The method of any one of clauses 26 to 29, further comprising receiving downlink control information (DCI) comprising: a channel state information (CSI) request field comprising a first value, and a first field comprising a second value.

Clause 31. The method of any one of clauses 26 to 30, wherein both the first value and the second value are zero, if the wireless device capability information message indicates a capability to detect a DCI format indicating an uplink resource for a wireless device-initiated CSI report.

Clause 32. The method of any one of clauses 26 to 31, wherein at least one of the first value and the second value is non-zero, if the wireless device capability information message does not indicate a capability to detect a DCI format indicating an uplink resource for a wireless device-initiated CSI report.

Clause 33. The method of any one of clauses 26 to 32, further comprising sending the wireless-initiated CSI report via a physical uplink shared channel (PUSCH) and based on: the first value of the CSI request field indicating the aperiodic trigger state and the first field being set to the second value.

Clause 34. The method of any one of clauses 26 to 33, wherein the sending the wireless device capability information message is based on receiving a wireless device capability enquiry message from the base station.

Clause 35. The method of any one of clauses 26 to 34, further comprising sending, via an uplink of an active uplink bandwidth part of a cell, the wireless device-initiated CSI report.

Clause 36. The method of any one of clauses 26 to 35, wherein the DCI is configured to schedule transmission of the wireless device-initiated CSI report based on the first value and the second value being set to zero.

Clause 37. The method of any one of clauses 26 to 36, further comprising sending, by the wireless device and prior to receiving the DCI, a request for the DCI, wherein the request for the DCI indicates a request to send the wireless device-initiated CSI report.

Clause 38. The method of any one of clauses 26 to 37, wherein, based on a radio resource control (RRC) parameter enabling detection of the DCI format indicating the uplink resource, the DCI comprises a wireless-initiated beam report request field.

Clause 39. The method of any one of clauses 26 to 38, wherein the wireless device-initiated beam report request field comprises one of a first value or a second value.

Clause 40. The method of any one of clauses 26 to 39, wherein the first value indicates no transmission of a wireless device-initiated CSI report.

Clause 41. The method of any one of clauses 26 to 40, wherein the second value indicates transmission of a wireless device-initiated CSI report.

Clause 42. The method of any one of clauses 26 to 41, wherein the DCI comprises a sounding reference signal (SRS) request field.

Clause 43. A computing device comprising: one or more processors; and memory storing instructions that, when executed by the one or more processors, cause the computing device to perform the method of any one of clauses 26 to 42.

Clause 44. A system comprising: a wireless device configured to perform the method of any one of clauses 26 to 42; and a base station configured to send the DCI.

Clause 45. A computer-readable medium storing instructions that, when executed, cause performance of the method of any one of clauses 26 to 42.

Clause 46. A method comprising sending, by a base station, one or more configuration parameters.

Clause 47. The method of clause 46, wherein the one or more configuration parameters indicate a list of aperiodic trigger states that comprise a first aperiodic trigger state.

Clause 48. The method of any one of clauses 46 to 47, wherein the first aperiodic trigger state indicates a report configuration associated with channel state information (CSI) reporting.

Clause 49. The method of any one of clauses 46 to 48, further comprising sending downlink control information (DCI) configured to schedule a physical uplink shared channel (PUSCH) transmission.

Clause 50. The method of any one of clauses 46 to 49, wherein the DCI comprises a CSI request field comprising a first value indicating the first aperiodic trigger state.

Clause 51. The method of any one of clauses 46 to 50, wherein the DCI comprises a first field comprising a second value indicating that the wireless device is to send a wireless device-initiated CSI report.

Clause 52. The method of any one of clauses 46 to 51, further comprising receiving the wireless device-initiated CSI report via a PUSCH.

Clause 53. The method of any one of clauses 46 to 52, further comprising receiving wireless capability information message, wherein the wireless device capability information message indicates whether the wireless device has a capability to detect a DCI format that indicates an uplink resource for the wireless device-initiated CSI report.

Clause 54. The method of any one of clauses 46 to 53, wherein the DCI comprises a DCI format 0_1 or a DCI format 0_2.

Clause 55. The method of any one of clauses 46 to 54, further comprising receiving, via an uplink of an active uplink bandwidth part of a cell, a CSI report.

Clause 56. A computing device comprising: one or more processors; and memory storing instructions that, when executed by the one or more processors, cause the computing device to perform the method of any one of clauses 46 to 55.

Clause 57. A system comprising: a base station configured to perform the method of any one of clauses 46 to 55; and a wireless device configured to send the wireless device-initiated CSI report.

Clause 58. A computer-readable medium storing instructions that, when executed, cause performance of the method of any one of clauses 46 to 55.

Clause 59. A method comprising receiving, by a wireless device, one or more radio resource control (RRC) messages comprising one or more configuration parameters.

Clause 60. The method of clause 59, wherein the one or more configuration parameters indicate a list of aperiodic trigger states that comprise an aperiodic trigger state.

Clause 61. The method of any one of clauses 59 to 60, wherein the aperiodic trigger state indicates a report configuration associated with a channel state information (CSI) reporting triggered by the wireless device.

Clause 62. The method of any one of clauses 59 to 61, further comprising receiving a downlink control information (DCI) scheduling a physical uplink shared channel (PUSCH) transmission.

Clause 63. The method of any one of clauses 59 to 62, wherein the DCI comprises a CSI request field with a first value indicating the aperiodic trigger state.

Clause 64. The method of any one of clauses 59 to 63, wherein the DCI comprises a first field with a second value indicating transmission of the wireless device-initiated CSI report.

Clause 65. The method of any one of clauses 59 to 64, further transmitting, in the PUSCH transmission, the CSI report triggered by the wireless device based on: the value of the CSI request field indicating the aperiodic trigger state associated with the CSI reporting triggered by the wireless device and the first field being set to the second value.

Clause 66. The method of any one of clauses 59 to 65, further comprising transmitting, for a second CSI reporting triggered by the wireless device, a physical uplink control channel (PUCCH) transmission requesting an uplink resource to transmit a second CSI report.

Clause 67. The method of any one of clauses 59 to 66, further comprising receiving a second DCI scheduling a second PUSCH transmission.

Clause 68. The method of any one of clauses 59 to 67, wherein the second DCI comprises a CSI request field with a non-zero value.

Clause 69. The method of any one of clauses 59 to 68, further comprising transmitting, in the second PUSCH transmission, the second CSI report based on receiving the second DCI after the PUCCH transmission.

Clause 70. A method comprising transmitting, by a wireless device to a base station, a user equipment (UE) capability information message.

Clause 71. The method of any one of clauses 59 to 70, further comprising receiving a downlink control information (DCI) comprising an uplink shared channel (UL-SCH) indicator field with a first value and a channel state information (CSI) request field with a second value.

Clause 72. The method of any one of clauses 59 to 71, wherein both the first value and the second value are zero based on the UE capability message indicating capability of detecting a DCI format indicating an uplink resource to transmit a CSI report triggered by the wireless device.

Clause 73. The method of any one of clauses 59 to 72, wherein at least one of the first value and the second value is non-zero based on the UE capability message not indicating capability of detecting a DCI format indicating an uplink resource to transmit a CSI report triggered by the wireless device.

Clause 74. The method of any one of clauses 59 to 73, wherein the transmitting the UE capability information message is in response to receiving a UE capability enquiry message from the base station.

Clause 75. The method of any one of clauses 59 to 74, wherein the DCI is a DCI format 0_1 or a DCI format 0_2.

Clause 76. The method of any one of clauses 59 to 75, wherein a cyclic redundancy check (CRC) of the DCI format 0_1 or the DCI format 0_2 is not scrambled by a semi-persistent (SP)-CSI- Radio Network Temporary Identifier (SP-CSI-RNTI) used to activate or deactivate semi-persistent CSI reporting on PUSCH.

Clause 77. The method of any one of clauses 59 to 76, wherein the UE capability message does not indicate capability of triggering sounding reference signal (SRS) by a DCI.

Clause 78. The method of any one of clauses 59 to 77, further comprising transmitting, via an uplink resource of an active uplink BWP of a cell, a CSI report triggered by the wireless device.

Clause 79. The method of any one of clauses 59 to 78, wherein the DCI schedules transmission of the CSI report triggered by the wireless device based on the both the first value and the second value being set to zero.

Clause 80. The method of any one of clauses 59 to 79, wherein the DCI schedules transmission of the CSI report triggered by the wireless device further based on the receiving the DCI after a PUCCH transmission that requests the uplink resource to transmit the CSI report triggered by the wireless device.

Clause 81. The method of any one of clauses 59 to 80, wherein the DCI comprises a UE-initiated beam report request field based on an RRC parameter enabling detection of a DCI format indicating an uplink resource to transmit UE-initiated CSI report being configured for active downlink or uplink BWP in the cell.

Clause 82. The method of any one of clauses 59 to 81, wherein a first value of the UE-initiated beam report request field indicates no transmission of the CSI report.

Clause 83. The method of any one of clauses 59 to 82, wherein a second value of the UE-initiated beam report request field indicates transmission of the CSI report.

Clause 84. The method of any one of clauses 59 to 83, wherein the DCI schedules transmission of the CSI report triggered by the wireless device based on the UE-initiated beam report request field being set to the second value.

Clause 85. The method of any one of clauses 59 to 84, the DCI does not comprise a UE-initiated beam report request field based on an RRC parameter enabling detection of a DCI format indicating an uplink resource to transmit UE-initiated CSI report not being configured for active downlink or uplink BWP in the cell.

Clause 86. The method of any one of clauses 59 to 85, wherein the UE capability message indicates capability of triggering sounding reference signal (SRS) by a DCI.

Clause 87. The method of any one of clauses 59 to 86, wherein the DCI comprises an SRS request field with a third value.

Clause 88. The method of any one of clauses 59 to 87, wherein the first value, the second value and the third value are zero based on the UE capability message indicating capability of detecting a DCI format indicating an uplink resource to transmit a CSI report triggered by the wireless device.

Clause 89. The method of any one of clauses 59 to 88, wherein at least one of the first value, the second value and the third value is non-zero based on the UE capability message not indicating capability of detecting a DCI format indicating an uplink resource to transmit a CSI report triggered by the wireless device.

Clause 90. The method of any one of clauses 59 to 89, further comprising cancelling a CSI reporting triggered by the wireless device based on the DCI triggering an aperiodic CSI report.

Clause 91. The method of any one of clauses 59 to 90, wherein the UE capability information message comprises a parameter indicating support of CSI reporting triggered by the wireless device for a cross PUCCH group CSI reporting.

Clause 92. The method of any one of clauses 59 to 91, wherein the cross-PUCCH group comprises a primary PUCCH group and a secondary PUCCH group.

Clause 93. A computing device comprising: one or more processors; and memory storing instructions that, when executed by the one or more processors, cause the computing device to perform the method of any one of clauses 59 to 92.

Clause 94. A system comprising: a wireless device configured to perform the method of any one of clauses 59 to 92; and a base station configured to send the one or more radio resource control (RRC) messages comprising one or more configuration parameters.

Clause 95. A computer-readable medium storing instructions that, when executed, cause performance of the method of any one of clauses 59 to 92.

A wireless device may perform a method comprising one or more operations. For example, the wireless device may receive (e.g., from a base station that may send/transmit) one or more configuration parameters. The one or more configuration parameters may indicate a list of aperiodic trigger states that comprise a first aperiodic trigger state. The first aperiodic trigger state may indicate a report configuration associated with wireless device-initiated channel state information (CSI) reporting. The wireless device may receive downlink control information (DCI) that may be configured to schedule a physical uplink shared channel (PUSCH) transmission. The DCI may comprise a CSI request field comprising a first value indicating the first aperiodic trigger state. The DCI may comprise a first field comprising a second value indicating that the wireless device is to send a wireless device-initiated CSI report. The wireless device may send the wireless device-initiated CSI report via a PUSCH, for example, based on the first value of the CSI request field indicating the first aperiodic trigger state and/or the first field being set to the second value. The wireless device may send a wireless device capability information message. The wireless device capability information message may indicate whether the wireless device has a capability to detect a DCI format that indicates an uplink resource for the wireless device-initiated CSI report. The wireless device may send a request for an uplink resource for a second wireless device-initiated CSI report, for example, via a physical uplink control channel (PUCCH). The wireless device may receive second DCI configured to schedule a second PUSCH transmission. The second DCI may comprise a CSI request field comprising a non-zero value. The wireless device may send the second wireless device-initiated CSI report, for example, based on the second DCI. The wireless device may send a request for the DCI, for example, prior to receiving the DCI. The request for the DCI may indicate a request to send the wireless device-initiated CSI report. The DCI may comprise a DCI format 0_1 or a DCI format 0_2. The wireless device may send the wireless device-initiated CSI report, for example, via an uplink of an active uplink bandwidth part of a cell. The wireless device may cancel the wireless device-initiated CSI reporting, for example, based on the DCI triggering an aperiodic CSI report. The wireless device may send the wireless capability information message, for example, based on receiving a wireless device capability enquiry message from the base station. A cyclic redundancy check (CRC) of the DCI format 0_1 or the DCI format 0_2 may not be configured to be scrambled by a semi-persistent (SP)-CSI-radio network temporary identifier (SP-CSI-RNTI). The wireless device capability message may indicate capability of triggering sounding reference signal (SRS) by the DCI. The DCI may comprise an SRS request field that comprises a third value. The wireless device capability information message may comprise a parameter that may be configured to indicate support of the wireless device-initiated CSI reporting for a cross PUCCH group CSI reporting. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the DCI. A computer-readable medium may store instructions that, when executed, cause performance of the described method, additional operations, and/or include the additional elements.

A wireless device may perform a method comprising one or more operations. For example, the wireless device may receive (e.g., from a base station that may send/transmit) one or more configuration parameters. The one or more configuration parameters may indicate a list of aperiodic trigger states that comprise a first aperiodic trigger state. The first aperiodic trigger state may indicate a report configuration that may be associated with wireless device-initiated channel state information (CSI) reporting. The wireless device may send a wireless device capability information message. The wireless device may receive downlink control information (DCI). The DCI may comprise a channel state information (CSI) request field comprising a first value. The DCI may comprise a first field comprising a second value. Both the first value and the second value may be zero, for example, if the wireless device capability information message indicates a capability to detect a DCI format indicating an uplink resource for a wireless device-initiated CSI report. At least one of the first value and the second value may be non-zero, for example, if the wireless device capability information message does not indicate a capability to detect a DCI format indicating an uplink resource for a wireless device-initiated CSI report. The wireless device may send the wireless-initiated CSI report via a physical uplink shared channel (PUSCH), for example, based on the first value of the CSI request field indicating the aperiodic trigger state and/or the first field being set to the second value. The wireless device may send the wireless device capability information message, for example, based on receiving a wireless device capability enquiry message from the base station. The wireless device may send the wireless device-initiated CSI report, for example, via an uplink of an active uplink bandwidth part of a cell. The DCI may be configured to schedule transmission of the wireless device-initiated CSI report based on the first value and the second value being set to zero. The wireless device may send a request for the DCI, for example, prior to receiving the DCI. The request for the DCI may indicate a request to send the wireless device-initiated CSI report. The DCI may comprise a wireless-initiated beam report request field, for example, based on a radio resource control (RRC) parameter enabling detection of the DCI format indicating the uplink resource. The wireless device-initiated beam report request field may comprise one of a first value or a second value. The first value may indicate no transmission of a wireless device-initiated CSI report. The second value may indicate transmission of a wireless device-initiated CSI report. The DCI may comprise a sounding reference signal (SRS) request field. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the DCI. A computer-readable medium may store instructions that, when executed, cause performance of the described method, additional operations, and/or include the additional elements.

A wireless device may perform a method comprising one or more operations. For example, the base station may send (e.g., to a wireless device that may receive) one or more configuration parameters. The one or more configuration parameters may indicate a list of aperiodic trigger states that comprise a first aperiodic trigger state. The first aperiodic trigger state may indicate a report configuration associated with channel state information (CSI) reporting. The base station may send downlink control information (DCI) configured to schedule a physical uplink shared channel (PUSCH) transmission. The DCI may comprise a CSI request field comprising a first value indicating the first aperiodic trigger state. The DCI may comprise a first field comprising a second value indicating that the wireless device is to send a wireless device-initiated CSI report. The base station may receive the wireless device-initiated CSI report via a PUSCH. The base station may receive wireless capability information message. The wireless device capability information message may indicate whether the wireless device has a capability to detect a DCI format that indicates an uplink resource for the wireless device-initiated CSI report. The DCI may comprise a DCI format 0_1 or a DCI format 0_2. The base station may receive a CSI report, for example, via an uplink of an active uplink bandwidth part of a cell. The base station may comprise one or more processors; and memory storing instructions that, when executed by the one or more processors, cause the wireless device to perform the described method, additional operations, and/or include the additional elements. A system may comprise a base station configured to perform the described method, additional operations, and/or include the additional elements; and a wireless device configured to send the wireless device-initiated CSI report. A computer-readable medium may store instructions that, when executed, cause performance of the described method, additional operations, and/or include the additional elements.

A wireless device may perform a method comprising one or more operations. For example, the wireless device may receive one or more radio resource control (RRC) messages comprising one or more configuration parameters. The one or more configuration parameters may indicate a list of aperiodic trigger states that comprise an aperiodic trigger state. The aperiodic trigger state may indicate a report configuration associated with a channel state information (CSI) reporting triggered by the wireless device. The wireless device may receive a downlink control information (DCI) scheduling a physical uplink shared channel (PUSCH) transmission. The DCI may comprise a CSI request field with a first value indicating the aperiodic trigger state. The DCI may comprise a first field with a second value indicating transmission of a CSI report triggered by the wireless device. The wireless device may send (e.g., transmit), via a PUSCH, the CSI report triggered by the wireless device, for example, based on the value of the CSI request field indicating the aperiodic trigger state associated with the CSI reporting triggered by the wireless device and the first field being set to the second value. The wireless device may send (e.g., transmit) a second CSI reporting triggered by the wireless device, via a physical uplink control channel (PUCCH), for requesting an uplink resource to send (e.g., transmit) a second CSI report. The wireless device may receive a second DCI scheduling a second PUSCH transmission. The second DCI may comprise a CSI request field with a non-zero value. The wireless device may send (e.g., transmit), via the second PUSCH, the second CSI report, for example, based on receiving the second DCI after the PUCCH transmission. For example, a wireless device may send (e.g., transmit) a user equipment (UE) capability information message. The wireless device may receive a downlink control information (DCI) comprising an uplink shared channel (UL-SCH) indicator field with a first value and a channel state information (CSI) request field with a second value. Both the first value and the second value may be zero, for example, based on the UE capability message indicating capability of detecting a DCI format indicating an uplink resource to transmit a CSI report triggered by the wireless device. At least one of the first value and the second value may be non-zero, for example, based on the UE capability message not indicating capability of detecting a DCI format indicating an uplink resource to transmit a CSI report triggered by the wireless device. The wireless device may send (e.g., transmit) the UE capability information message, for example, based on receiving a UE capability enquiry message from the wireless device. The DCI may be a DCI format 0_1 or a DCI format 0_2. A cyclic redundancy check (CRC) of the DCI format 0_1 or the DCI format 0_2 may not be scrambled by a semi-persistent (SP)-CSI- Radio Network Temporary Identifier (SP-CSI-RNTI) used to activate or deactivate semi-persistent CSI reporting on PUSCH. The UE capability message may not indicate capability of triggering sounding reference signal (SRS) by a DCI. The wireless device may send (e.g., transmit) a CSI report triggered by the wireless device, for example, via an uplink resource of an active uplink BWP of a cell. The DCI may schedule transmission of the CSI report triggered by the wireless device, for example, based on the both the first value and the second value being set to zero. The DCI may schedule transmission of the CSI report triggered by the wireless device, for example, based on the receiving the DCI after a PUCCH transmission that requests the uplink resource to send (e.g., transmit) the CSI report triggered by the wireless device. The DCI may comprise a UE-initiated beam report request field, for example, based on an RRC parameter enabling detection of a DCI format indicating an uplink resource to send (e.g., transmit) UE-initiated CSI report being configured for active downlink or uplink BWP in the cell. A first value of the UE-initiated beam report request field may indicate no transmission of the CSI report. A second value of the UE-initiated beam report request field may indicate transmission of the CSI report. The DCI may schedule transmission of the CSI report triggered by the wireless device, for example, based on the UE-initiated beam report request field being set to the second value. The DCI may not comprise a UE-initiated beam report request field, for example, based on an RRC parameter enabling detection of a DCI format indicating an uplink resource to transmit UE-initiated CSI report not being configured for active downlink or uplink BWP in the cell. The UE capability message may indicate capability of triggering sounding reference signal (SRS) by a DCI. The DCI may comprise an SRS request field with a third value. The first value, the second value and/or the third value may be zero, for example, based on the UE capability message indicating capability of detecting a DCI format indicating an uplink resource to transmit a CSI report triggered by the wireless device. At least one of the first value, the second value and/or the third value may be non-zero, for example, based on the UE capability message not indicating capability of detecting a DCI format indicating an uplink resource to transmit a CSI report triggered by the wireless device. The wireless device may cancel a CSI reporting triggered by the wireless device, for example, based on the DCI triggering an aperiodic CSI report. The UE capability information message may comprise a parameter indicating support of CSI reporting triggered by the wireless device for a cross PUCCH group CSI reporting. The cross-PUCCH group comprises a primary PUCCH group and a secondary PUCCH group. The wireless device may comprise one or more processors; and memory storing instructions that, when executed by the one or more processors, cause the wireless device to perform the described method, additional operations, and/or include the additional elements. A system may comprise a wireless device configured to perform the described method, additional operations, and/or include the additional elements; and a base station configured to send the one or more radio resource control (RRC) messages comprising one or more configuration parameters. A computer-readable medium may store instructions that, when executed, cause performance of the described method, additional operations, and/or include the additional elements.

One or more of the operations described herein may be conditional. For example, one or more operations may be performed if certain criteria are met, such as in a wireless device, a base station, a radio environment, a network, a combination of the above, and/or the like. Example criteria may be based on one or more conditions such as wireless device and/or network node configurations, traffic load, initial system set up, packet sizes, traffic characteristics, a combination of the above, and/or the like. If the one or more criteria are met, various examples may be used. It may be possible to implement any portion of the examples described herein in any order and based on any condition.

A base station may communicate with one or more of wireless devices. Wireless devices and/or base stations may support multiple technologies, and/or multiple releases of the same technology. Wireless devices may have some specific capability(ies) depending on wireless device category and/or capability(ies). A base station may comprise multiple sectors, cells, and/or portions of transmission entities. A base station communicating with a plurality of wireless devices may refer to a base station communicating with a subset of the total wireless devices in a coverage area. Wireless devices referred to herein may correspond to a plurality of wireless devices compatible with a given LTE, 5G, 6G, or other 3GPP or non-3GPP release with a given capability and in a given sector of a base station. A plurality of wireless devices may refer to a selected plurality of wireless devices, a subset of total wireless devices in a coverage area, and/or any group of wireless devices. Such devices may operate, function, and/or perform based on or according to drawings and/or descriptions herein, and/or the like. There may be a plurality of base stations and/or a plurality of wireless devices in a coverage area that may not comply with the disclosed methods, for example, because those wireless devices and/or base stations may perform based on older releases of LTE, 5G, 6G, or other 3GPP or non-3GPP technology.

One or more parameters, fields, and/or Information elements (IEs), may comprise one or more information objects, values, and/or any other information. An information object may comprise one or more other objects. At least some (or all) parameters, fields, IEs, and/or the like may be used and can be interchangeable depending on the context. If a meaning or definition is given, such meaning or definition controls.

One or more elements in examples described herein may be implemented as modules. A module may be an element that performs a defined function and/or that has a defined interface to other elements. The modules may be implemented in hardware, software in combination with hardware, firmware, wetware (e.g., hardware with a biological element) or a combination thereof, all of which may be behaviorally equivalent. For example, modules may be implemented as a software routine written in a computer language configured to be executed by a hardware machine (such as C, C++, Fortran, Java, Basic, Matlab or the like) or a modeling/simulation program such as Simulink, Stateflow, GNU Octave, or LabVIEWMathScript. Additionally or alternatively, it may be possible to implement modules using physical hardware that incorporates discrete or programmable analog, digital and/or quantum hardware. Examples of programmable hardware may comprise: computers, microcontrollers, microprocessors, application-specific integrated circuits (ASICs); field programmable gate arrays (FPGAs), and/or complex programmable logic devices (CPLDs). Computers, microcontrollers and/or microprocessors may be programmed using languages such as assembly, C, C++ or the like. FPGAs, ASICs and CPLDs are often programmed using hardware description languages (HDL), such as VHSIC hardware description language (VHDL) or Verilog, which may configure connections between internal hardware modules with lesser functionality on a programmable device. The above-mentioned technologies may be used in combination to achieve the result of a functional module.

One or more features described herein may be implemented in a computer-usable data and/or computer-executable instructions, such as in one or more program modules, executed by one or more computers or other devices. Generally, program modules include routines, programs, objects, components, data structures, etc. that perform particular tasks or implement particular abstract data types when executed by a processor in a computer or other data processing device. The computer executable instructions may be stored on one or more computer readable media such as a hard disk, optical disk, removable storage media, solid state memory, RAM, etc. The functionality of the program modules may be combined or distributed as desired. The functionality may be implemented in whole or in part in firmware or hardware equivalents such as integrated circuits, field programmable gate arrays (FPGA), and the like. Particular data structures may be used to more effectively implement one or more features described herein, and such data structures are contemplated within the scope of computer executable instructions and computer-usable data described herein.

A non-transitory tangible computer readable media may comprise instructions executable by one or more processors configured to cause operations of multi-carrier communications described herein. An article of manufacture may comprise a non-transitory tangible computer readable machine-accessible medium having instructions encoded thereon for enabling programmable hardware to cause a device (e.g., a wireless device, wireless communicator, a wireless device, a base station, and the like) to allow operation of multi-carrier communications described herein. The device, or one or more devices such as in a system, may include one or more processors, memory, interfaces, and/or the like. Other examples may comprise communication networks comprising devices such as base stations, wireless devices or user equipment (wireless device), servers, switches, antennas, and/or the like. A network may comprise any wireless technology, including but not limited to, cellular, wireless, WiFi, 4G, 5G, 6G, any generation of 3GPP or other cellular standard or recommendation, any non-3GPP network, wireless local area networks, wireless personal area networks, wireless ad hoc networks, wireless metropolitan area networks, wireless wide area networks, global area networks, satellite networks, space networks, and any other network using wireless communications. Any device (e.g., a wireless device, a base station, or any other device) or combination of devices may be used to perform any combination of one or more of steps described herein, including, for example, any complementary step or steps of one or more of the above steps.

Although examples are described above, features and/or steps of those examples may be combined, divided, omitted, rearranged, revised, and/or augmented in any desired manner. Various alterations, modifications, and improvements will readily occur to those skilled in the art. Such alterations, modifications, and improvements are intended to be part of this description, though not expressly stated herein, and are intended to be within the spirit and scope of the descriptions herein. Accordingly, the foregoing description is by way of example only, and is not limiting.

**Claims**

1. A method comprising:

    receiving, by a wireless device, one or more configuration parameters, wherein:

        the one or more configuration parameters indicate a list of aperiodic trigger states that comprise a first aperiodic trigger state; and
        the first aperiodic trigger state indicates a report configuration associated with wireless device-initiated channel state information (CSI) reporting;

    receiving downlink control information (DCI) configured to schedule a physical uplink shared channel (PUSCH) transmission, wherein the DCI comprises:

        a CSI request field comprising a first value indicating the first aperiodic trigger state; and
        a first field comprising a second value indicating that the wireless device is to send a wireless device-initiated CSI report; and

    sending the wireless device-initiated CSI report via a PUSCH and based on:

        the first value of the CSI request field indicating the first aperiodic trigger state; and
        the first field being set to the second value.

2. The method of claim 1, further comprising sending, by the wireless device and to a base station, a wireless device capability information message, wherein the wireless device capability information message indicates whether the wireless device has a capability to detect a DCI format that indicates an uplink resource for the wireless device-initiated CSI report.

3. The method of any one of claims 1 to 2, further comprising:

    sending, via a physical uplink control channel (PUCCH), a request for an uplink resource for a second wireless device-initiated CSI report;
    receiving second DCI configured to schedule a second PUSCH transmission, wherein the second DCI comprises a CSI request field comprising a non-zero value; and
sending, based on the second DCI, the second wireless device-initiated CSI report.

4. The method of any one of claims 1 to 3, further comprising:
sending, by the wireless device and prior to receiving the DCI, a request for the DCI, wherein the request for the DCI indicates a request to send the wireless device-initiated CSI report.

5. The method of any one of claims 1 to 4, wherein the DCI comprises a DCI format 0_1 or a DCI format 0_2.

6. The method of any one of claims 1 to 5, further comprising sending, via an uplink of an active uplink bandwidth part of a cell, the wireless device-initiated CSI report.

7. The method of any one of claims 1 to 6, further comprising cancelling the wireless device-initiated CSI reporting, wherein the cancelling is based on the DCI triggering an aperiodic CSI report.

8. The method of any one of claims 1 to 7, wherein the sending the wireless capability information message is based on receiving a wireless device capability enquiry message from the base station.

9. The method of any one of claims 1 to 8, wherein a cyclic redundancy check (CRC) of the DCI format 0_1 or the DCI format 0_2 is not configured to be scrambled by a semi-persistent (SP)-CSI-radio network temporary identifier (SP-CSI-RNTI).

10. The method of any one of claims 1 to 9, wherein the wireless device capability message indicates capability of triggering sounding reference signal (SRS) by the DCI.

11. The method of any one of claims 1 to 10, wherein the DCI comprises an SRS request field that comprises a third value.

12. The method of any one of claims 1 to 11, wherein the wireless device capability information message comprises a parameter configured to indicate support of the wireless device-initiated CSI reporting for a cross PUCCH group CSI reporting.

13. A computing device comprising:

one or more processors; and
memory storing instructions that, when executed by the one or more processors, cause the computing device to perform the method of any one of claims 1 to 12.

14. A system comprising:

a wireless device configured to perform the method of any one of claims 1 to 12; and
a base station configured to send the one or more configuration parameters.

15. A computer-readable medium storing instructions that, when executed, cause performance of the method of any one of claims 1 to 12.

FIG. 1A

100

Wireless Device 106 — RAN 104 — CN 102 — DN(s)

FIG. 1B

150

Wireless Device 156A — Uu — gNB 160A
Wireless Device 156B — Uu — gNB 160B
gNB 160A — Xn — gNB 160B
ng-eNB 162A — Xn — ng-eNB 162B
Xn
NG
AMF 158A | UPF 158B — AMF/UPF 158 — DN(s)
5G-CN 152
NG-RAN 154
Wireless Devices 156

FIG. 2A

FIG. 2B

**IP Packets**

| | |
|---|---|
| | QoS Flows |
| **SDAP 215/225** | QoS Flow Handling |
| | Radio Bearers |
| **PDCP 214/224** | Header Comp., Ciphering / Header Comp., Ciphering |
| | Reordering, Retransmission / Reordering, Retransmission |
| | RLC Channels |
| **RLC 213/223** | Segmentation, ARQ / Segmentation, ARQ |
| | Logical Channels |
| **MAC 212/222** | Multiplexing |
| | HARQ |
| | Transport Channel |
| **PHY 211/221** | Coding, Resource Mapping |

**FIG. 3**

FIG. 4A

FIG. 4B

**Downlink**

**FIG. 5A**

**Uplink**

**FIG. 5B**

EP 4 648 344 A1

FIG. 6

1 Frame (10 ms)

| 0 | 1 | 2 | 3 | 4 | 5 | 6 | 7 | 8 | 9 |

1 Subframe (1 ms)

Subcarrier spacing = 15 kHz
1 slot per subframe

1 Slot (1 ms, 14 OFDM Symbols)

Subcarrier spacing = 30 kHz
2 slots per subframe

1 Slot (0.5 ms, 14 OFDM Symbols)

Subcarrier spacing = 60 kHz
4 slots per subframe

1 Slot (0.25 ms, 14 OFDM Symbols)

Subcarrier spacing = 120 kHz
8 slots per subframe

1 Slot (0.0125 ms, 14 OFDM Symbols)

FIG. 7

EP 4 648 344 A1

FIG. 8

FIG. 9

EP 4 648 344 A1

**FIG. 10A**

**FIG. 10B**

**FIG. 11A**

**FIG. 11B**

Base Station 1210

Tx beam

Wireless Device 1205

Rx beam

P1

P2

P3

FIG. 12A

Base Station 1210

Rx beam

Wireless Device 1205

Tx beam

U1

U2

U3

FIG. 12B

Base Station 1302

Wireless Device 1301

Configuration 1330

•••

Preamble 1341

Msg A 1331

1342 Transport block

Msg B 1332

**FIG. 13C**

Base Station 1302

Wireless Device 1301

Configuration 1320

•••

Msg 1 1321

Msg 2 1322

**FIG. 13B**

Base Station 1302

Wireless Device 1301

Configuration 1310

•••

Msg 1 1311

Msg 2 1312

Msg 3 1313

Msg 4 1314

**FIG. 13A**

CORESET
1404

CORESET
1403

CORESET
1402

CORESET
1401

Bandwidth

One slot

**FIG. 14A**

CORESET → CCE-to-REG mapping → Search Space

PDCCH candidate
PDCCH candidate
PDCCH candidate

**FIG. 14B**

Air Interface
1506

Peripheral(s)
1526

TX Processing
System
1520

Memory
1524

Processing
System
1518

GPS Chipset
1527

RX Processing
System
1522

TX Processing
System
1510

Processing
System
1508

RX Processing
System
1512

Peripheral(s)
1516

Memory
1514

GPS Chipset
1517

Wireless Device
1502

Base Station
1504

EP 4 648 344 A1

80

FIG. 15A

FIG. 15B

**FIG. 16A**

**FIG. 16B**

**FIG. 16D**

**FIG. 16C**

EP 4 648 344 A1

**FIG. 17A**

Wireless Device 1700 — Base Station 1720

RRC message(s) 1702 (list of TCI states of CORESET(s))

MAC CE 1704 (indicating/activating TCI state(s))

PDCCH 1706 via TCI state of CORESET

DCI 1708 scheduling PDSCH 1710 ; indicating TCI state of PDSCH

PDSCH 1710 via TCI state of CORESET

Offset 1712

PDSCH 1710 via TCI state of DCI 1708

**FIG. 17B**

Wireless Device 1740 — Base Station 1760

RRC messages(s) 1714 (list of joint-DL/UL or lists of separate TCI states for UL+DL)

MAC CE 1716 (activating joint/separate TCI state(s))

DCI 1718 indicates TCI state(s) to apply (e.g., among activated TCI states)

DCI 1722 scheduling UL/DL

DL 1724 (PDCCH/PDSCH) via TCI state

UL 1726 (PUCCH/PUSCH) via TCI state

EP 4 648 344 A1

| Wireless Device 1800 | | Base Station 1810 |
|---|---|---|

RRC messages 1802
(e.g., parameters for periodic CSI)

RS 1804 for CSI
(e.g., CSI-RS, SSB)

CSI report 1906
for RS 1904

RS 1804 for CSI

CSI report 1806
for RS 1804

RS 1804 for CSI

CSI report 1806
for RS 1804

**FIG. 18A**

| Wireless Device 1820 | | Base Station 1830 |
|---|---|---|

RRC messages 1808
(e.g., parameters for semi-persistent CSI)

command 1812
activating CSI reporting
(e.g., MAC CE or DCI)

RS 1814 for CSI

CSI report 1816
for RS 1814

RS 1814 for CSI

CSI report 1816
for RS 1814

command 1818
deactivating CSI reporting
(e.g., MAC CE or DCI)

**FIG. 18B**

| Wireless Device 1840 | | Base Station 1850 |
|---|---|---|

RRC messages 1822
(e.g., parameters for aperiodic CSI)

command 1824
requesting CSI report(s) 1826
(e.g., MAC CE or DCI)

RS 1828 for CSI

CSI report(s) 1826
for RS 1828

**FIG. 18C**

**FIG. 19A**

Wireless Device 1900 — Base Station 1910

RRC 1902 (e.g., config. paras.)

RS 1904 (e.g., RS of TCI State)

RS 1906 (e.g., candidate RS)

Detect event 1908 for CSI (e.g., RSRP comparison)

PUCCH 1912 (e.g., request, SR, UCI)

DCI 1914 (e.g., UL resources 1916)

UL resource 1916

CSI report 1918 (e.g., UCI on PUSCH)

**FIG. 19B**

Wireless Device 1920 — Base Station 1930

RRC 1922 (e.g., UL resource 2024)

1924

RS 1926 (e.g., RS of TCI State)

RS 1928 (e.g., candidate RS)

1924

Event 1932 for CSI

PUCCH 1934 (e.g., notification, SR, UCI)

CSI report 1936 (e.g., UCI on PUSCH)

1924

**FIG. 19C**

Wireless Device 1940 — Base Station 1950

RRC 1938 (e.g., UL resource 1942)

1942

RS 1944 (e.g., RS of TCI State)

RS 1946 (e.g., candidate RS)

Event 1948 for CSI

PUCCH 1952 (e.g., notification, request, SR, UCI)

DCI 1954 (e.g., UL resources 1956)

1942

UL resource 1956

CSI report 1958 (e.g., UCI on PUSCH)

**FIG. 20**

EP 4 648 344 A1

**2100**

```
┌─────────────────────────────┐
│   Receive a wireless device  │
│      capability message      │
│            2110              │
└─────────────────────────────┘
              │
              ▼
┌─────────────────────────────┐
│  Determine to send DCI       │
│  comprising an UL-SCH field  │
│    and a CSI request field   │
│            2120              │
└─────────────────────────────┘
              │
              ▼
```

Does the wireless device capability indicate support/capability of detecting a DCI format indicating an uplink resource (e.g., PUSCH resource) for sending wireless device-initiated CSI report?
2130

YES

NO

Do not set both the UL-SCH field and CSI request field to zero
2140

Set both the UL-SCH field and CSI request field to zero
2135

Send the DCI
2150

**FIG. 21A**

2101

```
┌─────────────────────────────────────────────────┐
│   Send a wireless device capability message      │
│   indicating whether the wireless device         │
│   supports/is capable of detecting a DCI          │
│   formatting indicating an uplink resource        │
│   (e.g., PUSCH resource) for sending wireless     │
│   device-initiated CSI report                     │
│                    2115                           │
└─────────────────────────────────────────────────┘
```

Does the wireless device capability indicate support/capability of detecting a DCI format indicating an uplink resource (e.g., PUSCH resource) for sending wireless device-initiated CSI report?
2125

YES

NO

Receive DCI in which an UL-SCH field and a CSI request field are not both set to zero
2155

Receive DCI in which UL-SCH field and a CSI request field are both set to zero
2145

**FIG. 21B**

2200

Receive a wireless device
capability message
2210

Does the wireless device capability
indicate support/capability of detecting
a DCI format indicating an uplink
resource (e.g., PUSCH resource) to
send wireless device-initiated CSI
report?
2220

YES

NO

Do not send DCI with an UL-SCH
field and a CSI request field both
set to zero
2230

Send DCI with an UL-SCH field
and a CSI request field both set to
zero
2240

FIG. 22

Europäisches Patentamt
European Patent Office
Office européen des brevets

# EUROPEAN SEARCH REPORT

**Application Number**

EP 25 17 5463

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/313831 A1 (KIM TAEHYOUNG [KR] ET AL) 1 October 2020 (2020-10-01) <br> * paragraph [0117] - paragraph [0121] * <br> * paragraph [0134] - paragraph [0139] * <br> * table 18 * | 1-15 | INV. <br> H04L5/00 <br> H04W72/00 |
| X | EP 3 876 587 A1 (NEC CORP [JP]) 8 September 2021 (2021-09-08) <br> * paragraph [0067] * <br> * paragraph [0072] * | 1-15 | |
| X | WO 2021/149837 A1 (SHARP KK [JP]) 29 July 2021 (2021-07-29) <br> * paragraph [0131] - paragraph [0132] * | 1-15 | |
| X | ERICSSON: "Channel access mechanisms", 3GPP DRAFT; R1-2104463, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE <br> , <br> vol. RAN WG1, no. Online; 20210519 - 20210527 <br> 11 May 2021 (2021-05-11), XP052006206, <br> Retrieved from the Internet: <br> URL:https://ftp.3gpp.org/tsg_ran/WG1_RL1/TSGR1_105-e/Docs/R1-2104463.zip R1-2104463 Channel Access Mechanisms.docx <br> [retrieved on 2021-05-11] <br> * Sect. 3.2.2. * | 1-15 | **TECHNICAL FIELDS SEARCHED (IPC)** <br> H04L <br> H04W |

The present search report has been drawn up for all claims

| Place of search | Date of completion of the search | Examiner |
|---|---|---|
| The Hague | 12 September 2025 | Colzi, Enrico |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 25 17 5463

This annex lists the patent family members relating to the patent documents cited in the above-mentioned European search report.
The members are as contained in the European Patent Office EDP file on
The European Patent Office is in no way liable for these particulars which are merely given for the purpose of information.

12-09-2025

| Patent document cited in search report | | Publication date | Patent family member(s) | | Publication date |
|---|---|---|---|---|---|
| US 2020313831 | A1 | 01-10-2020 | KR | 20200114871 A | 07-10-2020 |
| | | | US | 2020313831 A1 | 01-10-2020 |
| | | | US | 2023077471 A1 | 16-03-2023 |
| EP 3876587 | A1 | 08-09-2021 | EP | 3876587 A1 | 08-09-2021 |
| | | | JP | 7143898 B2 | 29-09-2022 |
| | | | JP | WO2020090573 A1 | 24-09-2021 |
| | | | US | 2021385810 A1 | 09-12-2021 |
| | | | WO | 2020090573 A1 | 07-05-2020 |
| WO 2021149837 | A1 | 29-07-2021 | US | 2023023825 A1 | 26-01-2023 |
| | | | WO | 2021149837 A1 | 29-07-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63644808